# EUROPEAN PATENT SPECIFICATION

(11) **EP 4 470 058 B1**
(45) Date of publication and mention of the grant of the patent: **20.08.2025**
(21) Application number: 23706515.6
(22) Date of filing: 25.01.2023
(51) Int. Cl.: H01M 10/0567, H01M 10/0569, H01M 10/0525, H01M 10/42, H01M 10/0568

(54) **ELECTROLYTES FOR LITHIUM-ION BATTERY CELLS WITH NITRILE ADDITIVES**
ELEKTROLYTEN FÜR LITHIUM-IONEN-BATTERIEZELLEN MIT NITRIL-ADDITIVEN
ÉLECTROLYTES POUR CELLULES DE BATTERIES LITHIUM-ION AVEC DES ADDITIFS NITRILES

(30) Priority: 25.01.2022 US 202263302783 P
(43) Date of publication of application: 04.12.2024
(73) Proprietor: Sila Nanotechnologies Inc., Alameda, California 94501 (US)
(72) Inventor: TURCHENIUK, Kostiantyn, Alameda, California 94501 (US); IABLOKOV, Viacheslav, Alameda, California 94501 (US); PEGIS, Michael, Lee, Alameda, California 94501 (US); GENT, William, Elliott, Alameda, California 94501 (US); POURAGHAJANSARHAMAMI, Fezzeh, Alameda, California 94501 (US); YUSHIN, Gleb, Alameda, California 94501 (US); HIDE, Fumitomo, Alameda, California 94501 (US); KLIPKOV, Anton, Alameda, California 94501 (US); AHUNOVYCH, Volodymyr, Alameda, California 94501 (US)
(74) Representative: ip21 Ltd
(86) International application number: PCT/US2023/061222
(87) International publication number: WO 2023/147332

(56) References cited:
- EP-A1- 3 739 673
- WO-A1-2018/088743
- WO-A1-2021/166663
- CN-B- 105 633 463
- DE-T5- 112021 001 177
- US-A1- 2012 196 191
- US-A1- 2014 017 526
- US-A1- 2015 325 882
- US-A1- 2021 043 977

## Description

### BACKGROUND

### Field

Aspects of the present disclosure relate generally to energy storage devices, and more particularly to battery technology and the like.

### Background

Owing in part to their relatively high energy densities, relatively high specific energy, light weight, and potential for long lifetimes, advanced rechargeable batteries are desirable for a wide range of consumer electronics, electric vehicle, grid storage and other important applications.

However, despite the increasing commercial prevalence of batteries, further development of these batteries is needed, particularly for applications in low- or zero-emission, hybrid-electrical or fully electric vehicles, consumer electronics, wearable devices, energy-efficient cargo ships and locomotives, drones, aerospace applications, and power grids. In particular, further improvements are desired for various rechargeable batteries, such as rechargeable Li and Li-ion batteries, rechargeable Na and Na-ion batteries, and rechargeable K and K-ion batteries, to name a few.

A broad range of electrolyte compositions may be utilized in the construction of Li and Li-ion batteries and other metal and metal-ion batteries. However, for improved cell performance (e.g., low and stable resistance, high cycling stability, high-rate capability, good thermal stability, long calendar life, etc.), the optimal choice of electrolyte needs to be developed for specific types and specific sizes of active particles in both the anode and cathode, specific total battery cell capacities as well as the specific operational conditions (e.g., temperature, charge rate, discharge rate, voltage range, capacity utilization, etc.). In many cases, the choice of electrolyte components and their ratios is not trivial and can be counterintuitive.

In certain types of Li metal and Li-ion rechargeable batteries, charge storing anodes may comprise silicon (Si)-comprising anode particles with gravimetric capacities in the range from about 800 mAh/g to about 3000 mAh/g (per mass of Si-comprising anode particles in a Li-free state). A subset of such anodes includes anodes with the electrode layer exhibiting capacity in the range from about 400 mAh/g to about 2800 mAh/g (per mass of the electrode layer, not counting the mass of the current collector, in a Li-free state). Such a class of charge-storing anodes offers great potential for increasing gravimetric and volumetric energy of rechargeable batteries. Unfortunately, Li and Li-ion battery cells with such anodes and conventional electrolytes often require the use of such large amounts of conventional solid-electrolyte interphase (SEI)-building additives to maintain acceptable cycle stability that prevents their use at elevated or low temperatures or undesirably limits their calendar life or does not allow such cells to be charged to high voltages (e.g., above about 4.1-4.3 V). Performance of such battery cells may become particularly poor when the cells are charged to above about 4.3-4.4 V and even more so when the cells are charged to above about 4.5 V. Higher cell voltage, broader operational temperature window and longer cycle life, however, are advantageous for most applications. Such cells may suffer from excessive capacity degradation (e.g., above about 5 %), large volume expansion (e.g., above about 10 %) and significant gassing (e.g., above about 10% thickness change) when exposed to high temperatures (e.g., above about 50-90 °C) in a fully charged state (e.g., state-of-charge, SOC of about 90 - 100 %) for a prolonged time (e.g., about 12-168 hours). Passing such elevated temperature charging tests is often required for most applications. Performance of such cells may also become particularly poor when the anode capacity loading (areal capacity) becomes moderate (e.g., about 2-4 mAh/cm²) and even more so when the areal capacity becomes high (e.g., about 4-12 mAh/cm²). Higher capacity loading, however, is advantageous for increasing cell energy density and reducing cell manufacturing costs.

In certain types of rechargeable batteries, charge storing anode materials may be produced as high-capacity (nano)composite powders (e.g., at least partially comprised of active material nanomaterials or nanostructures), which exhibit moderately high volume changes (e.g., about 8-180 vol. %) during the first charge-discharge cycle and moderate volume changes (e.g., about 5-50 vol. %) during the subsequent charge-discharge cycles. A subset of such charge-storing anode particles may include anode particles with an average size (e.g., diameter or thickness) in the range of about 0.2 to about 40 microns (micrometers). Such a class of charge-storing particles offers great promises for scalable manufacturing and achieving high cell-level energy density and other performance characteristics. Unfortunately, such particles are relatively new and their use in cells using conventional electrolytes may result in relatively poor cell performance characteristics and limited cycle stability. Performance of such battery cells may become particularly poor when the cells are charged to above about 4.1-4.3 V, more so when the cells are charged to above about 4.3-4.4 V and even more so when the cells are charged to above about 4.5 V. Higher cell voltage, broader operational temperature window and longer cycle life, however, are advantageous for most applications. Such cells may suffer from excessive capacity degradation (e.g., above about 5 %), large volume expansion (e.g., above about 10 %) and significant gassing when exposed to high temperatures ("high-temperature outgassing") (e.g., about 50-90 °C or higher) in a fully charged state (e.g., state-of-charge, SOC, of about 90-100 %) for a prolonged time (e.g., about 12-168 hours). Passing such elevated temperature charging tests is often required for most applications. Cell performance may also become particularly poor when the high-capacity (nano)composite anode capacity loading (areal capacity) becomes moderate (e.g., about 2-4 mAh/cm²) and even more so when the areal capacity becomes high (e.g., about 4-12 mAh/cm²). Higher capacity loading, however, is advantageous for increasing cell energy density and reducing cell manufacturing costs. Similarly, cell performance may degrade when the porosity of such an anode (e.g., the volume occupied by the spacing between the (nano)composite active anode particles in the electrode and filled with electrolyte, exclusive of closed pores, if any, within the particles themselves that are inaccessible to electrolyte) becomes moderately small (e.g., about 25-35 vol. % after the first charge-discharge cycle) and more so when the porosity of the anode becomes small (e.g., about 5-25 vol. % after the first charge-discharge cycle) or when the amount of a binder and conductive additives in the electrode becomes moderately small (e.g., about 5-15 wt. %) and more so when the amount of the binder and conductive additives in the electrode becomes small (e.g., about 0.5-5 wt. %). Higher electrode density and lower binder and conductive additive content, however, are advantageous for increasing cell energy density and reducing cost. Lower binder content may also be advantageous for increasing cell rate performance.

Examples of materials that exhibit moderately high-volume changes (e.g., about 8-180 vol. %) during the first charge-discharge cycle and moderate volume changes (e.g., about 5-50 vol.%) during the subsequent charge-discharge cycles include (nano)composites comprising so-called *conversion-type* (which includes both so-called *chemical transformation* and so-called *"true conversion"* subclasses) and so-called *alloying-type* active electrode materials. In the case of metal-ion batteries (such as Li-ion batteries), examples of such *conversion*-type active electrode materials include, but are not limited to, metal fluorides (such as lithium fluoride, iron fluoride, cupper fluoride, bismuth fluoride, their mixtures and alloys, etc.), metal chlorides, metal iodides, metal bromides, metal chalcogenides (such as sulfides, including lithium sulfide and other metal sulfides), sulfur, selenium, metal oxides (including but not limited to lithium oxide and silicon oxide), metal nitrides, metal phosphides (including lithium phosphide), metal hydrides, and others. In the case of metal-ion batteries (such as Li-ion batteries), examples of such *alloying-type* electrode materials include, but are not limited to, silicon, germanium, antimony, aluminum, magnesium, zinc, gallium, arsenic, phosphorous, silver, cadmium, indium, tin, lead, bismuth, their alloys, and others. These materials typically offer higher gravimetric and volumetric capacity than so-called intercalation-type electrodes commonly used in commercial metal-ion (e.g., Li-ion) batteries. Alloying-type electrode materials are particularly advantageous for use in certain high-capacity anodes for Li-ion batteries. Silicon-based alloying-type anodes may be particularly attractive for such applications.

Documents WO 2021/166663 A1, WO 2018/088743 A1, US 2021/043977 A1, CN 105 633 463 B, US 2015/325882 A1, EP 3 739 673 A1, US 2014/017526 A1 and US 2012/196191 A1 all describe electrolyte solutions for lithium secondary batteries, comprising a lithium salt (preferably LiPF₆) dissolved in a solvent blend including at least one linear ester and at least one cyclic carbonate, like ethylene carbonate (EC), and an additive mixture comprising fluoroethylene carbonate (FEC), vinylene carbonate (VC) and a di- or tri-nitrile compound.

Accordingly, there remains a need for improved electrolytes, batteries, components, and other related materials and manufacturing processes.

### SUMMARY

Embodiments disclosed herein address the above stated needs by providing improved electrolytes, batteries, components, and other related materials and manufacturing processes. The present invention is defined by the subject-matter of the appended claims.

An aspect is directed to an electrolyte for a lithium-ion battery, comprising: a primary lithium salt; and an organic compound composition comprising (1) fluoroethylene carbonate (FEC), (2) vinylene carbonate (VC), (3) at least one ester (ES), and (4) a nitrile additive composition (NAC) comprising at least one nitrile compound; wherein a mole fraction of the NAC in the electrolyte is in a range of approximately 0.1 mol. % to approximately 2.0 mol. %; and wherein a mole fraction of the at least one ES in the electrolyte is at least approximately 35 mol. %.

According to the present invention, the at least one nitrile compound is represented by a formula 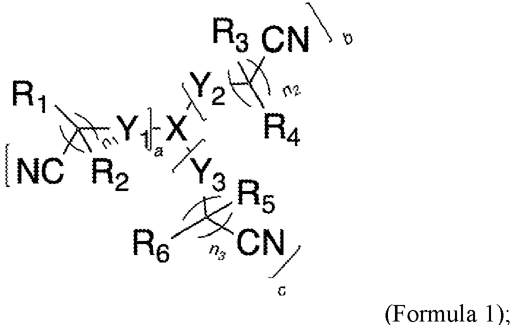
each of R₁ and R₂ represents hydrogen,
   (a) each of R₃, R₄, R₅ and R₆ independently represents hydrogen, C₁₋₆ alkyl, C₃₋₆ cycloalkyl, C₂₋₆ alkenyl, or C2-6 alkynyl, and/or
   (b) each of R₃ and R₄ taken together (R₃+R₄), and R₃ and R₆ taken together (R₅+R₆) represents C₃₋₆ cycloalkyl;
X represents C₁₋₆ alkylene;
Y₁ represents O;
each of Y₂ and Y₃ independently represents O or a single C-C bond;
each of n₁ and n₃ independently represents an integer number between 0 and 10;
each of a and b represents an integer number of 1; and
wherein c represents 0, Y₂ represents a single C-C bond, n₁ represents 2, and n₂ represents 0,
or c represents 1, each of Y₂ and Y₃ represents O, each of n₁, n₂, and n₃
represents 2, and each of R₃, R₄, R₅ and R₆ represents hydrogen.

In a further aspect, c represents 0, Y₂ represents a single C-C bond, n₁ represents 2, and n₂ represents 0.

In a further aspect, the nitrile compound is 3-(2-cyanoethoxy) propanenitrile.

In a further aspect, c represents 1, each of Y₂ and Y₃ represents O, each of n₁, n₂, and n₃ represents 2, and each of R₃, R₄, R₅, and R₆ represents hydrogen.

In a further aspect, the nitrile compound is selected from 3-{[1,3-bis(2-cyanoethoxy)propan-2-yl]oxy} propanenitrile, 3-{[1,6-bis(2-cyanoethoxy)hexan-2-yl]oxy}propanenitrile, 3-[3,4-bis-(2-cyano-ethoxy)-butoxy]-propionitrile, and 3,3'-((2-((2-cyanoethoxy)methyl)-2-methylpropane-1,3-diyl)bis(oxy))dipropanenitrile.

In a further aspect, the primary lithium salt is LiPF₆.

In a further aspect, a mole fraction of the primary lithium salt in the electrolyte is in a range of approximately 8 mol. % to approximately 15 mol. %.

In a further aspect, the electrolyte additionally comprises at least one additive lithium salt; wherein the at least one additive lithium salt is selected from lithium difluorophosphate (LFO), lithium tetrafluoroborate (LiBF₄), lithium bis(fluorosulfonyl)imide (LiFSI), lithium fluorosulfate (LiSO₃F), and lithium difluoro(oxalato)borate (LiDFOB).

In a further aspect, a mole fraction of the additive lithium salt(s) is in a range of approximately 0.2 mol. % to approximately 2.4 mol. %.

In a further aspect, the mole fraction of the at least one ES is in a range of approximately 35 mol. % to approximately 75 mol. %.

In a further aspect, the mole fraction of the at least one ES is in a range of approximately 39 mol. % to approximately 61 mol. %.

In a further aspect, the mole fraction of the at least one ES is at least approximately 39 mol. %.

In a further aspect, the mole fraction of the at least one ES is at least approximately 60 mol. %.

In a further aspect, the at least one ES is selected from ethyl propionate (EP), propyl propionate (PP), ethyl isobutyrate (EI), methyl isobutyrate (MI), methyl butyrate (MB), ethyl trimethylacetate (ET), ethyl isovalerate (EIV), ethyl 2-methylbutyrate (EMB), methyl isovalerate (MIV), methyl trimethylacetate (MT), methyl 2-methylbutyrate (MMB), methyl acetate (MA), and ethyl acetate (EA).

In a further aspect, a mole fraction of the VC in the electrolyte is in a range of approximately 0.25 mol. % to approximately 1 mol. % or in a range of approximately 1.0 mol. % to approximately 4.5 mol. %.

In a further aspect, a mole fraction of the FEC in the electrolyte is in a range of approximately 8 mol. % to is approximately 30 mol. %.

In a further aspect, a lithium-ion battery comprises an anode; a cathode; a separator interposed between the anode and the cathode; and the aforementioned electrolyte ionically coupling the anode and the cathode.

In a further aspect, a number of nitrile groups of the at least one nitrile compound is 2 or 3; and a molecular weight of the at least one nitrile compound is in a range of 95 to 294.

In a further aspect, carbon atoms in a shortest chain between two adjacent nitrile groups of the at least one nitrile compound number 2 or more.

In a further aspect, carbon atoms in the shortest chain between two adjacent nitrile groups of the at least one nitrile compound number 2, 3, 4, 5, 6, or 7.

In a further aspect, a density of the at least one nitrile compound is in a range of approximately 0.9 g/cm³ to approximately 1.4 g/cm³.

In a further aspect, a boiling point of the at least one nitrile compound is in a range of approximately 250 °C to approximately 500 °C at approximately 760 mm Hg.

In a further aspect, the at least one nitrile compound includes a heteroarylene group that is unsubstituted or substituted with C₁₋₆ alkyl.

In a further aspect, the heteroarylene group is an imidazole group or a pyridine group.

In a further aspect, the at least one nitrile compound is nonionic.

In a further aspect, the at least one nitrile compound does not include any trifluoromethyl group.

In a further aspect, the at least one nitrile compound does not include any tetrafluorobenzene group.

In a further aspect, the at least one nitrile compound does not include any thiophene group.

In a further aspect, wherein: the at least one nitrile compound does not include any carboxyl group.

In a further aspect, the at least one nitrile compound does not include any oxane group.

In a further aspect, the organic compound composition additionally a non-fluorinated cyclic carbonate other than VC.

In a further aspect, the non-fluorinated cyclic carbonate other than VC is ethylene carbonate.

Another aspect is directed to a battery pack or a device that utilizes at least one of such a lithium-ion battery cell comprising the foregoing electrolyte.

### BRIEF DESCRIPTION OF THE DRAWINGS

The accompanying drawings are presented to aid in the description of embodiments of the disclosure and are provided solely for illustration of the embodiments and not limitation thereof. Unless otherwise stated or implied by context, different hatchings, shadings, and/or fill patterns in the drawings are meant only to draw contrast between different components, elements, features, etc., and are not meant to convey the use of particular materials, colors, or other properties that may be defined outside of the present disclosure for the specific pattern employed.
FIG. 1 illustrates an example Li-ion battery in which the electrolytes, components, materials, methods, and other techniques described herein may be implemented.
FIG. 2 illustrates selected examples of cyclic carbonates that can be used in certain electrolytes.
FIG. 3 illustrates selected examples of linear carbonates that can be used in certain electrolytes.
FIGS. 4, 5, and 6 illustrate selected examples of esters suitable for certain electrolytes.
FIGS. 7, 8, 9, 10, 11, 12, and 13 illustrate examples of nitrile compounds.
FIG. 14 shows a table (Table 1) listing the composition of respective Electrolytes (ELY) #1, #2, and #11 and the measured thickness changes (expressed in %) for Li-ion battery cells comprising the respective electrolytes.
FIG. 15 shows a table (Table 2) listing the composition of respective Electrolytes (ELY) #1, #2, #3, #4, #5, #6, and #11, and the measured internal resistance (IR) changes (expressed in Ω) for Li-ion battery cells comprising the respective electrolytes.
FIG. 16 shows a table (Table 3) listing the composition of respective Electrolytes (ELY) #1, #7, #8, and #11, and the measured voltage changes (expressed in V) for Li-ion battery cells comprising the respective electrolytes.
FIG. 17 shows a table (Table 4) listing the composition of respective Electrolytes (ELY) #1, #2, #3, #6, #7, #9, and #11, and the measured residual capacity parameters (expressed in %) for Li-ion battery cells comprising the respective electrolytes.
FIG. 18 shows a table (Table 5) listing the composition of respective Electrolytes (ELY) #1, #2, #3, #4, #8, #10, and #11, and the measured recoverable capacity parameters (expressed in %) for Li-ion battery cells comprising the respective electrolytes.
FIG. 19 shows a table (Table 6) listing the composition of respective Electrolytes (ELY) #12, #13, and #14, and the measured thickness change, internal resistance (IR) change, voltage change, residual capacity, and recoverable capacity for each Li-ion battery cell comprising the respective electrolyte.
FIG. 20 shows a table (Table 7) listing the composition of respective Electrolytes (ELY) #15, #16, #17, and #18, and the measured volume change, internal resistance (IR) change, and voltage change for each Li-ion battery cell comprising the respective electrolyte.
FIG. 21 shows a table (Table 8) listing the oxidation potentials (Eₒₓ) measured vs. Li/Li⁺ of several selected nitrile compounds (3-{[1,3-bis(2-cyanoethoxy)propan-2-yl]oxy}propanenitrile, 1,3,6-hexanetricarbonitrile, 1,5-dicyanopentane, 1-(cyanomethyl) cyclopropane-1-carbonitrile, trans-1,4-dicyano-2-butene, 3-(2-cyanoethoxy) propanenitrile, adiponitrile, and pyridine-2,6-dicarbonitrile).
FIG. 22 shows a table (Table 9) listing the measured residual vinylene carbonate (VC), defined as a ratio (expressed in %) of the measured amount of VC present in the electrolyte in a Li-ion battery cell after a high-temperature (HT) outgassing test to the original amount of VC filled in the Li-ion battery cell during its assembly. Table 9 lists the measured residual VC for Li-ion battery cells containing electrolytes (ELY) #1, #2, #3, #4, #5, #6, #7, #8, #9, #10, and #11, respectively.
FIGS. 23A and 23B show a table (Table 10) listing several examples of nitrile compounds (including nitrile compound name, nitrile compound number as referred to herein, and structure identifier number according to FIGS. 7 - 13) and the molecular formula, number of nitrile groups, separation parameter, average mass (molecular weight), density, estimated boiling point at approximately 760 mm Hg, and other structural features for each respective nitrile compound.
FIG. 24 shows a table (Table 11) listing the measured volume change (thickness change?) after a high-temperature (HT) outgassing test, resistance change, voltage change, residual capacity, and recoverable capacity for Li-ion battery cells containing electrolytes (ELY) #20, #21, #22, #23, #24, and #25, respectively.
FIG. 25 shows a ¹H NMR spectrum of 3-{[1,6-bis(2-cyanoethoxy)hexan-2-yl]oxy}propanenitrile (nitrile compound 11, shown as structure 672 in FIG. 13).
FIG. 26 shows a ¹H NMR spectrum of 3-[3,4-bis-(2-cyano-ethoxy)-butoxy]-propionitrile (nitrile compound 12, shown as structure 674 in FIG. 13).
FIG. 27 shows a ¹H NMR spectrum of 3,3'-((2-((2-cyanoethoxy)methyl)-2-methylpropane-1,3-diyl)bis(oxy))dipropanenitrile (nitrile compound 13, shown as structure 676 in FIG. 13).

### DETAILED DESCRIPTION

Aspects of the present invention are disclosed in the following description and related drawings directed to specific embodiments of the invention. The term "embodiments of the invention" does not require that all embodiments of the invention include the discussed feature, advantage, process, or mode of operation, and alternate embodiments may be devised without departing from the scope of the invention. Additionally, well-known elements of the invention may not be described in detail or may be omitted so as not to obscure other, more relevant details.

Any numerical range described herein with respect to any embodiment of the present invention is intended not only to define the upper and lower bounds of the associated numerical range, but also as an implicit disclosure of each discrete value within that range in units or increments that are consistent with the level of precision by which the upper and lower bounds are characterized. For example, a numerical distance range from 7 nm to 20 nm (i.e., a level of precision in units or increments of ones) encompasses (in nm) a set of [7, 8, 9, 10, ..., 19, 20], as if the intervening numbers 8 through 19 in units or increments of ones were expressly disclosed. In another example, a temperature range from about - 120 °C to about - 60 °C encompasses (in °C) a set of temperature ranges from about - 120 °C to about - 119 °C, from about - 119 °C to about - 118 °C, .... from about - 61 °C to about - 60 °C, as if the intervening numbers (in °C) between - 120 °C and - 60 °C in incremental ranges were expressly disclosed. In yet another example, a numerical percentage range from 30.92% to 47.44% (i.e., a level of precision in units or increments of hundredths) encompasses (in %) a set of [30.92, 30.93, 30.94, ..., 47.43, 47.44], as if the intervening numbers between 30.92 and 47.44 in units or increments of hundredths were expressly disclosed. Hence, any of the intervening numbers encompassed by any disclosed numerical range are intended to be interpreted as if those intervening numbers had been disclosed expressly, and any such intervening number may thereby constitute its own upper and/or lower bound of a sub-range that falls inside of the broader range. Each sub-range (e.g., each range that includes at least one intervening number from the broader range as an upper and/or lower bound) is thereby intended to be interpreted as being implicitly disclosed by virtue of the express disclosure of the broader range. In yet another example, a numerical range with upper and lower bounds defined at different levels of precision shall be interpreted in increments corresponding to the bound with the higher level of precision. For example, a numerical percentage range from 30.92% to 47.4% (i.e., levels of precision in units or increments of hundredths and tenths, respectively) encompasses (in %) a set of [30.92, 30.93, 30.94, ..., 47.39, 47.40], as if 47.4% (tenths) was recited as 47.40% (hundredths) and as if the intervening numbers between 30.92 and 47.40 in units or increments of hundredths were expressly disclosed.

It will be appreciated that the level of precision of any particular measurement, threshold or other inexact parameter may vary based on various factors such as measurement instrumentation, environmental conditions, and so on. Below, reference to such measurements or thresholds may thereby be interpreted as a respective value assuming a pseudo-exact level of precision (e.g., a threshold of 80% comprises 80.0000... %). Alternatively, reference to such measurements or thresholds may be described via a qualifier that captures pseudo-exact value(s) plus a range that extends above and/or below the pseudo-exact value(s). For example, the above-noted threshold of 80% may be interpreted as "about", "approximately", "around" or "~" 80%, which encompasses "exactly" 80% (e.g., 80.0000... %) plus some range around 80%. In some designs, the range encompassed around a measurement or threshold via the "about", "approximately", "around" or "~" qualifier may encompass the level of precision for which the respective measurement or threshold is capable of being measured by the most accurate commercially available instrumentation as of the priority date of the subject application.

In some embodiments described below, certain parameters (e.g., temperature, state-of-charge (SOC), etc.) are defined in terms of relative terminology such as low, reduced, high, increased, elevated, and so on. With regard to temperature, unless otherwise stated, this relative terminology may be characterized relative to battery cell storage temperature or battery cell operating temperature, depending on the context of the relevant example. With regard to SOC, unless otherwise stated, a high SOC may be defined as higher than about 70% SOC (e.g., in some designs, about 70-80% SOC; in some designs, about 80-90% SOC; in some designs, about 90-100% SOC).

In one or more embodiments of the present disclosure, a preferred battery cell may include a lithium cobalt oxide (LCO), lithium nickel cobalt manganese oxide (NCM), lithium nickel cobalt aluminum oxide (NCA), lithium nickel cobalt manganese aluminum oxide (NCMA), lithium nickel oxide (LNO), lithium nickel cobalt oxide (NCO), lithium manganese oxide (LMO), lithium cobalt aluminum oxide (LCAO), lithium cobalt phosphate (LCP), lithium manganese phosphate (LMP), lithium manganese iron phosphate (LMFP), lithium nickel phosphate (LNP or LiNiPO₄), lithium cobalt phosphate (LiCoPO₄), lithium vanadium fluoro phosphate (LiVFPO₄), lithium iron fluoro sulfate (LiFeSO₄F), various Li excess materials (e.g., lithium excess (rocksalt) transition metal oxides and oxy-fluorides such as Li_{1.211}Mo_{0.467}Cr_{0.3}O₂, Li_{1.3}Mn_{0.4}Nb_{0.3}O₂, Li_{1.2}Mn_{0.4}Ti_{0.4}O₂, Li_{1.2}Ni_{0.333}Ti_{0.333}Mo_{0.133}O₂ and many others), various high capacity Li-ion based materials with partial substitution of oxygen for fluorine or iodine (e.g., rocksalt Li₂Mn_{2/3}Nb_{1/3}O₂F, Li₂Mn_{1/2}Ti_{1/2}O₂F, Li_{1.5}Na_{0.5}MnO_{2.85}I_{0.12}, among others) and many other types of Li-comprising disordered, layered, tavorite, olivine, or spinel type active materials or their alloys and mixtures comprising at least oxygen or fluorine or sulfur and at least one transition metal and other lithium transition metal (TM) oxides or phosphates or sulfates (or mixed) cathode active materials that rely on the intercalation of lithium (Li) and changes in the TM oxidation state (including, but not limited to those that may be doped or heavily doped; including, but not limited to those that have gradient in composition or core-shell morphology; including, but not limited to those that may be partially fluorinated or comprise some meaningful fraction of fluorine (e.g., about 0.001-10 at. %) in their composition, etc.).

. In some of the preferred examples a surface of the cathode active material (e.g., LCO, NCM, NCMA, NCA, etc.) may be coated with one or more layers of ceramic material having a distinctly different composition or microstructure. Illustrative examples of a preferred coating material for a preferred active cathode material may include, but are not limited to metal oxides that comprise one or more of the following metals: Ti, Al, Mg, Sr, Li, Si, Sn, Sb, Nb, W, Cr, Mo, Hf, Ta, B, Y, La, Ce, Zn, and Zr. Illustrative examples of such oxides may include, but are not limited to titanium oxide (e.g., TiO₂), aluminum oxide (e.g., Al₂O₃), magnesium oxide (e.g., MgO), silicon oxide (e.g., SiO₂), boron oxide (e.g., B₂O₃), lanthanum oxide (La₂O₃), zirconium oxide (e.g., ZrO₂) and other suitable metal or mixed metal oxides and their various mixtures and alloys. In other preferred examples, LCO may be doped with one or more of Al, Ti, Mg, La or other metals described above. In some designs, a preferred cathode current collector may comprise aluminum or an aluminum alloy. In some designs, a preferred battery cell may include a polymer separator, a polymer-ceramic composite separator or a ceramic separator. In some designs, such a separator may be stand-alone or may be integrated into an anode or cathode or both. In some designs, a polymer separator may comprise or be made of polyethylene, polypropylene, or a mixture thereof. In some of the preferred examples a surface of a polymer separator may be coated with a layer of ceramic material. Examples of a preferred coating material for polymer separators may include, but not limited to oxides, hydroxides or oxyhydroxides of titanium, aluminum, zirconium, magnesium and their various mixtures and combinations. In some designs, a preferred battery cell may include a silicon-carbon nanocomposite (e.g., as used herein, a nanocomposite or (nano)composite is at least partially comprised of active material nanomaterials or nanostructures, irrespective of whether the nanocomposite or (nano)composite itself is a nanomaterial) or silicon (SiOₓ) or natural or synthetic graphite or soft carbon or hard carbon or their various mixtures and combinations in its anode composition. In some of the preferred examples, the anode material includes a mixture of silicon-carbon nanocomposite and graphite. In some designs, a preferred anode current collector may comprise copper or copper alloy.

In one or more embodiments of the present disclosure, a preferred battery cell may comprise a relatively high areal capacity loading in its electrodes (anodes and cathodes), such as from around 2.0 mAh/cm² to around 12 mAh/cm² (in some implementations, from about 2 to about 3.5 mAh/cm²; in other implementations, from about 3.5 to about 4.5 mAh/cm²; in other implementations, from about 4.5 to about 6.5 mAh/cm²; in other implementations, from about 6.5 to about 8 mAh/cm²; in other implementations, from about 8 to about 12 mAh/cm²).

In one or more embodiments of the present disclosure, reference is made to "elevated temperatures". Unless implied or stated otherwise, elevated temperatures may refer to battery operating temperatures, such as elevated temperatures between about 40-80 °C.

While the description below may also describe certain examples of the material formulations in a Li-free state (for example, as in silicon-comprising nanocomposite anodes or metal fluoride cathodes), it will be appreciated that various aspects may be applicable to Li-containing electrodes and active materials (for example, partially or fully lithiated Si-comprising anodes or partially or fully lithiated Si-comprising anode particles, partially or fully lithiated metal fluoride comprising cathodes (such as a mixture of LiF and metals such as Cu, Fe, Ni, Bi, and various other metals and metal alloys and mixtures of such and other metals, etc.) or partially or fully lithiated metal halide comprising cathode particles, partially or fully lithiated chalcogenides (such as Li₂S, Li₂S/metal mixtures, Li₂Se, Li₂Se/metal mixtures, Li₂S- Li₂Se mixtures, various other compositions comprising lithiated chalcogenides etc.), partially or fully lithiated metal oxides (such as Li₂O, Li₂O/metal mixtures, etc.), partially or fully lithiated carbons, among others). In some designs, various material properties (e.g., at particle level, at inter-particle level, at electrode level, etc.) may change based on whether active material particle(s) are in a Li-free state, a partially lithiated state, or a fully lithiated state. Such Li-dependent material properties may include particle pore volume, electrode pore volume, and so on. Below, unless stated or implied otherwise, reference to such Li-dependent material properties (e.g., at particle level, at inter-particle level, at electrode level, etc.) may be assumed to be provided as if the active material particles are in the Li-free state.

During battery (such as a Li-ion battery) operation, conversion materials change (convert) from one crystal structure to another (hence the name "conversion"-type). This process is also accompanied by breaking chemical bonds and forming new ones. During (e.g., Li-ion) battery operation, Li ions are inserted into alloying type materials forming lithium alloys (hence the name "alloying"-type). Sometimes, "alloying"-type electrode materials are considered to be a subclass of "conversion"-type electrode materials.

While the description below may describe certain examples of suitable intercalation-type cathodes (including high voltage cathodes) in the context of NCA, NCMA, LNO, LMO, NCM, LCO, LCAO, LMFP, LNP, LCP and other lithium transition metal (TM) oxide or phosphate or sulfate (or mixed) cathodes that rely on the intercalation of lithium (Li) and changes in the TM oxidation state (including, but not limited to those that may be doped or heavily doped; including, but not limited to those that have gradient in composition or core-shell morphology; including, but not limited to those that may be partially fluorinated or comprise some meaningful fraction of fluorine (e.g., about 0.001-10 at. %) in their composition, etc.), it will be appreciated that various aspects may be applicable to high-voltage lithium transition metal oxide (or phosphate or sulfate or mixed or other) cathodes where TMs and oxygen (O) are covalently bonded and both TM and O take part in electrochemical reduction-oxidation (redox) reactions during charge and discharge (including, but not limited to, those oxides or phosphate or sulfate or mixed cathodes that may comprise at least about 0.25 at. % of Mn, Fe, Ni, Co, Nb, Mg, Cr, Mo, Zr, W, Ta, Ti, Hf, Y, La, Sb, Sn, Si, or Ge).

While the description below may describe certain electrolyte compositions with specific main co-solvents (e.g., esters), it will be appreciated that various aspects (e.g., the application of various disclosed nitrile compounds and their combinations, etc.) may be applicable with electrolytes with other main co-solvents (e.g., carbonates, such as linear carbonates, including ethyl methyl carbonate (EMC), diethyl ethyl carbonate (DEC), diethyl methyl carbonate (DMC), among others) or with electrolytes comprising more than one class of main co-solvents.

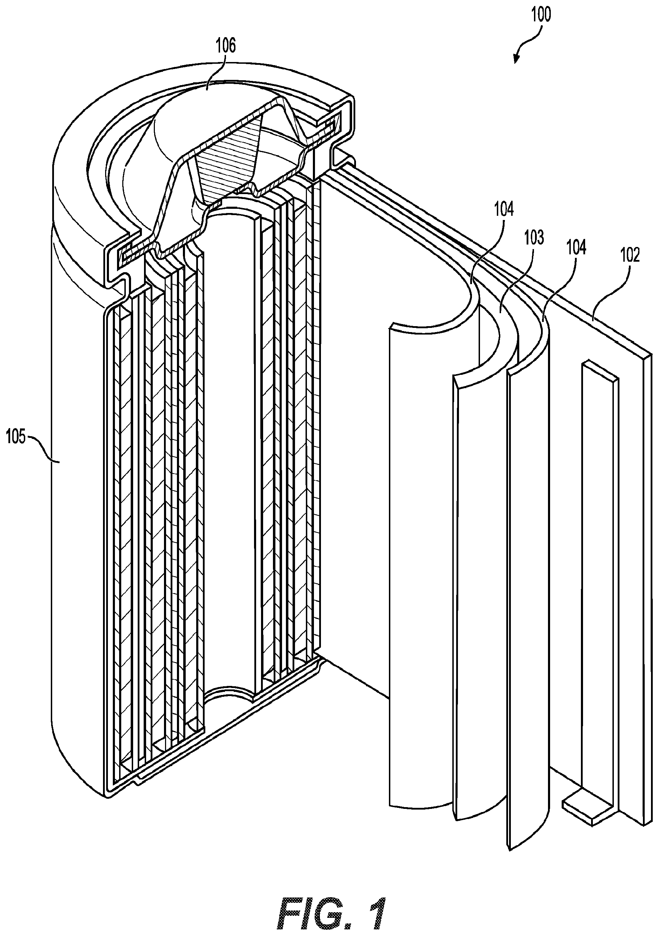

FIG. 1 illustrates an example metal-ion (e.g., Li-ion) battery in which the components, materials, methods, and other techniques described herein, or combinations thereof, may be applied according to various embodiments. A cylindrical battery is shown here for illustration purposes, but other types of arrangements, including prismatic or pouch (laminate-type) batteries, may also be used as desired. The example battery 100 includes a negative anode 102, a positive cathode 103, a separator 104 interposed between the anode 102 and the cathode 103, an electrolyte (shown implicitly) impregnating the separator 104, a battery case 105, and a sealing member 106 sealing the battery case 105. The electrolyte ionically couples the anode (negative electrode) and the cathode (positive electrode).

A conventional salt used in most conventional Li-ion battery electrolytes is LiPF₆. Examples of less common salts (e.g., explored primarily in research publications or, in some cases, never even described in Li-ion battery electrolyte applications, but may still be applicable and useful) include: lithium tetrafluoroborate (LiBF₄), lithium perchlorate (LiClO₄), lithium hexafluoroantimonate (LiSbF₆), lithium hexafluorosilicate (Li₂SiF₆), lithium hexafluoroaluminate (Li₃AlF₆), lithium bis(oxalato)borate (LiB(C₂O₄)₂, lithium difluoro(oxalato)borate (LiBF₂(C₂O₄), LiDFOB), various lithium imides (such as SO₂FN⁻(Li⁺)SO₂F, CF₃SO₂N⁻(Li⁺)SO₂CF₃, CF₃CF₂SO₂N⁻(Li⁺)SO₂CF₃, CF₃CF₂SO₂N⁻(Li⁺)SO₂CF₂CF₃, CF₃SO₂N⁻(Li⁺)SO₂CF₂OCF₃, CF₃OCF₂SO₂N⁻(Li⁺)SO₂CF₂OCF₃, C₆F₅SO₂N⁻(Li⁺)SO₂CF₃, C₆F₅SO₂N⁻(Li⁺)SO₂C₆F₅ or CF₃SO₂N⁻(Li⁺)SO₂PhCF₃, and others), lithium difluorophosphate (LFO), and others.

Electrodes utilized in Li-ion batteries are typically produced by (i) formation of a slurry comprising active materials, conductive additives, binder solutions and, in some cases, surfactant or other functional additives; (ii) casting the slurry onto a metal foil (e.g., Cu foil for most anodes and Al foil for most cathodes); and (iii) drying the casted electrodes to completely evaporate the solvent.

Conventional anode materials utilized in Li-ion batteries are of an *intercalation*-type, whereby metal ions are intercalated into and occupy interstitial positions of such materials during the charge or discharge of a battery. Such anodes experience small or very small volume changes when used in electrodes. Polyvinylidene fluoride, also known as polyvinylidene difluoride (PVDF), and carboxymethyl cellulose (CMC) are the two most common binders used in these electrodes. Carbon black is the most common conductive additive used in these electrodes. However, such anodes exhibit relatively small gravimetric and volumetric capacities (typically less than about 370 mAh/g rechargeable specific capacity in the case of graphite- or hard carbon-based anodes and less than about 600 mAh/cm³ rechargeable volumetric capacity at the electrode level without considering the volume of the current collector foils).

*Alloying*-type (or, more broadly, *conversion-type)* anode materials for use in Li-ion batteries offer higher gravimetric and volumetric capacities compared to intercalation-type anodes. For example, Earth-abundant silicon (Si) offers approximately 10 times higher gravimetric capacity and approximately 3 times higher volumetric capacity compared to an intercalation-type graphite (or graphite-like) anode. However, Si suffers from significant volume expansion during Li insertion (up to approximately 300 vol. %) and thus may induce thickness changes and mechanical failure of Si-comprising anodes. In addition, Si (and some Li-Si alloy compounds that may form during lithiation of Si) suffer from relatively low electrical conductivity and relatively low ionic (Li-ion) conductivity. Electronic and ionic conductivity of Si is lower than that of graphite. Formation of (nano)composite Si-comprising particles (including, but not limited to Si-carbon composites and nanocomposites (such as Si-C nanocomposites), Si-metal composites and nanocomposites, Si-polymer composites and nanocomposites, Si-ceramic composites and nanocomposites, composites and nanocomposites comprising various combinations of nanostructured Si, nanostructured and regular carbon, polymer, ceramic and metal or other types of porous composites comprising nanostructured Si or nanostructured or nano-sized Si particles of various shapes and forms; such nanocomposites are broadly referred to nanocomposite Si herein) may reduce volume changes during Li-ion insertion and extraction, which, in turn, may lead to better cycle stability in rechargeable Li-ion cells. In some designs, Si may be doped or heavily doped with nitrogen (N), phosphorous (P), boron (B) or other elements or be allowed with metals. In addition to Si-based composites and nanocomposites (nanocomposite Si), silicon oxides (SiOₓ) or oxynitrides (SiOₓN_{y}) or nitrides (SiN_{y}) or other Si element-comprising particles (including those that are partially reduced by Li or Mg) may reduce volume changes and improve cycle stability, although commonly at the expense of higher first cycle losses or faster degradation or both. In some designs, Si-comprising anode particles (e.g., nanocomposite Si and others) may exhibit high gravimetric capacities in the range from about 800 mAh/g to about 3000 mAh/g (per mass of Si-comprising anode particles in a Li-free state). Such high specific capacity is advantageous for attaining lighter batteries. However, Li-ion battery cells with anodes comprising high capacity anode particles may exhibit undesirably fast degradation in conventional electrolytes, particularly at elevated temperatures (e.g., at or above battery operating temperature, e.g., above about 50-80 °C) or when charged to high voltages (e.g., above about 4-4.3 V). In some designs, a subset of anodes with Si-comprising anode particles may include anodes with an electrode layer exhibiting capacity in the range from about 400 mAh/g to about 2800 mAh/g (per mass of the electrode layer, not counting the mass of the current collector, in a Li-free state). Such a class of charge-storing anodes may offer great potential for increasing gravimetric and volumetric energy of rechargeable batteries. However, Li-ion battery cells with anodes comprising high capacity anode particles may exhibit undesirably fast degradation in conventional electrolytes, particularly at elevated temperatures (e.g., at or above battery operating temperatures, e.g., above about 50-80 °C) or when charged to high voltages (e.g., above about 4-4.3 V). In addition to Si-comprising anodes, other examples of such high capacity (e.g., nanocomposite) anodes comprising *alloying-type* (or, more broadly, *conversion-type)* active materials include, but are not limited to, those that comprise germanium, antimony, aluminum, magnesium, zinc, gallium, arsenic, phosphorous, silver, cadmium, indium, tin, lead, bismuth, their alloys, and others. In addition to anodes comprising active materials in a metallic form, other interesting types of high capacity (including nanocomposite) anodes may comprise metal oxides (including silicon oxide, lithium oxide, etc.), metal nitrides (including silicon nitride, etc.), metal oxy-nitrides (including silicon oxy-nitride, etc.), metal phosphides (including lithium phosphide), metal hydrides, and others.

Li-ion cells with *alloying-type* (or, more broadly, *conversion-type)* active anode materials may exhibit undesirably fast degradation in conventional electrolytes, particularly at elevated temperatures (e.g., at or above battery operating temperatures, e.g., above about 50-80 °C) or when charged to high voltages (e.g., above about 4-4.3 V) and stored at such voltages at elevated temperatures (e.g., above about 50-80 °C). In some designs, degradation of Li-ion cells with *alloying-type* (or, more broadly, *conversion-*type) active anode materials may become particularly undesirably fast for large cells (e.g., cells with cell capacity in the range from about 10 Ah to about 40 Ah) or ultra-large cells (e.g., cells with cell capacity in the range from about 40 Ah to about 400 Ah) or gigantic cells (e.g., cells with cell capacity in the range from about 400 Ah to about 4,000 Ah or even more). However, large, or ultra-large or gigantic cells may be particularly attractive for use in some electric transportation or grid storage applications. In some designs, degradation of Li-ion cells with *alloying-type* (or, more broadly, *conversion-type)* active anode materials may become particularly undesirably fast for cells comprising medium (e.g., about 3-4 g/Ah) or small (e.g., about 2-3 g/Ah) amount of electrolyte when normalized by total cell capacity. However, in some designs, using a medium or a small amount of electrolyte may be particularly attractive for reducing cell fabrication costs or certain side reactions and for maximizing energy density of cells. One or more aspects of the present disclosure enables one to mitigate or overcome some or all of such limitations and substantially enhance performance of such Li-ion cells by using certain disclosed electrolyte compositions.

High-capacity (nano)composite anode powders (including, but not limited to those that comprise Si), which exhibit moderately high volume changes (e.g., about 8 - about 180 vol. %) during the first charge-discharge cycle, moderate volume changes (e.g., about 4 - about 50 vol.%) during the subsequent charge-discharge cycles and an average size in the range from about 0.2 to about 40 microns (for some applications, more preferably from about 0.4 to about 20 microns) may be particularly attractive for battery applications in terms of manufacturability and performance characteristics. In particular, a subclass of such anode powders with specific surface area in the range from about 0.5 m²/g to about 50 m²/g (in some designs, from about 0.5 m²/g to about 2 m²/g; in other designs, from about 2 m²/g to about 12 m²/g; in yet other designs, from about 12 m²/g to about 50 m²/g) performed particularly well in some embodiments. In some designs, electrodes with electrode areal capacity loading from moderate (e.g., from about 2 to about 4 mAh/cm²) to high (e.g., from about 4 to about 12 mAh/cm²) and ultra-high (e.g., above about 12 mAh/cm²) are also particularly attractive for use in cells. In some designs, a near-spherical or a spheroidal or an ellipsoid (inc. oblate spheroid) shape of these composite particles may additionally be very attractive for increasing rate performance and volumetric capacity (density) of the electrodes.

In spite of some improvements that may be achieved with the formation and utilization of such alloying-type (or conversion-type) active material(s)-comprising (e.g., nanocomposite) anode materials as well as electrode formulations, however, substantial additional improvements in cell performance characteristics may be achieved with improved composition and preparation of electrolytes (e.g., liquid electrolytes), beyond what is known or shown by the conventional state-of-the-art. Unfortunately, high-capacity (nano)composite anode and cathode powders, which exhibit moderately high volume changes (e.g., about 8 - about 180 vol. %) during the first charge-discharge cycle, moderate volume changes (e.g., about 4 - about 50 vol.%) during the subsequent charge-discharge cycles, an average size in the range from about 0.2 to about 40 microns and relatively low density (e.g., about 0.5 - 3.8 g/cc), are relatively new and their performance characteristics and limited cycle stability are typically relatively poor, particularly if electrode areal capacity loading is moderate (e.g., from about 2 to about 4 mAh/cm²) and even more so if electrode areal capacity loading is high (e.g., from about 4 to about 12 mAh/cm²) or ultra-high. Higher capacity loading, however, is advantageous in some designs for increasing cell energy density and reducing cell manufacturing costs. Similarly, the cell performance may suffer when such an electrode (e.g., anode) porosity (e.g., volume occupied by the spacing between the (nano)composite active anode particles in the electrode and filled with electrolyte, exclusive of closed pores, if any, within the particles themselves that are inaccessible to electrolyte) becomes moderately small (e.g., about 25 - about 35 vol. %) and more so when the electrode (e.g., anode) porosity becomes small (e.g., about 5 - about 25 vol. %) or when the amount of the binder and conductive additives in the electrode (e.g., anode) becomes moderately small (e.g., about 6 - about 15 wt. %, total) and more so when the amount of the binder and conductive additives in the electrode (e.g., anode) becomes small (e.g., about 0.5 - about 5 wt. %, total).

Higher electrode density and lower binder content, however, are advantageous for increasing cell energy density and reducing cost in certain applications. In some designs, lower binder content may also be advantageous for increasing cell rate performance. In some designs, larger volume changes may lead to inferior performance in some designs, which may be related to damages in the solid electrolyte interphase (SEI) layer formed on the anode, to the non-uniform lithiation and delithiation of the electrode particles within the electrodes, and/or other factors. Unfortunately, Li and Li-ion battery cells with such anodes and conventional electrolytes often require the use of such large amounts of conventional SEI-building additives to maintain acceptable cycle stability that prevents their use at elevated or low temperatures or undesirably limits their calendar life or does not allow such cells to be charged to high voltages (e.g., above about 4.1-4.3 V). In some designs, performance of such battery cells may become particularly poor when the cells are charged to above about 4.3-4.4 V and even more so when the cells are charged to above about 4.5 V.

Higher cell voltage, broader operational temperature window and longer cycle life, however, is advantageous for most applications. In some designs, such cells (e.g., cells with high amounts of conventional SEI-building additives) may suffer from excessive capacity degradation (e.g., above about 5%), large volume expansion (e.g., above about 10%) and significant gassing when exposed to high temperatures (e.g., above about 50-90 °C) in a fully charged state (e.g., state-of-charge, SOC, of about 90-100 %) for a prolonged time (e.g., about 12-168 hours). Passing such elevated temperature charging tests is often required for most applications. In some designs, degradation of Li-ion cells comprising high-capacity (nano)composite anode powders, which exhibit moderately high volume changes during the first charge-discharge cycle, moderate volume changes during the subsequent charge-discharge cycles and an average size in the range from about 0.2 to about 40 microns may become particularly undesirably fast for large cells (e.g., cells with cell capacity in the range from about 10 Ah to about 40 Ah) or ultra-large cells (e.g., cells with cell capacity in the range from about 40 Ah to about 400 Ah) or gigantic cells (e.g., cells with cell capacity in the range from about 400 Ah to about 4,000 Ah or even more). In some designs, Li-ion cells with such volume changing anode particles may become particularly undesirably fast for cells comprising medium (e.g., about 3-4 g/Ah) or small (e.g., about 2-3 g/Ah) amount of electrolyte when normalized by total cell capacity. One or more embodiments of the present disclosure enables one to mitigate or overcome some or all of such limitations and substantially enhance performance of such Li-ion cells by using certain disclosed electrolyte compositions.

One or more embodiments of the present disclosure overcome some of the above-discussed challenges of various types of metal-ion (e.g., Li-ion) cells comprising high-capacity nanocomposite anode materials (for example, materials comprising conversion-type or alloying-type active materials) that may comprise Si in their composition, may experience certain volume changes during cycling (for example, moderately high volume changes (e.g., about 8 - about 160 or about 180 vol. %) during the first charge-discharge cycle and moderate volume changes (e.g., about 4 - about 50 vol. %) during the subsequent charge-discharge cycles), may exhibit an average particle size in the range from about 0.2 to about 40 microns and a specific surface area in the range from about 0.5 to about 50 m²/g (in some designs, from about 0.5 to about 2 m²/g; in other designs, from about 2 to about 12 m²/g; in yet other designs, from about 12 to about 50 m²/g), may be formulated with such electrodes in moderate (e.g., about 2 - about 4 mAh/cm²) and high areal capacity loadings (e.g., about 4 - about 12 mAh/cm²) with high packing density (electrode porosity filled with electrolyte in the range from about 5 to about 35 vol. % after the first charge-discharge cycle) and relatively low binder content (e.g., about 0.5 - about 14 wt. %), may comprise moderate or small amount of electrolyte per cell capacity (e.g., less than about 4 g/mAh), may be charged to moderately high (e.g., above about 4.1-4.3 V) or high (e.g., above about 4.3-4.4 V) or very high (e.g., above about 4.5-4.8 V) voltages, may be exposed to temperatures above about 40 °C at high state of charge (e.g., SOC of about 70 - 100%) during testing or operation, may be produced as large cells (e.g., cells with cell capacity in the range from about 10 Ah to about 40 Ah) or ultra-large cells (e.g., cells with cell capacity in the range from about 40 Ah to about 400 Ah) or gigantic cells (e.g., cells with cell capacity in the range from about 400 Ah to about 4,000 Ah or even more).

Conventional cathode materials utilized in Li-ion batteries are of an intercalation-type and commonly crystalline and polycrystalline. Such cathodes typically exhibit a highest charging potential of less than about 4.3 V vs. Li/Li⁺, gravimetric capacity of less than about 190 mAh/g (based on the mass of active material) and volumetric capacity of less than about 800 mAh/cm³ (based on the volume of the electrode and not counting the volume occupied by the current collector foil). For given anodes, higher energy density in Li-ion batteries may be achieved either by using high-voltage cathodes (cathodes with a highest charging potential from about 4.3 V vs. Li/Li⁺ to about 5.1 V vs. Li/Li⁺) or by using cathodes comprising so-called conversion-type cathode materials (including, but not limited to those that comprise F or S in their composition). Some high-voltage intercalation-type cathodes may comprise nickel (Ni). Some high-voltage intercalation-type cathodes may comprise manganese (Mn). Some high-voltage intercalation-type cathodes may comprise iron (Fe). Some high-voltage intercalation-type cathodes may comprise cobalt (Co). Some high-voltage intercalation-type cathodes may comprise aluminum (Al). Some high-voltage intercalation-type cathodes may comprise, as a dopant, silicon (Si), tin (Sn), antimony (Sb), or germanium (Ge) or their various combinations. In some designs, high-voltage intercalation-type cathode particles may comprise fluorine (F) as a dopant in their structure or the surface layer. Some high-voltage intercalation-type cathodes may comprise phosphorous (P) as a dopant. Some high-voltage intercalation-type cathodes may comprise sulfur (S) as a dopant. Some high-voltage intercalation-type cathodes may comprise selenium (Se) as a dopant. Some high-voltage intercalation-type cathodes may comprise tellurium (Te) as a dopant. Some high-voltage intercalation-type cathodes may comprise iron (Fe). Some high-voltage intercalation-type cathodes may comprise magnesium (Mg). Some high-voltage intercalation-type cathodes may comprise zirconium (Zr). Combination of such (or similar) types of higher energy density cathodes with high-capacity (e.g., Si based) anodes may result in high cell-level energy density. Unfortunately, the cycle stability and other performance characteristics of such cells may not be sufficient for some applications, at least when used in combination with conventional electrolytes.

One or more embodiments of the present disclosure are thereby directed to electrolyte compositions that work well for a combination of high voltage intercalation cathodes (cathodes with the highest charging potential in the range from about 4.0-4.2 V to about 4.5 V vs. Li/Li⁺ and, in some cases, from about 4.5 V vs. Li/Li⁺ to about 5.1 V vs. Li/Li⁺) with a subclass of high-capacity moderate volume changing anodes (e.g., anodes comprising (nano)composite anode powders, which exhibit moderately high volume changes (e.g., about 8 - about 160 or about 180 vol. %) during the first charge-discharge cycle, moderate volume changes (e.g., about 4 - about 50 vol.%) during the subsequent charge-discharge cycles), which exhibit an average particle size (e.g., average diameter) in the range from about 0.2 to about 40 microns and specific surface area in the range from about 0.5 to about 50 m²/g (when normalized by the mass of the composite electrode particles) and, in the case of Si-comprising anodes, specific capacities in the range from about 400 to about 2800 mAh/g (when normalized by the total mass of all the anode particles, conductive or other additives and binders, but does not include the weight of the current collectors) or in the range from about 650-800 to about 3000 mAh/g (when normalized by the mass of the Si-comprising anode particles only). In at least one embodiment, a particular electrolyte composition may be selected based on the value of the highest cathode charge potential or the highest operating temperature or the longest calendar life requirement.

One or more embodiments of the present disclosure are also directed to electrolyte compositions that work well for a combination of (i) a subclass of moderate capacity (e.g., about 160-260 mAh/g per mass of active materials, in some design), high-voltage intercalation-type cathodes (which may be layered cathodes in some designs; which may comprise Ni or Co or Mn or a combination of some of such metals in some designs, such as, for example, LCO, NCA, NCMA, LNO, various LMO (lithium manganese oxides), various NCM (lithium nickel cobalt manganese oxides, also known as NMC), LCAO, LCP, LNP, LMP, LMFP, LiVFPO₄, LiFeSO₄F, various Li excess materials (e.g., lithium excess (rocksalt) transition metal oxides and oxy-fluorides such as Li_{1.211}Mo_{0.467}Cr_{0.3}O₂, Li_{1.3}Mn_{0.4}Nb_{0.3}O₂, Li_{1.2}Mn_{0.4}Ti_{0.4}O₂, Li_{1.2}No_{0.333}Ti_{0.333}Mo_{0.133}O₂ and many others), various high capacity Li-ion based materials with partial substitution of oxygen for fluorine or iodine (e.g., rocksalt Li₂Mn_{2/3}Nb_{1/3}O₂F, Li₂Mn_{1/2}Ti_{1/2}O₂F, Li_{1.5}Na_{0.5}MnO_{2.85}I_{0.12}, among others), their various combinations and variations or others), which are charged to above about 4.1 V vs. Li/ Li⁺ during full cell battery cycling (in some designs, above about 4.2 V vs. Li/ Li⁺; in other designs, above 4.3 V vs. Li/ Li⁺; in yet other designs, above about 4.4 V vs. Li/ Li⁺; in yet other designs, above about 4.5 V vs. Li/ Li⁺; in yet other designs, above about 4.6 V vs. Li/ Li⁺) with (ii) a subclass of high-capacity moderate volume changing anodes: anodes comprising about 5 - about 100 wt.% of (nano)composite anode powders, which exhibit moderately high volume changes (e.g., about 8 - about 160 or about 180 vol. %) during the first charge-discharge cycle, moderate volume changes (e.g., about 4 - about 50 vol.%) during the subsequent charge-discharge cycles, an average size (e.g., average diameter) in the range from about 0.2 to about 40 microns and specific surface area in the range from about 0.5 to about 50 m²/g normalized by the mass of the (nano)composite anode particles and, in the case of Si-comprising anodes, specific reversible capacities in the range from about 400 to about 2800 mAh/g (when normalized by the total mass of all the active electrode particles, conductive additives and binders) or in the range from about 800 to about 3000 mAh/g (when normalized by the mass of the composite anode particles only).

The inventors have found that, in some designs, cells comprising anode electrodes based on high capacity nanocomposite anode particles or powders (comprising conversion- or alloying-type active anode materials) that experience certain volume changes during cycling (moderately high volume changes (e.g., an increase by about 8 - about 180 vol. % or a reduction by about 8 - about 70 vol. %) during the first charge-discharge cycle and moderate volume changes (e.g., about 4 - about 50 vol. %) during the subsequent charge-discharge cycles) and an average size in the range from about 0.2 to about 40 microns (such as Si-based nanocomposite anode powders, among many others) may benefit from specific compositions of electrolytes that provide significantly improved performance (particularly for high capacity loadings or small electrolyte fractions or large cells).

For example, (i) continuous volume changes in high capacity nanocomposite particles during cycling in combination with (ii) electrolyte decomposition on the electrically conductive electrode surface at electrode operating potentials (e.g., mostly electrochemical electrolyte reduction in the case of Si-based anodes) may lead to a continuous (even if relatively slow) growth of a solid electrolyte interphase (SEI) layer on the surface of the nanocomposite anode particles and the resulting irreversible losses in cell capacity. In some designs, the addition of some known SEI-forming additives may improve SEI stability during cycling but may lower electrolyte conductivity and may induce undesirable electrolyte oxidation on the cathode (particularly at higher voltages or elevated temperature), resulting in gassing, cell swelling and reduced cycle and calendar life. In some designs, the addition of some known cathode solid electrolyte interphase (CEI)-forming additives may induce protective film formation on the cathode, reducing further electrolyte oxidation and gassing, but often at the expense of reduced SEI stability on the anode or other undesirable effects.

In some designs, swelling of binder(s) in electrolyte(s) depends not just on the binder composition(s), but may also depend on the electrolyte composition(s). Furthermore, in some designs, such swelling (and the resulting performance reduction) often correlates with the reduction in elastic modulus upon exposure of binders to electrolytes. In this sense, the smaller the reduction in modulus in certain electrolytes, the more stable the binder-linked (nano)composite active particles / conductive additives interface becomes. In some designs, the reduction in binder modulus by over about 15-20% may result in a noticeable reduction in performance. In an example, the reduction in the binder modulus by about two times (2x) may result in a substantial performance reduction. In a further example, the reduction in modulus by about five or more times (e.g., about 5x-500x) may result in a very significant performance reduction. Therefore, selecting an electrolyte composition that does not induce significant binder swelling may be highly preferential for certain applications. In some examples, it may be preferred to select an electrolyte composition that reduces the binder modulus by less than about 30 % (more preferably, by no more than about 10 %) when exposed to electrolyte. In anodes which comprise more than one binder composition, in some designs, it may be preferred to select an electrolyte composition where at least one binder does not reduce the modulus by over about 30 % (more preferably, by no more than about 10 %) when exposed to electrolyte.

In one or more embodiments of the present disclosure, it may be advantageous to have a total salt concentration in the electrolyte in the range from about 0.8M to about 2.0M, while utilizing a mixture of two, three or more salts. Lower than about 0.8M salt concentration in the electrolyte may lead to reduced cell stability in some designs (e.g., when high-capacity anode materials are used), particularly when high areal capacity electrodes are used (e.g., above about 4 mAh/cm²). Higher salt concentration in the electrolyte may lead to reduced rate performance in some designs, and, in some designs, to reduced cell stability. Such reduced performance characteristics may be related to reduced mobility of Li⁺ cations in the electrolyte in some designs. Higher salt concentration may also lead to increased electrolyte density and cost in some designs, which may be undesirable for some applications. The optimal salt concentration may depend on the particular cell design and electrolyte composition.

High-temperature outgassing in a battery cell is an undesirable phenomenon that is observed to result from a heat treatment (also referred to as high-temperature storage treatment) of the battery cell after it has been charged to a high state-of-charge (SOC). The temperature of the heat treatment can vary depending on the specific heat treatment implementation, e.g., about 80 °C, about 72 °C, about 60 °C, and other temperatures in a range of about 50 °C to about 90 °C. The duration of the heat treatment can also vary depending on the specific heat treatment implementation, e.g., about 10 days, about 7 days, about 3 days, about 2.5 days, about 2 days, and other durations. For the Li-ion battery test results as discussed herein, the heat treatment was conducted at a temperature of 72 °C for a duration of 60 hours (2.5 days).

There are several metrics for evaluating the high-temperature outgassing phenomenon. A measurement of the volume of the gases formed in the cell constitutes a metric for the high-temperature outgassing test. In a specific example, the volume of the gases in the cell at atmospheric pressure ("gas volume"), measured 1 h after the cell has been cooled to 25 °C after the high-temperature storage treatment under a high state-of-charge (SOC), is compared to the initial volume of the cell before the high-temperature storage treatment under a high state-of-charge (SOC). In some implementations, the gas volume preferably does not exceed about 10 vol. % of the initial volume of the cell. In some implementations, the gas volume preferably does not exceed about 3 vol. % of the initial volume of the cell. In some implementations, the gas volume preferably does not exceed about 1 vol. % of the initial volume of the cell.

Measurements of the change in volume of the cell before and after the high-temperature storage treatment under a high state-of-charge (SOC) constitute a metric for the high-temperature outgassing test. In a specific example, the volume of the cell ("final volume") measured 1 h after the cell has been cooled to 25 °C after the high-temperature storage treatment under a high state-of-charge (SOC) is compared to the initial volume of the cell before the high-temperature storage treatment under a high state-of-charge (SOC). The difference between the final volume and the initial volume, expressed as a % of the initial volume, is referred to as "volume change." In some implementations, the volume change preferably does not exceed about 15 vol. % of the initial cell volume. In some implementations, the volume change preferably does not exceed about 10 vol. % of the initial cell volume. In some implementations, the volume change preferably does not exceed about 5 vol. % of the initial cell volume. Various measurement techniques are available for measuring the volume change of battery cells. One measurement technique uses the Archimedes Principle. The volume change (expressed in %) may be written as (*V*_{f} - *V*ᵢ)/*V*ᵢ, wherein *V*_{f} is the final volume of the cell after testing and *V*ᵢ is the initial volume of the cell before testing. Moreover, *V*_{f} = (*M*_{f}^{Air} - *M_{f}*^{EtOH})/*d* and *V*ᵢ = (*M*ᵢ^{Air}-*M*ᵢ^{EtOH})/d wherein *M*_{f}^{air} is the final measured mass of the cell in air after testing, *M*_{f}^{EtOH} is the final measured mass of the cell submerged in ethanol after testing, *M*ᵢ^{Air} is the initial measured mass of the cell in air before testing, *M*ᵢ^{EtOH} is the initial measured mass of the cell submerged in ethanol before testing, and *d* is the density of ethanol (g/cm³) at the temperature at which the measurements are made.

Measurements of the change in thickness of the cell before and after the high-temperature storage treatment under a high state-of-charge (SOC) constitute a metric for the high-temperature outgassing test. In a specific example, the thickness of the cell ("final thickness") measured 1 h after the cell has been cooled to 25 °C after the high-temperature storage treatment under a high state-of-charge (SOC) is compared to the initial thickness of the cell before the high-temperature storage treatment under a high state-of-charge (SOC). The difference between the final thickness and the initial thickness, expressed as a % of the initial thickness, is referred to as "thickness change." In some implementations, the thickness change preferably does not exceed 10 % of the initial cell thickness. In some implementations, the thickness change preferably does not exceed about 3 % of the initial cell thickness. In some implementations, the thickness change preferably does not exceed about 1 % of the initial cell volume.

A measurement of the residual capacity parameter of the cell constitutes a metric for the high-temperature outgassing test. In a specific example, the residual capacity of the cell measured 1 h after the cell has been cooled to 25 °C after the high-temperature storage treatment under a high state-of-charge (SOC) is compared to the initial capacity of the cell before the high-temperature storage treatment under a high state-of-charge (SOC). The ratio of the residual capacity to the initial capacity, expressed in %, is referred to as a "residual capacity parameter" or simply as "residual capacity." In some implementations, the residual capacity preferably exceeds about 80 % of the initial capacity. In some implementations, the residual capacity preferably exceeds about 90 % of the initial capacity. In some implementations, the residual capacity preferably exceeds about 95 % of the initial capacity.

A measurement of the recoverable capacity parameter of the cell constitutes a metric for the high-temperature outgassing test. In a specific example, the recoverable capacity of the cell measured 1 h after the cell has been cooled to 25 °C after the high-temperature storage treatment under a high state-of-charge (SOC) is compared to the initial capacity of the cell before the high-temperature storage treatment under a high state-of-charge (SOC). The ratio of the recoverable capacity to the initial capacity, expressed in %, is referred to as a "recoverable capacity parameter" or simply as "recoverable capacity." In some implementations, the recoverable capacity preferably exceeds about 80 % of the initial capacity. In some implementations, the recoverable capacity preferably exceeds about 90 % of the initial capacity. In some implementations, the recoverable capacity preferably exceeds about 95 % of the initial capacity.

Measurements of the change in open circuit voltage of the cell before and after the high-temperature storage treatment under a high state-of-charge (SOC) constitute a metric for the high-temperature outgassing test. In a specific example, the open circuit voltage of the cell measured 1 h after the cell has been cooled to 25 °C after the high-temperature storage treatment under a high state-of-charge (SOC) is compared to the initial open circuit voltage of the cell before the high-temperature storage treatment under a high state-of-charge (SOC). In some implementations, the voltage change (e.g., voltage decay) in the open circuit voltage of the cell preferably does not exceed about 0.3 V relative to the open circuit voltage of the cell before the high-temperature storage treatment under a high state-of-charge (SOC). In some implementations, the decay in the open circuit voltage of the cell preferably does not exceed about 0.2 V. In some implementations, the decay of the open circuit voltage of the cell preferably not exceed about 0.1 V.

Measurements of the change in the internal resistance (IR) of the cell before and after the high-temperature storage treatment under a high state-of-charge (SOC) constitute a metric for the high-temperature outgassing test. In a specific example, the internal resistance (IR) of the cell measured 1 h after the cell has been cooled to 25 °C after the high-temperature storage treatment under a high state-of-charge (SOC) is compared to the initial IR of the cell before the high-temperature storage treatment under a high state-of-charge (SOC). In some implementations, the change (e.g., the increase) in the internal resistance (IR) of the cell preferably does not exceed about 0.1 Ω relative to the internal resistance of the cell before the high-temperature storage treatment under a high state-of-charge (SOC). In some implementations, the change (e.g., the increase) of the internal resistance of the cell preferably does not exceed about 0.075 Ω relative to the internal resistance of the cell before the high-temperature storage treatment under a high state-of-charge (SOC). In some implementations, the change (e.g., the increase) of the internal resistance of the cell preferably does not exceed about 0.05 Ω relative to the internal resistance of the cell before the high-temperature storage treatment under a high state-of-charge (SOC).

One aspect of the present disclosure is directed to an electrolyte for a lithium-ion battery. The electrolyte comprises a primary lithium salt and an organic compound composition. In some implementations, the primary lithium salt may preferably be LiPF₆. In some implementations, a mole fraction of the primary lithium salt in the electrolyte may preferably be in a range of approximately 8 mol. % to approximately 15 mol. %. In some implementations, a mole fraction of the primary lithium salt in the electrolyte may preferably be in a range of approximately 8 mol. % to approximately 12 mol. %. In some implementations, a mole fraction of the primary lithium salt in the electrolyte may preferably be in a range of approximately 0.6M to approximately 1.4M (e.g., in some designs, from about 0.6M to about 0.8M; in other designs, from about 0.8M to about 1.1M; in yet other designs, from about 1.1M to about 1.4M).

In some implementations, the primary lithium salt is LiPF₆ and a concentration of the primary lithium salt in the electrolyte is in a range of approximately 8 mol. % to approximately 12 mol. % or in a range of approximately 8 mol. % to approximately 15 mol. % or in a range of approximately 0.6M to approximately 1.4M.

In some implementations, the electrolyte can additionally include at least one additive lithium salt (AS). In some implementations, the at least one additive lithium salt is selected from lithium difluorophosphate (LiPO₂F₂ or LFO), lithium tetrafluoroborate (LiBF₄), lithium bis(fluorosulfonyl)imide (LiFSI), lithium fluorosulfate (LiSO₃F), and lithium difluoro(oxalato)borate (LiDFOB). In some implementations, a mole fraction of the additive lithium salt(s) may be in a range of approximately 0.1 mol. % to approximately 2.4 mol. %. In some implementations, a mole fraction of the additive lithium salt(s) may be in a range of approximately 0.4 mol. % to approximately 1.8 mol. %. In some implementations, a mole fraction of the additive lithium salt(s) in the electrolyte may preferably be in a range of approximately 0.025 M to approximately 0.5 M.

In some implementations, the organic compound composition in the electrolyte may comprise: (1) fluoroethylene carbonate (FEC) or another suitable fluorinated cyclic solvent composition or their combination, (2) vinylene carbonate (VC) or vinyl ethylene carbonate (VEC) or another suitable cyclic carbonate or their combination, (3) one, two or more ester(s) (ES), and (4) a nitrile additive composition (NAC). In some implementations, a mole fraction of the NAC in the electrolyte may preferably range from approximately 0.05 mol. % to approximately 2.5 mol. %. In some implementations, the mole fraction of the NAC in the electrolyte may be in a range of approximately 0.1 mol. % to approximately 1.2 mol. %. The nitrile additive composition may contain either a single nitrile compound or a mixture of two, three or more nitrile compounds. In some designs, such electrolytes may also comprise (5) additional co-solvents.

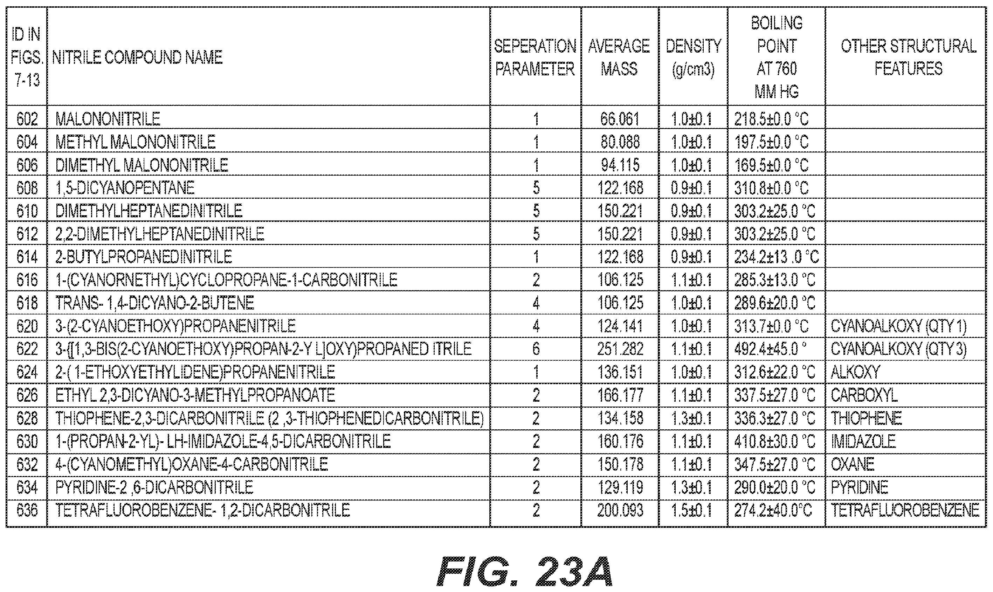

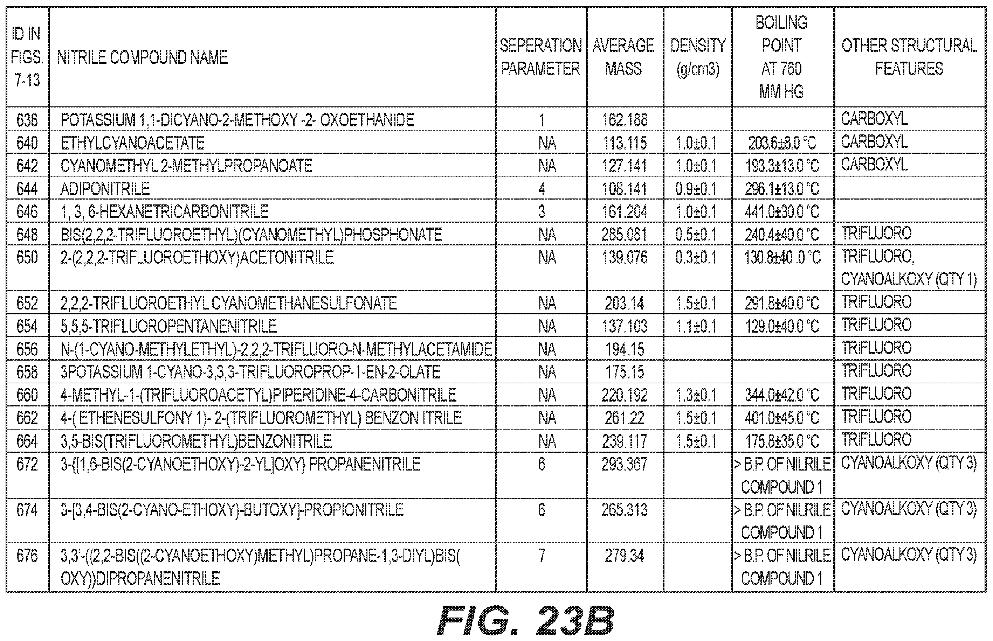

Illustrative examples of some of the suitable nitrile compounds for use in a NAC are listed in Table 10 as shown in FIGS. 23A and 23B. In this table, only compounds 622, 672, 674 and 676 are according to the invention. All the other compounds are presented for reference only.

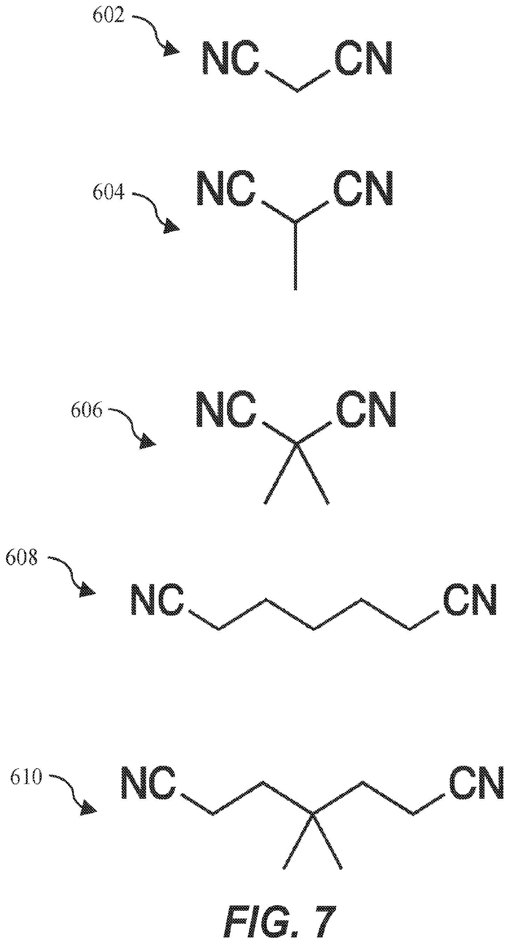

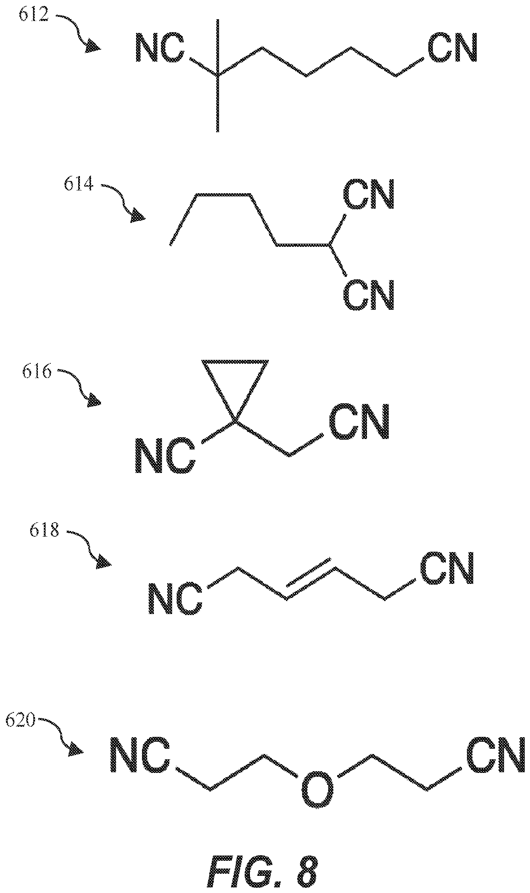

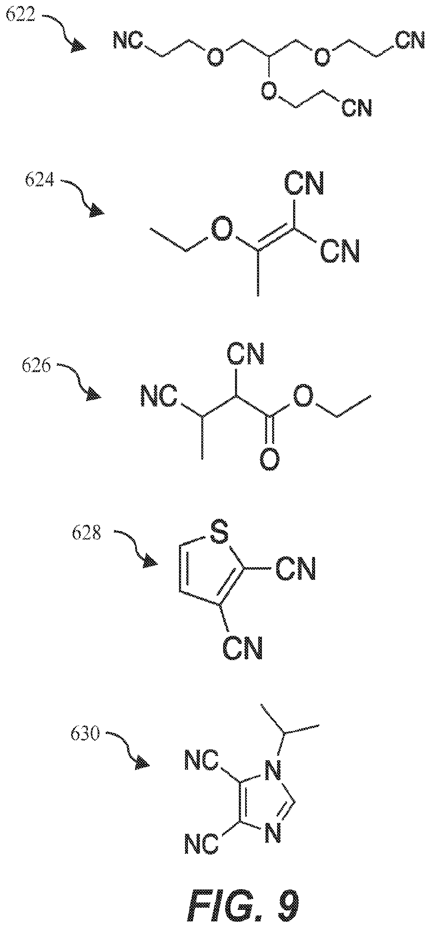

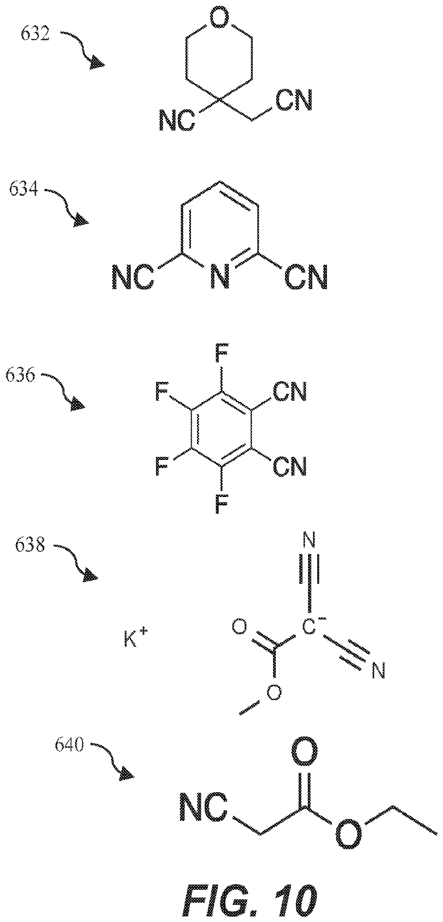

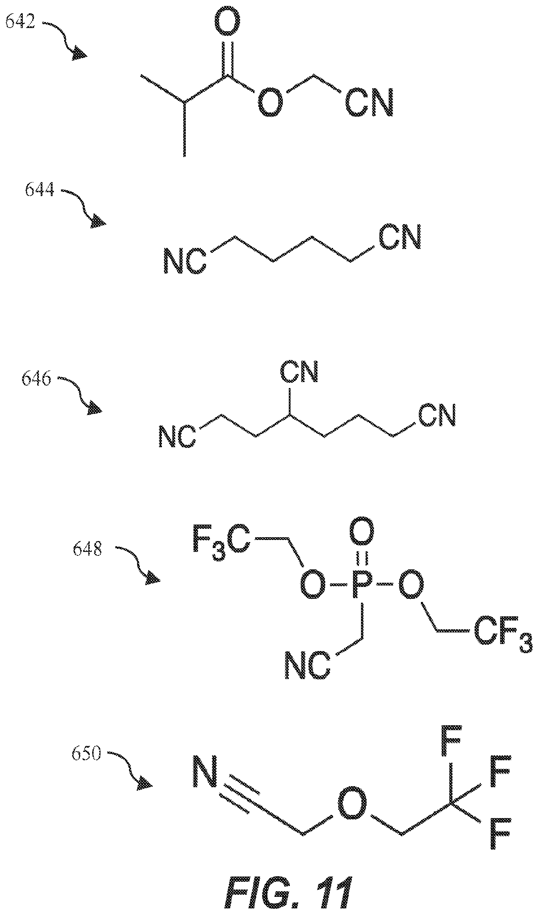

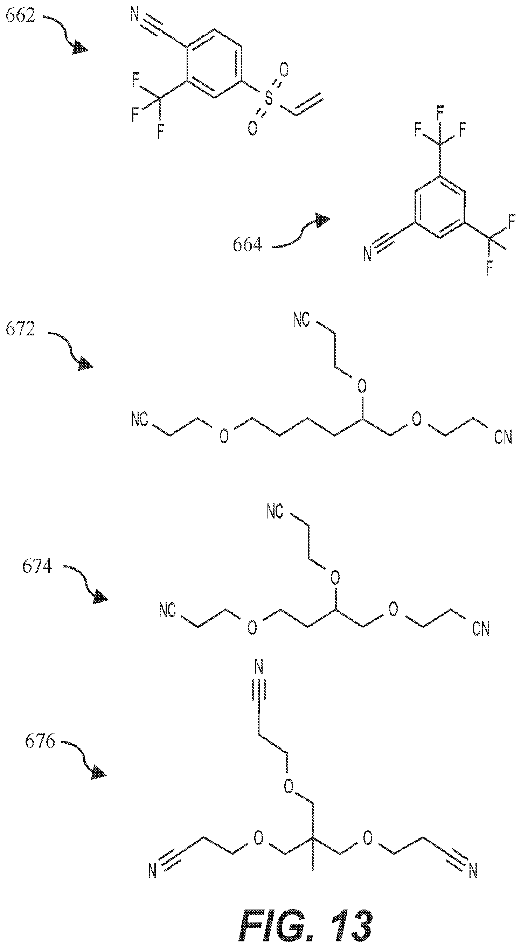

In some implementations, preferred nitrile compounds suitable for use in the NAC may be selected from the following: 3-{[1,3-bis(2-cyanoethoxy)propan-2-yl]oxy}propanenitrile (**nitrile compound 1,** shown as structure 622 in FIG. 9), 1,3,6-hexanetricarbonitrile (sometimes abbreviated as HTCN) (**nitrile compound 2,** shown as structure 646 in FIG. 11), 1,5-dicyanopentane (**nitrile compound 3,** shown as structure 608 in FIG. 7), 4,4-dimethylheptanedinitrile (**nitrile compound 4,** shown as structure 610 in FIG. 7), 1-(cyanomethyl)cyclopropane-1-carbonitrile (**nitrile compound 5,** shown as structure 616 in FIG. 8), trans-1,4-dicyano-2-butene (**nitrile compound 6,** shown as structure 618 in FIG. 8), 3-(2-cyanoethoxy)propanenitrile (**nitrile compound 7,** shown as structure 620 in FIG. 8), 1-(propan-2-yl)-1H-imidazole-4,5-dicarbonitrile (**nitrile compound 8,** shown as structure 630 in FIG. 9), adiponitrile (sometimes abbreviated as ADN) (**nitrile compound 9,** shown as structure 644 in FIG. 11), pyridine-2,6-dicarbonitrile (**nitrile compound 10,** shown as structure 634 in FIG. 10), 3-{[1,6-bis(2-cyanoethoxy)hexan-2-yl]oxy}propanenitrile (**nitrile compound 11,** shown as structure 672 in FIG. 13), 3-[3,4-bis-(2-cyano-ethoxy)-butoxy]-propionitrile (**nitrile compound 12,** shown as structure 674 in FIG. 13), and 3,3'-((2,2-bis((2-cyanoethoxy)methyl)propane-1,3-diyl)bis(oxy))dipropanenitrile (**nitrile compound 13,** shown as structure 676 in FIG. 13). Nitrile compounds 2, 3, 4, 5, 6, 7, 8, 9 & 10 are not according to the invention.

Among the isomers of dimethylheptanedinitrile, 4,4-dimethylheptanedinitrile (**nitrile compound 4,** shown as structure 610 in FIG. 7) and 2,2-dimethylheptanedinitrile (shown as structure 612 in FIG. 8) have been considered for use in an NAC of an electrolyte. Either one of these isomers of dimethylheptanedinitrile can contribute to mitigation of high-temperature outgassing. However, in some implementations, electrolytes comprising 4,4-dimethylheptanedinitrile (**nitrile compound 4)** can enable smaller thickness changes, lower internal resistance (IR) changes, smaller open circuit voltage changes, higher residual capacities, and higher recoverable capacities as compared to 2,2-dimethylheptanedinitrile.

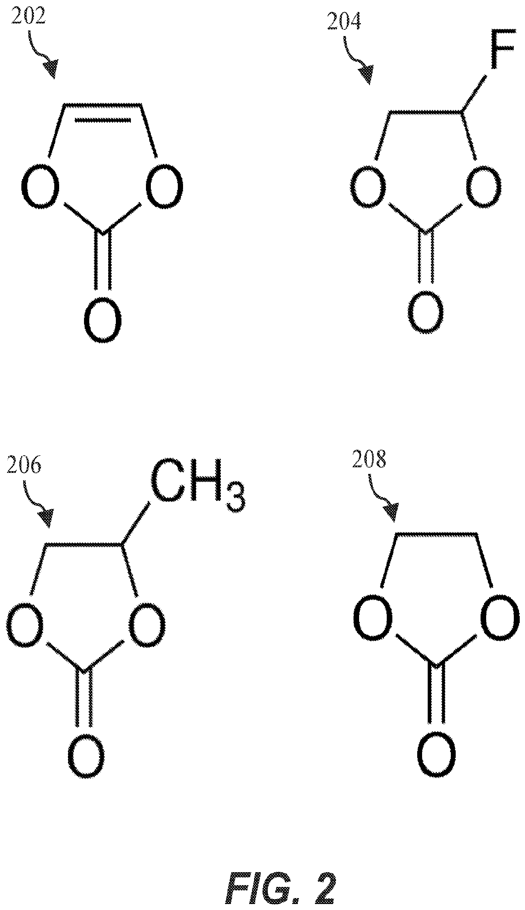

In one or more embodiments of the present disclosure, a preferred electrolyte for a lithium-ion battery may include cyclic carbonates (CCs) that promote the formation of solid electrolyte interphase (SEI). FIG. 2 shows two illustrative examples of such preferred SEI "builders": vinylene carbonate (VC) (202) and fluoroethylene carbonate (FEC) (204). In some embodiments, both VC and FEC may be preferably present in the electrolyte. FIG. 2 also shows examples of other cyclic carbonates: propylene carbonate (PC) (206) and ethylene carbonate (EC) (208). In some designs, these other cyclic carbonates may also be used in some of the electrolytes (ELYs) discussed herein. In some implementations, EC, a non-fluorinated cyclic carbonate, may additionally be used in organic compound compositions as described herein. The mole fraction of EC in the electrolyte depends on the implementation: in some cases, in a range of about 0 mol. % to about 5 mol. %, or in some other cases in a range of about 5 mol. % to about 10 mol. %, or in yet some other cases in a range of about 10 mol. % to about 15 mol. %, or in yet some other cases in a range of about 15 mol. % to about 20 mol. %. Herein, some lithium-ion battery test cells were successfully tested with a mole fraction of EC in the electrolyte in a range of about 10 mol. % to about 15 mol. %.

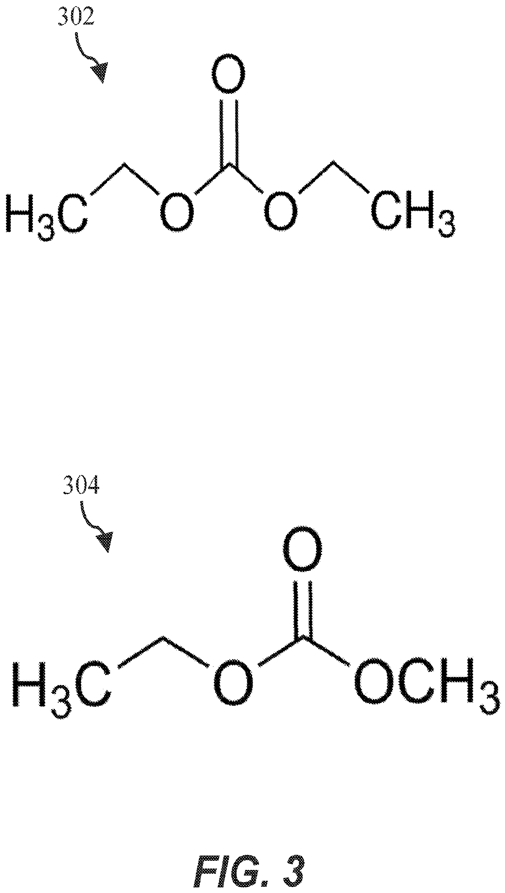

In one or more embodiments of the present disclosure, an electrolyte for a lithium-ion battery may include linear carbonates (LCs). FIG. 3 shows two illustrative examples of linear carbonates suitable for use in some electrolytes: diethyl carbonate (302) and ethyl methyl carbonate (304).

In some implementations, the organic compound composition of the electrolyte includes FEC. In some implementations, a mole fraction of FEC in the electrolyte may preferably be in a range of approximately 1 mol. % to approximately 30 mol. % (in some implementations, from about 1 mol. % to about 8 mol. %; in other implementations, from about 8 mol. % to about 16 mol. %; in yet other implementations, from about 16 mol. % to about 30 mol. %). In some implementations in which the mole fraction of the at least one ester in the electrolyte is in a range of approximately 60 mol. % to approximately 75 mol. %, the mole fraction of FEC in the electrolyte may preferably range from approximately 4 mol. % to approximately 16 mol. %. In some designs, when the mole fraction of FEC in the electrolyte is too low (e.g., in some implementations, less than approximately 1-4 mol. %), the cycle life may degrade undesirably fast because of insufficient amount of suitable SEI builders. In some designs, there is more SEI formation when the FEC mole fraction is greater than approximately 4 mol. %, or greater than approximately 8 mol. %. More robust SEI formation may occur when certain branched esters are present in the electrolyte. However, in some designs, increasing FEC mole fractions may undesirably be accompanied by increased high-temperature outgassing, as well as lower discharge voltages (due to the overly resistive SEI formation) and/or increased viscosity of the electrolyte (due to the high viscosity of FEC). Lower discharge voltages typically result in lower volumetric energy densities (VEDs), and higher viscosities result in lower ionic conductivities. For these reasons, the FEC mole fraction should preferably be set to below a certain threshold (e.g., mol. % threshold) in some designs. In some implementations, the FEC mole fraction should preferably not exceed approximately 30 mol. %. In some implementations, the FEC mole fraction preferably does not exceed approximately 28 mol. %. For FEC mole fractions in a preferred mole fraction range (such as a range of approximately 1 mol. % to approximately 30 mol. %, or a range of approximately 4 mol. % to approximately 28 mol. %, or a range of approximately 8 mol. % to approximately 16 mol. %), high-temperature outgassing may be effectively mitigated by the addition of certain nitrile additive(s) or nitrile additive(s) in combination with branched ester(s) as discussed hereinbelow. In some designs, within a preferred mole fraction range, the presence of FEC in the electrolyte may contribute to a preferable balance of sufficiently good cycle life, good ionic conductivity, high discharge voltage, mitigation of high-temperature outgassing, and/or good low-temperature performance.

In some implementations, a mole fraction of VC in the electrolyte may preferably be in a range of approximately 0.5 mol. % to approximately 5 mol. % (e.g., 0.5-2.5 mol. % or 2.5-5 mol. %). In some implementations, the mole fraction of VC in the electrolyte may preferably be in a range of approximately 2.5 mol. % to approximately 5 mol. %. In some designs, within a preferred mole fraction range (e.g., in a range of approximately 0.5 mol. % to approximately 5 mol. %. or in a range of approximately 2.5 mol. % to approximately 5 mol. %), the presence of VC in the electrolyte may contribute to a preferable balance of good cycle life, good ionic conductivity, and high discharge voltage.

In some implementations, when the mole fraction of VC in the electrolyte is too low (e.g., in some designs, less than approximately 0.5 %; in other designs, less than approximately 0.25%; in yet other designs, less than approximately 0.1%), the cycle life may degrade too fast because of insufficient amount of SEI formation or insufficiently robust property of the SEI. In some implementations, the cycle life may be better in electrolytes with VC mole fractions greater than about 0.25 mol. % or greater than about 0.5 mol. % or greater than about 1.0 mol. %. In some implementations, a higher mole fraction of VC in the electrolyte may result in a higher mole fraction of VC in the Li-ion solvation shell and a higher mole fraction of VC (or its decomposition products) in the SEI. Accordingly, a more robust SEI may be formed during initial 1-100 charge-discharge cycles when the VC mole fraction is greater than about 1.0 mol. %, greater than about 1.5 mol. %, greater than about 2.0 mol. %, greater than about 2.5 mol. %, greater than about 3.0 mol. %, greater than about 3.5 mol. %, or greater than about 4.0 mol. %. In some designs, because of its high dielectric constant (ε = 126 at 25 °C), the presence of VC in the electrolyte may also enable formation of electrolytes with a higher Li-ion conductivity. Therefore, in some implementations, the ionic conductivity may be higher in electrolytes wherein the VC mole fraction is greater than about 0.5 mol. %, greater than about 1.0 mol. %, greater than about 1.5 mol. %, greater than about 2.0 mol. %, greater than about 2.5 mol. %, or greater than about 3.0 mol. %. Nevertheless, in some implementations, there is a greater tendency for high temperature outgassing in electrolytes with higher VC mole fractions. In some implementations, a good balance among cycle life, ionic conductivity, high discharge voltage, and mitigation of high-temperature outgassing can be achieved when the VC mole fraction in the electrolyte is in a range of about 0.5 mol. % to about 5 mol. % or in a range of about 1.5 mol. % to about 4.5 mol. %.

The mechanism of the decomposition of cyclic carbonates (CCs) at high temperatures can be different on the cathode and on the anode. For example, the oxidation of CC with the formation of CO and CO₂ on the cathode may be a result of various electrolyte-cathode chemical or electrochemical interactions and result in outgassing. Several mechanisms of the decomposition of CC on the cathode may take place. For example, oxygen which may be generated on the cathode at a high state of charge (SOC) may oxidize CCs, leading to the generation of CO/CO₂ mixtures. Also, the hydrogen (H) abstraction from the CC, as a result of an oxidation, may result in the disproportionation of the five-membered ring of the CC with the formation of CO and CO₂. Also, the changes in the magnitude of ion pairing of Li salt, which may be tuned by changing the CC mole fraction, may result in increased outgassing at elevated temperatures. For example, increased ion pairing of Li⁺ and PF₆⁻ may result in substantial high-temperature (HT) outgassing due to the decomposition of LiPF₆ and formation of POF₃.

The mechanism of gassing on the anode may be very different from that on the cathode. At high SOC, decomposition of cyclic carbonates at the anode may occur, and the formation of H₂, CO, CO₂, CH₄, C₂H₄, C₂H₆, C₃H₆ and/or C₃H₈ may also take place as a result of chemical or electrochemical interactions between the electrolyte and the anode surface, which may induce substantial high-temperature (HT) outgassing.

In some designs, the surface of a cathode and an anode may preferably be protected by the nitrile additive(s) to decrease high-temperature (HT) outgassing. As used herein, the term "nitriles" refers to organic molecules which feature one or more CN (nitrile) groups. In some preferable examples, the nitriles may be dinitriles. In other preferable examples, the nitriles may be trinitriles.

In some designs, the nitriles may act differently when interacting with cathode or anode surfaces at high SOC and at elevated temperatures. For example, nitriles may coordinate to the surface of the cathode via transition metal oxide centers. The coordination mechanism may be related to the high dipole moment of a nitrile group. While effective coordination may be a prerequisite to strong bonding of nitrile to the transition metal oxide, the length of the nitrile chain may play an important role in blocking the access of CC to the surface of cathode in some designs. On one hand, the length of the nitrile chain may determine the effectiveness of blocking CC molecules from reaching the surface of the cathode. The chain length may have an optimal design to form an arch on the surface of the cathode to screen off the molecules from reaching the surface. On the other hand, the steric bulk of nitriles may be used for blocking CC molecules from reaching the surface of the cathode. In some embodiments of the present disclosure, the steric bulk of the nitriles may be improved by using nitriles with (1) fused aliphatic rings, such as cyclopropane ring, (2) nitriles with a double carbon-carbon bond, or (3) branched nitriles, such as methyl or dimethyl substituted nitriles. In other embodiments of this disclosure, star-like shaped nitriles with three or four aliphatic carbon chains deviating from the center, in which aliphatic carbons may also be replaced by oxygen groups, such as O, may be used to enable steric bulk of nitriles.

Additionally, in some designs, the oxidative stability of nitriles may determine the onset of high-temperature (HT) outgassing. For example, a nitrile with low oxidation stability may decompose faster while providing less protection to the cathode surface. On the other hand, in some designs, the decomposition of nitriles on the surface of the cathode may enable the formation of electronically insulative film that is Li-ion conducting. Such surface protection may also block CC and other molecules from undesirable or excessive decomposition on the cathode in some designs. To enable the formation of an electronically insulative film that is Li-ion conducting, nitriles with ethylene glycol structural units may be used effectively in some designs.

In some designs, nitriles may be prone to decomposition on the surface of the anode when exposed to a source of electrons due to their electron acceptor properties. Therefore, in some designs, using nitriles with low reduction potentials may be beneficial to achieve a high cycle life, decrease voltage hysteresis and decrease internal resistance, while ensuring surface protection for the cathodes. In some designs, the cathodic stability of a nitrile may be regulated by electron donicity of a nitrile. For example, in some designs, the electron donicity of a nitrile may be improved by replacing hydrogen atoms by short chain aliphatic groups, such as methyl or ethyl groups. In another example, the electron donicity may be improved by incorporating oxygen (O) groups in the structure of nitriles.

In another embodiment of this disclosure, a nitrile may be decomposed on the anode to form a Li-ion conducting and electron insulating film. In some designs, to enable the formation of an electronically insulative (but Li-ion conducting) film, nitriles with ethylene glycol structural units may be effectively used.

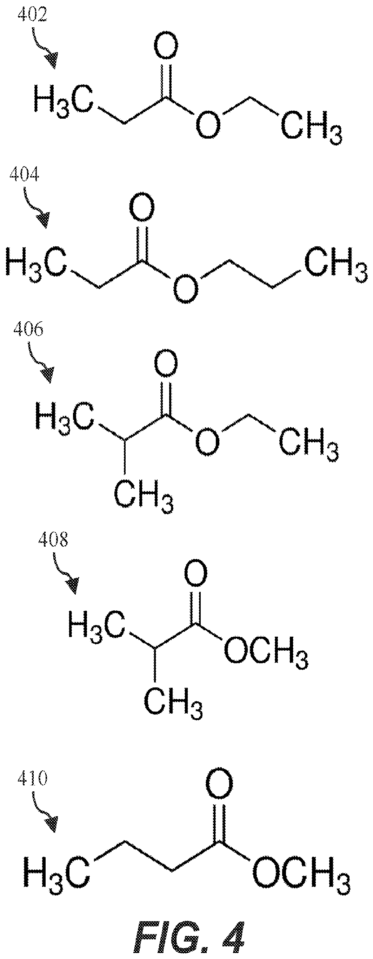

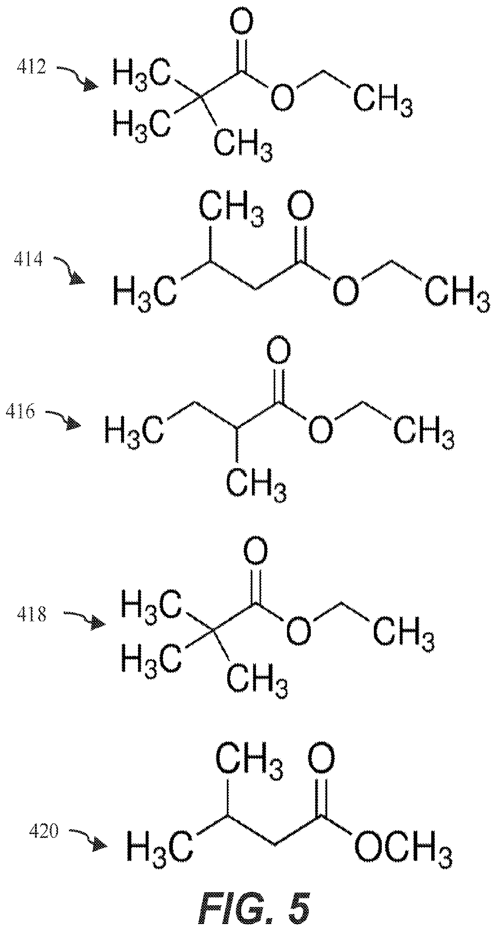

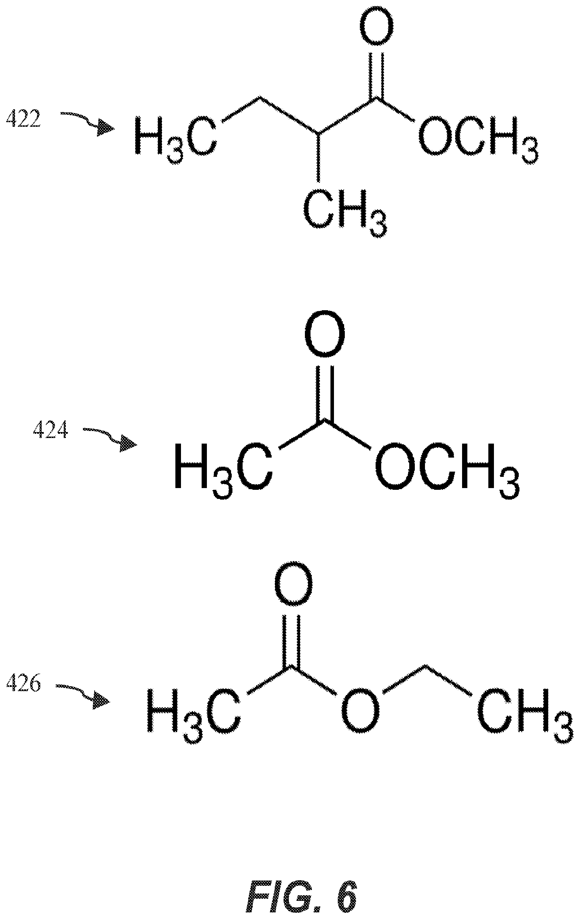

In one or more embodiments of the present disclosure, a preferred electrolyte for a lithium-ion battery may include at least one ester (ES) as a main (e.g., 20-90 mol. %) co-solvent. FIGS. 4, 5, and 6 show thirteen illustrative examples of some of the suitable esters: methyl acetate (MA) (424), ethyl acetate (EA) (426), ethyl propionate (EP) (402), propyl propionate (PP) (404), ethyl isobutyrate (EI) (406), methyl isobutyrate (MI) (408), ethyl isovalerate (EIV) (414), methyl isovalerate (MIV) (420), ethyl trimethylacetate (ET) (412), methyl trimethylacetate (MT) (418), methyl butyrate (MB) (410), ethyl 2-methylbutyrate (EMB) (416), and methyl 2-methylbutyrate (MMB) (422). EP (402), PP (404), MB (410), MA (424), and EA (426) are examples of linear esters. EI (406), MI (408), ET (412), EIV (414), EMB (416), MT (418), MIV (420), and MMB (422) are examples of branched esters.

In one or more embodiments of the present disclosure, a preferred electrolyte for a lithium-ion battery may include at least one ester compound as a main co-solvent or as a main co-solvent mixture. In an example, the at least one ester may comprise a linear ester, a branched ester, or a mixture of any of the foregoing.

In some designs, suitable ester(s) may contribute to better ionic conductivity in the electrolyte, better discharge performance (also referred to as "C-rate performance"), and/or better low-temperature performance. In some designs, the presence of branched esters in electrolytes that contain FEC and VC may lead to formation of a more robust SEI. Accordingly, in some designs, electrolytes containing branched esters may exhibit good (in some designs, improved) cycle life. In one or more embodiments of the present disclosure, a mole fraction of ES in the electrolyte may preferably be in a range of approximately 30 mol. % to approximately 80 mol. %. In other embodiments, the mole fraction of ES in the electrolyte may preferably be in a range of approximately 30 mol. % to approximately 50 mol. %. In other embodiments, the mole fraction of ES in the electrolyte may preferably be in a range of approximately 50 mol. % to approximately 80 mol. %. In other embodiments, the mole fraction of ES in the electrolyte may preferably be at least approximately 30 mol. %. In other embodiments, the mole fraction of ES in the electrolyte may preferably be at least approximately 40 mol. %. In other embodiments, the mole fraction of ES in the electrolyte may preferably be at least approximately 50 mol. %. In other embodiments, the mole fraction of ES in the electrolyte may preferably be at least approximately 60 mol. %.

In some implementations, EP (402), a linear ester, may contribute to lower viscosity, higher discharge voltages, better C-rate performance, and/or better low-temperature performance. However, in some designs, the presence of EP in an electrolyte may also undesirably lead to high-temperature outgassing, end-of-life outgassing, shorter cycle life, and/or evolution of gaseous by-products on the anode and cathode. Accordingly, in some designs, a mole fraction of EP in the electrolyte may preferably be in a range of approximately 30 mol. % to approximately 80 mol. % (in some designs, from about 30 mol. % to about 60 vol. %). Within this preferred mole fraction range, in some designs, the presence of EP in the electrolyte may contribute to a favorable balance of good cycle life, high discharge voltage, and/or mitigation of high-temperature outgassing and/or end-of-life-outgassing in a suitable electrolyte (which, in some designs, may also comprise cyclic carbonates or a combination of cyclic carbonates and linear carbonates).

In some implementations, EI (406), a branched ester, may contribute to better cycle life, decreased high-temperature outgassing, and/or decreased end-of-life outgassing compared to the linear (non-branched) EP (402). Furthermore, the flash point of EI which is approximately 20 °C, is higher than that of EP which is approximately 12 °C. However, in some designs, the presence of EI in an electrolyte may lead to a slight reduction of the discharge voltage and a reduction of the C-rate performance (e.g., due to increased charge transfer resistance). In some designs, this reduction of C-rate performance may be mitigated by adding certain charge-transfer additive salt(s) (e.g., lithium difluorophosphate (LiPO₂F₂), abbreviated LFO, or lithium difluoro(oxalato)borate (C₂BF₂LiO₄) abbreviated LiDFOB, among others and their various combinations). Accordingly, in some designs, a mole fraction of EI in the electrolyte may preferably be in a range of approximately 30 mol. % to approximately 80 mol. %. Within this preferred mole fraction range, in some designs, the presence of EI in the electrolyte may contribute to a suitable balance of good cycle life, high discharge voltage, and/or mitigation of high-temperature outgassing and/or end-of-life-outgassing in a suitable electrolyte (which, in some designs that may preferably comprise cyclic carbonates).

In some embodiments of the present disclosure, nitrile additive(s) may be used to decrease high-temperature (HT) outgassing by, for example, preventing or reducing linear or branched ES molecules from decomposition at elevated temperatures (e.g., battery operating temperatures, e.g., above about 50-80 °C). In some embodiments of the present disclosure, the combination of suitable oxidative stability, reductive stability, steric bulk, dipole moment, electron donicity and/or chain length may be achieved by a single nitrile compound or a mixture of nitrile compounds.

In accordance with embodiments of the present disclosure, an electrolyte for a Li-ion battery includes a nitrile additive composition. The nitrile additive composition is sometimes abbreviated as NAC herein. In some implementations, a mole fraction of the NAC in the electrolyte may preferably be in a range of approximately 0.1 mol. % to approximately 2.0 mol. %. In some designs, the NAC may comprise a single nitrile compound or a mixture of two, three or more nitrile compounds.

In some embodiments of the present disclosure, preferred nitrile compounds for use, singly or in combination as part of a mixture, in the NAC of an electrolyte for a Li-ion battery may be represented by the following formula (Formula 1): 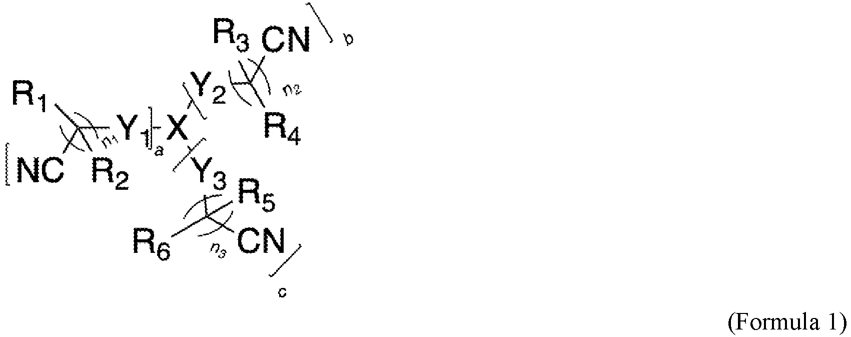 whereby (a) each of R₁, R₂, R₃, R₄, R₅, and R₆ independently represents hydrogen, C₁₋₆ alkyl, C₃₋₆ cycloalkyl, C₂₋₆ alkene, or C₂₋₆ alkyne, and/or (b) each of R₁ and R₂ taken together (R₁+R₂), R₃ and R₄ taken together (R₃+R₄), and R₅ and R₆ taken together (R₅+R₆), represents C₃₋₆ cycloalkyl. X represents C₁₋₆ alkylene, C₂₋₆ alkenylene, arylene that is unsubstituted or substituted with C₁₋₆ alkyl, or heteroarylene that is unsubstituted or substituted with C₁₋₆ alkyl. Each of Y₁, Y₂, and Y₃ independently represents O or a single C-C bond. Each of n₁, n₂, and n₃ independently represents an integer number between 0 and 10. Each of a and b represents an integer number of 1, and c represents an integer number of 0 or 1. Herein, reference to an arylene or heteroarylene that is unsubstituted indicates that the only substituents, if any, are substituents that include one or more nitrile groups.

In some embodiments, preferred nitrile compounds may be represented by Formula 1, in which c represents 1. In such nitrile compounds, in some designs, three nitrile groups are present (a=b=c=1). Generally, nitrile compounds that have three nitrile groups are often referred to as "trinitrile" compounds.

In some embodiments, preferred nitrile compounds may be represented by Formula 1, in which c represents 1, X represents C₁₋₆ alkylene, each of Y₁, Y₂, and Y₃ represents O, each of n₁, n₂, and n₃ represents 2, and each of R₁, R₂, R₃, R₄, R₅, and R₆ represents hydrogen. One illustrative (and, in some designs, preferred) example among these preferred nitrile compounds is 3-{[1,3-bis(2-cyanoethoxy)propan-2-yl]oxy} propanenitrile (**nitrile compound 1,** shown as structure 622 in FIG. 9). Nitrile compound 1 is a trinitrile compound. Each of the nitrile groups in nitrile compound 1 is part of a respective cyanoalkoxy chain. The three cyanoalkoxy chains are connected at one common carbon (C) atom. In each of the cyanoalkoxy chains, the nitrile group and the oxygen (O) are separated by two carbons.

In some aspects not belonging to the invention, nitrile compounds may be represented by Formula 1, in which c represents 1, X represents C₁₋₆ alkylene, each of Y₁, Y₂, and Y₃ represents a single C-C bond, and each of n₁, n₂, and n₃ represents 0. One illustrative example among these preferred nitrile compounds is 1,3,6-hexanetricarbonitrile (sometimes abbreviated as HTCN) (**nitrile compound 2,** shown as structure 646 in FIG. 11). Nitrile compound 2 is a trinitrile compound. Each of the nitrile groups in nitrile compound 2 is part of a respective cyanoalkyl chain. The three cyanoalkyl chains are connected at one common carbon (C) atom.

In some embodiments, preferred nitrile compounds may be represented by Formula 1, in which c represents 0. In such nitrile compounds, two nitrile groups are present (a=b=1, c=0). Generally, nitrile compounds that have two nitrile groups are often referred to as "dinitrile" compounds.

In some aspects not belonging to the invention, nitrile compounds may be represented by Formula 1, in which c represents 0, X represents C₁₋₆ alkylene, each of Y₁ and Y₂ represents a single C-C bond, and each of n₁ and n₂ represents 0. One illustrative example among these preferred nitrile compounds is 1,5-dicyanopentane (**nitrile compound 3,** shown as structure 608 in FIG. 7). Another illustrative example among these preferred nitrile compounds is adiponitrile (sometimes abbreviated as ADN) (**nitrile compound 9,** shown as structure 644 in FIG. 11).

In some aspects not belonging to the invention, nitrile compounds may be represented by Formula 1, in which c represents 0, X represents C₁₋₆ alkylene, each of Y₁ and Y₂ represents a single C-C bond, each of n₁ and n₂ represents 2, each of R₁, R₂, R₃, and R₄ represents hydrogen. One illustrative example among these preferred nitrile compounds is 4,4-dimethylheptanedinitrile (**nitrile compound 4,** shown as structure 610 in FIG. 7).

In some aspects not belonging to the invention, nitrile compounds may be represented by Formula 1, in which c represents 0, X represents C₁₋₆ alkylene, each of Y₁ and Y₂ represents a single C-C bond, n₁ represents 1, R₁ and R₂ taken together (R₁+R₂) represents C₃₋₆ cycloalkyl, and n₂ represents 0. One illustrative example among these preferred nitrile compounds is 1-(cyanomethyl)cyclopropane-1-carbonitrile (**nitrile compound 5,** shown as structure 616 in FIG. 8).

In some aspects not belonging to the invention, nitrile compounds may be represented by Formula 1, in which c represents 0, X represents C₂₋₆ alkenylene, each of Y₁ and Y₂ represents a single C-C bond, and each of n₁ and n₂ represents 0. One illustrative example among these preferred nitrile compounds is trans-1,4-dicyano-2-butene (**nitrile compound 6,** shown as structure 618 in FIG. 8).

In some aspects not belonging to the invention, nitrile compounds may be represented by Formula 1, in which c represents 0, X represents C₁₋₆ alkylene, Y₁ represents O, Y₂ represents a single C-C bond, n₁ represents 2, n₂ represents 0, and each of R₁ and R₂ represents hydrogen. One illustrative example among these preferred nitrile compounds is 3-(2-cyanoethoxy)propanenitrile (**nitrile compound 7,** shown as structure 620 in FIG. 8).

In some aspects not belonging to the invention, nitrile compounds may be represented by Formula 1, in which c represents 0, X represents heteroarylene that is unsubstituted or substituted with C₁₋₆ alkyl, each of Y₁ and Y₂ represents a single C-C bond, and each of n₁ and n₂ represents 0. One illustrative example among these preferred nitrile compounds is 1-(propan-2-yl)-1H-imidazole-4,5-dicarbonitrile (**nitrile compound 8,** shown as structure 630 in FIG. 9). Nitrile compound 8 is an example in which X represents heteroarylene substituted with C₁₋₆ alkyl (in this case, the heteroarylene is imidazole). Another illustrative example among these preferred nitrile compounds is pyridine-2,6-dicarbonitrile (**nitrile compound 10,** shown as structure 634 in FIG. 10). Nitrile compound 10 is an example in which X represents heteroarylene that is unsubstituted (in this case, the heteroarylene is pyridine).

In some embodiments, preferred nitrile compounds may be represented by Formula 1, in which c represents 1, X represents C₁₋₆ alkylene, each of Y₁, Y₂, and Y₃ represents O, each of n₁, n₂, and n₃ represents 2, and each of R₁, R₂, R₃, R₄, R₅, and R₆ represents hydrogen. One illustrative (and, in some designs, preferred) example among these preferred nitrile compounds is nitrile compound 1, as explained above. Another illustrative (and, in some designs, preferred) example among these preferred nitrile compounds is 3-{[1,6-bis(2-cyanoethoxy)hexan-2-yl]oxy}propanenitrile (**nitrile compound 11,** shown as structure 672 in FIG. 13). Yet another illustrative (and, in some designs, preferred) example among these preferred nitrile compounds is 3-[3,4-bis-(2-cyano-ethoxy)-butoxy]-propionitrile (**nitrile compound 12,** shown as structure 674 in FIG. 13). Yet another illustrative (and, in some designs, preferred) example among these preferred nitrile compounds is 3,3'-((2-((2-cyanoethoxy)methyl)-2-methylpropane-1,3-diyl)bis(oxy))dipropanenitrile (**nitrile compound 13,** shown as structure 676 in FIG. 13). Nitrile compound 1, nitrile compound 11, nitrile compound 12, and nitrile compound 13 are trinitrile compounds. Each of the nitrile groups in nitrile compounds 1, 11, 12, and 13 is part of a respective cyanoalkoxy chain. For each nitrile compound (1, 11, 12, or 13), the three cyanoalkoxy chains are connected at one common carbon (C) atom. In each of the cyanoalkoxy chains, the nitrile group and the oxygen (O) are separated by two carbons.

In some implementations, it is possible to achieve a suitable combination of oxidative stability, reductive stability, steric bulk, dipole moment, electron donicity, and/or chain length by using a mixture of more than one nitrile compound in a nitrile additive composition (NAC). In some implementations, preferred mixtures may use one or more of the following nitrile compounds as constituents: 1,5-dicyanopentane, 4,4-dimethylheptanedinitrile, 1-(cyanomethyl)cyclopropane-1-carbonitrile, trans-1,4-dicyano-2-butene, 3-(2-cyanoethoxy)propanenitrile, 3-{[1,3-bis(2-cyanoethoxy)propan-2-yl]oxy}propanenitrile, 1-(propan-2-yl)-1H-imidazole-4,5-dicarbonitrile, pyridine-2,6-dicarbonitrile, adiponitrile, 1,3,6-hexanetricarbonitrile, 3-{[1,6-bis(2-cyanoethoxy)hexan-2-yl]oxy}propanenitrile, 3-[3,4-bis-(2-cyano-ethoxy)-butoxy]-propionitrile, and 3,3'-((2-((2-cyanoethoxy)methyl)-2-methylpropane-1,3-diyl)bis(oxy))dipropanenitrile.

A measurement of the amount (e.g., concentration) of residual vinylene carbonate (VC) after the high-temperature storage treatment under a high state-of-charge (SOC) constitutes a metric for the high-temperature outgassing test. A concentration of the VC in the electrolyte filled in the cell before the high-temperature storage treatment under a high state-of-charge (SOC) is determined. In a specific example, the concentration of VC remaining in the electrolyte (residual VC) measured 1 h after the cell has been cooled to 25 °C after the high-temperature storage treatment under a high state-of-charge (SOC) is compared to the initial VC concentration in the electrolyte filled in the cell before the high-temperature storage treatment under a high state-of-charge (SOC). In some implementations, the amount (e.g., concentration) of residual VC in the electrolyte preferably exceeds about 3% of the initial amount (e.g., concentration) of VC filled in the cell. In some implementations, the amount (e.g., concentration) of residual VC in the electrolyte preferably exceeds about 6% of the initial amount (e.g., concentration) of VC filled in the cell. In some implementations, the amount (e.g., concentration) of residual VC in the electrolyte preferably exceeds about 10% of the initial amount (e.g., concentration) of VC filled in the cell. In some implementations, the amount (e.g., concentration) of residual VC in the electrolyte is preferably in a range of about 0 % to about 25 % of the initial amount (e.g., concentration) of VC filled in the cell.

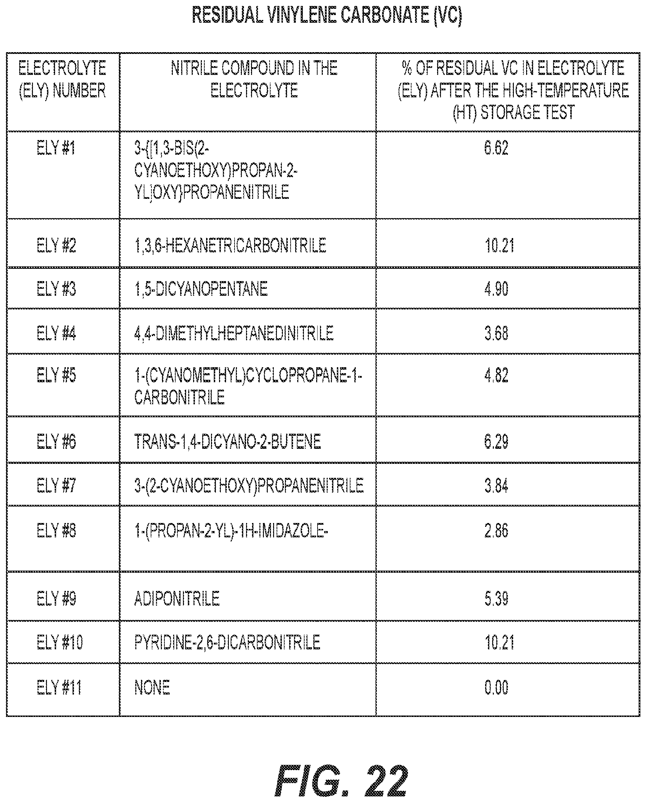

Dinitrile compound **1,5-dicyanopentane** (nitrile compound 3) features extra methylene groups in its structure compared to some other smaller nitrile compounds. In some implementations, the presence of nitrile compound 3 in a Li-ion battery electrolyte may contribute to reducing thickness changes of cells resulting from a high-temperature (HT) storage treatment under a high state-of-charge (SOC). In some implementations, the presence of the nitrile compound 3 in a Li-ion battery electrolyte may beneficially result in the formation of less resistive SEI films as compared to some other dinitrile compounds. In some implementations, the presence of the nitrile compound 3 in Li-ion battery electrolyte may advantageously yield higher levels of residual and recoverable capacities as compared to some other dinitrile compounds. In some implementations, nitrile compound 3 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. Measurement results of residual VC for some illustrative electrolytes containing selected nitrile compounds are reported in Table 9 shown in FIG. 22. In the experimental examples described herein, the HT storage treatment is conducted at 72 °C for 60 h.

Dinitrile compound **4,4-dimethylheptanedinitrile** (nitrile compound 4) features sterically bulky methyl groups attached to the aliphatic chain of methylene groups. In some implementations, nitrile compound 4 may be used in a nitrile additive composition to contribute to high levels of recoverable capacity, which may be higher than for other dinitrile compounds. In some implementations, the presence of nitrile compound 4 in a Li-ion battery electrolyte may beneficially result in the formation of less resistive SEI films as compared to some other dinitriles. In some implementations, nitrile compound 4 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Dinitrile compound **1-(cyanomethyl)cyclopropane-1-carbonitrile** (nitrile compound 5) features a sterically bulky substituent (cyclopropane ring in this case). In some implementations, nitrile compound 5 may be used in a nitrile additive composition of a Li-ion battery electrolyte to attain high levels of residual and recoverable capacities as well as to form less electronically insulating SEI films as compared to some other dinitriles. In some implementations, nitrile compound 5 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Dinitrile compound **trans-1,4-dicyano-2-butene** (nitrile compound 6) features a carbon-carbon double bond in its structure. In some implementations, nitrile compound 6 may be used in a nitrile additive composition of a Li-ion battery electrolyte to attain high levels of residual and recoverable capacities as well as to form less electronically insulating SEI films as compared to some other dinitriles. In some implementations, the presence of nitrile compound 6 in a Li-ion battery electrolyte may contribute to reducing thickness changes of cells resulting from a HT storage treatment under a high state-of-charge (SOC). In some implementations, nitrile compound 6 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Dinitrile compound **3-(2-cyanoethoxy)propanenitrile** (nitrile compound 7) features an oxygen (O) atom in the aliphatic chain of methylene groups. In some implementations, nitrile compound 7 may be used in a nitrile additive composition of a Li-ion battery electrolyte to attain high levels of residual and recoverable capacities. In some implementations, the presence of nitrile compound 7 in a Li-ion battery electrolyte may contribute to reducing thickness changes of the cells resulting from a HT storage treatment under a high state-of-charge (SOC). In some implementations, nitrile compound 7 may be beneficial in reducing an open circuit voltage change (voltage decay) of the cells during a HT storage treatment under a high state-of-charge (SOC) as compared to some other dinitriles or some trinitriles. In some implementations, nitrile compound 7 may be advantageously used to decrease the decomposition of VC at elevated temperatures. In some examples, the amount of residual VC in the electrolyte (ELY) after the HT storage treatment under a high state-of-charge (SOC) my preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Trinitrile compound **3-{[1,3-bis(2-cyanoethoxy)propan-2-yl]oxy} propanenitrile** (nitrile compound 1) features O atoms in the aliphatic chain of methylene groups. In some implementations, nitrile compound 1 may be used in a nitrile additive composition of a Li-ion battery electrolyte to attain high levels of residual and recoverable capacities as well as to form less electronically insulating SEI films as compared to some dinitriles and some other trinitriles. In some implementations, the presence of nitrile compound 1 in a Li-ion battery electrolyte may contribute to reducing thickness changes of the cells resulting from a HT storage treatment under a high state-of-charge (SOC). In some implementations, nitrile compound 1 may be beneficial in reducing an open circuit voltage change (voltage decay) of the cells during a HT storage treatment under a high state-of-charge (SOC) as compared to some dinitriles or some other trinitriles. In some implementations, nitrile compound 1 may be advantageously used to decrease the decomposition of VC at elevated temperatures. In some examples, the amount of residual VC in the electrolyte (ELY) after the HT storage treatment under a high state-of-charge (SOC) is preferably in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Dinitrile compound **1-(propan-2-yl)-1H-imidazole-4,5-dicarbonitrile** (nitrile compound 8) contains an imidazole group and nitrile groups attached at the 4 and 5 positions of the imidazole group. In some implementations, nitrile compound 8 may be used in a nitrile additive composition of a Li-ion battery electrolyte to boost (increase) the recoverable capacity as compared to some other dinitriles or trinitriles. In some implementations, nitrile compound 8 may be beneficial in reducing an open circuit voltage change (voltage decay) of the cells during a HT storage treatment under a high state-of-charge (SOC) as compared to some other dinitriles or some trinitriles. In some implementations, nitrile compound 8 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Dinitrile compound **pyridine-2,6-dicarbonitrile** (nitrile compound 10) contains a pyridine group and nitrile groups attached at the 2 and 6 positions of the pyridine group. In some implementations, nitrile compound 10 may be used in a nitrile additive composition of a Li-ion battery electrolyte to boost (increased) the recoverable capacity as compared to some other dinitriles or some trinitriles. In some implementations, nitrile compound 10 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 5 % to about 15 % of the initial amount of VC in the electrolyte as filled in the cells. In the experimental examples described herein, the HT storage treatment is conducted at 72 °C for 60 h.

In some implementations, trinitrile compound **1,3,6-hexanetricarbonitrile** (nitrile compound 2) may be used in a nitrile additive composition of a Li-ion battery electrolyte to attain high levels of residual and recoverable capacities as well as to form less electronically insulating SEI films as compared to some dinitriles or some other trinitriles. In some implementations, the presence of nitrile compound 2 in a Li-ion battery electrolyte may contribute to reducing thickness changes of the cells resulting from a HT storage treatment under a high state-of-charge (SOC). In some implementations, nitrile compound 2 may be beneficial in reducing an open circuit voltage change (voltage decay) of the cells during a HT storage treatment under a high state-of-charge (SOC) as compared to some dinitriles or some other trinitriles. In some implementations, nitrile compound 2 may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 4 % to about 15 % of the initial amount of VC in the electrolyte as filled in the cells. In the experimental examples described herein, the HT storage treatment is conducted at 72 °C for 60 h.

In some implementations, dinitrile compound **adiponitrile** (nitrile compound 9) may be used in a nitrile additive composition of a Li-ion battery electrolyte to attain high levels of residual and recoverable capacities. In some implementations, the presence of adiponitrile in a Li-ion battery electrolyte can contribute to reducing thickness changes of the cells resulting from a HT storage treatment under a high state-of-charge (SOC). In some implementations, adiponitrile may be beneficial in reducing a voltage change (voltage decay) of the cells during a HT storage treatment under a high state-of-charge (SOC) as compared to some other dinitriles or some trinitriles. In some implementations, adiponitrile may be advantageously used to decrease the decomposition of VC at elevated temperatures. In some examples, the amount of residual VC in the electrolyte (ELY) after the HT storage treatment under a high state-of-charge (SOC) may preferably be in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Trinitrile compound 3-{[1,6-bis(2-cyanoethoxy)hexan-2-yl]oxy}propanenitrile (nitrile compound 11) features O atoms in the aliphatic chain of methylene groups. In some implementations, nitrile compound 11 may be used in a nitrile additive composition of a Li-ion battery electrolyte to attain high levels of residual and recoverable capacities as well as to form less electronically insulating SEI films as compared to some dinitriles and some other trinitriles. In some implementations, the presence of nitrile compound 11 in a Li-ion battery electrolyte may contribute to reducing thickness changes of the cells resulting from a HT storage treatment under a high state-of-charge (SOC). In some implementations, nitrile compound 11 may be beneficial in reducing an open circuit voltage change (voltage decay) of the cells during a HT storage treatment under a high state-of-charge (SOC) as compared to some dinitriles or some other trinitriles. In some implementations, nitrile compound 11 may be advantageously used to decrease the decomposition of VC at elevated temperatures. In some examples, the amount of residual VC in the electrolyte (ELY) after the HT storage treatment under a high state-of-charge (SOC) is preferably in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Trinitrile compound 3-[3,4-bis-(2-cyano-ethoxy)-butoxy]-propionitrile (nitrile compound 12) features O atoms in the aliphatic chain of methylene groups. In some implementations, (nitrile compound 12) may be used in a nitrile additive composition of a Li-ion battery electrolyte to attain high levels of residual and recoverable capacities as well as to form less electronically insulating SEI films as compared to some dinitriles and some other trinitriles. In some implementations, the presence of nitrile compound 12 in a Li-ion battery electrolyte may contribute to reducing thickness changes of the cells resulting from a HT storage treatment under a high state-of-charge (SOC). In some implementations, nitrile compound 12 may be beneficial in reducing an open circuit voltage change (voltage decay) of the cells during a HT storage treatment under a high state-of-charge (SOC) as compared to some dinitriles or some other trinitriles. In some implementations, nitrile compound 12 may be advantageously used to decrease the decomposition of VC at elevated temperatures. In some examples, the amount of residual VC in the electrolyte (ELY) after the HT storage treatment under a high state-of-charge (SOC) is preferably in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

Trinitrile compound 3,3'-((2-((2-cyanoethoxy)methyl)-2-methylpropane-1,3-diyl)bis(oxy))dipropanenitrile (nitrile compound 13) features O atoms in the aliphatic chain of methylene groups. In some implementations, nitrile compound 13 may be used in a nitrile additive composition of a Li-ion battery electrolyte to attain high levels of residual and recoverable capacities as well as to form less electronically insulating SEI films as compared to some dinitriles and some other trinitriles. In some implementations, the presence of nitrile compound 13 in a Li-ion battery electrolyte may contribute to reducing thickness changes of the cells resulting from a HT storage treatment under a high state-of-charge (SOC). In some implementations, nitrile compound 13 may be beneficial in reducing an open circuit voltage change (voltage decay) of the cells during a HT storage treatment under a high state-of-charge (SOC) as compared to some dinitriles or some other trinitriles. In some implementations, nitrile compound 13 may be advantageously used to decrease the decomposition of VC at elevated temperatures. In some examples, the amount of residual VC in the electrolyte (ELY) after the HT storage treatment under a high state-of-charge (SOC) is preferably in a range of about 0 % to about 25 % of the initial amount of VC in the electrolyte as filled in the cells. In some examples, the amount of residual VC in the ELY after the HT storage treatment under a high state-of-charge (SOC) may preferably be in a range of about 2 % to about 10 % of the initial amount of VC in the electrolyte as filled in the cells. In the experimental examples described herein, the HT storage treatment is conducted at 72 °C for 60 h.

In some implementations, nitrile additives may be advantageously used to reduce HT outgassing, which may be due to one or more of: (a) irreversible capacity loss on the cathode, such as transition metal dissolution, (b) irreversible capacity loss on the anode, such as SEI formation, and (c) reversible capacity loss on the cathode, such as electrolyte oxidation. In some implementations, a combination of one or more dinitriles and one or more trinitriles in the nitrile additive composition may be employed to reduce HT outgassing. In some implementations, some trinitriles may be more effective than some dinitriles to reduce outgassing. Here, a decrease in outgassing may be due to reduced parasitic degradation of cathode and anode during the storage tests (e.g., high-temperature storage testing). Some examples of parasitic cathode degradation are transition metal dissolution and electrolyte decomposition. One example of parasitic anode degradation is SEI formation, which may lead to increased cell resistance. The trinitrile compounds considered herein, being bulkier and more sterically robust than the dinitrile compounds, may be prone to oxidation and reduction on the cathode and anode surfaces, thereby promoting efficient build-up of efficient SEI and CEI and preventing or reducing the occurrence of parasitic degradation processes described above. On the other hand, some of the properties of trinitriles may be less advantageous for low-temperature performance, where the anode charge-transfer resistance should be minimized or decreased as much as possible. Accordingly, to obtain a balance of preferred properties, it may be preferable to employ one or more dinitrile compounds or a mixture of one or more dinitriles and one or more trinitriles in the nitrile additive composition of the electrolyte. Some of the properties of trinitriles, such as low oxidation and high reduction potentials, may be advantageously utilized to efficiently build stable CEI and SEI at high temperatures, which may be advantageous for HT cycling and fast-charge applications.

In some implementations, nitrile additives may be used in ester-based electrolyte formulations (containing FEC and VC in addition to ester co-solvents) with greater beneficial effects than in carbonate-based formulations, which feature EC (a non-fluorinated cyclic carbonate), linear carbonates (e.g., DMC, EMC, or DEC), FEC, and VC. In some designs, the presence of EC in carbonate-based electrolyte formulations results in the shielding of Li-ion from the coordination with the nitrile additive, which leads to decreased presence of the nitrile additive or its decomposition products in the anode solid-electrolyte interface (SEI), which turn is less advantageous for mitigation of HT outgassing. As a result, in some designs, the severe reductive decomposition of linear carbonates accompanied by the formation of gaseous products (e.g., hydrogen, methane, ethane, ethylene and propane) occurs. Similarly, in some designs, the presence of EC in a carbonate-based electrolyte formulation results in shielding of transition metal ions from the coordination with the nitrile additive, which leads to decreased presence of the nitrile additive or its decomposition products on the cathode surface. The inventors have found that, in certain circumstances, the nitriles can coordinate to the surfaces of metal ions, thereby decreasing the surface area of unprotected cathode material. This coordination effect, which also occurs at elevated temperatures, leads to decreased transition metal dissolution, decreased parasitic degradation and oxidation of electrolyte components, and ultimately reduced HT outgassing. The aforementioned shielding effect of the cathode surface is more pronounced in ester-based formulations which contain no EC. Additionally, the EC and other linear carbonate decomposition products at high potentials, such as Li₂O and Li₂CO₃, can inhibit the effect of nitriles, but may additionally stabilize the cathode surface for fast-charge and high-temperature (HT) cycling applications. The inventors have found that under certain circumstances a combination of EC and nitrile additive composition in an electrolyte may be employed to synergistically improve HT cycling, reduce HT outgassing, and improve fast-charge performance.

In one or more embodiments of the present disclosure, the combination of suitable anode and cathode surface protection to decrease high-temperature (HT) outgassing may be designed by using a single nitrile or a mixture of nitriles with branched esters. In a specific example, the branched ester can be chosen from one of the branched esters, such as ethyl isobutyrate, methyl isobutyrate, ethyl trimethyl acetate, ethyl isovalerate, methyl trimethyl acetate, methyl isovalerate, methyl 2-methyl butyrate, ethyl 2-methyl butyrate, to name a few.

In one or more embodiments of the present disclosure, the combination of suitable anode and cathode surface protection to decrease high-temperature (HT) outgassing may be designed by using a single nitrile or a mixture of nitriles with additive Li salt(s). In a specific example, the additive Li salt(s) may be chosen from lithium difluorophosphate (LiPO₂F₂ or LFO), lithium tetrafluoroborate (LiBF₄), lithium fluorosulfate (LiSO₃F), lithium bis(fluorosulfonyl)imide (LiFSI), and lithium difluoro(oxalato)borate (LiDFOB), to name a few. In some implementations, a mole fraction of additive salts (AS) in the electrolyte may preferably be in a range of approximately 0.1 mol. % to approximately 2.5 mol. %. In some implementations, there may be a tendency for an undesired reduction of cycle life when the mole fraction of additive salts (AS) in the electrolyte is greater than approximately 2.5 mol. %.

In one or more embodiments of the present disclosure, a preferred electrolyte for a lithium-ion battery may include lithium difluorophosphate (LFO). In some designs, this additive salt tends to reduce charge transfer resistance (Rct) at room, low and/or elevated temperatures. Reduction of Rct contributes to increasing the discharge voltage and improving low-temperature performance. In some cell designs, LFO may be particularly effective in simultaneously reducing Rct at the anode and cathode and improving the discharge voltage of a battery cell both at room temperature and at a high (e.g., elevated) temperature. In some implementations, LFO contributes to mitigation of high-temperature outgassing with NMC-based cathodes.

In one or more embodiments of the present disclosure, Li metal or Li-ion battery cells may employ electrolytes that include: (1) a nitrile additive composition that includes a suitable amount of a selected nitrile compound or a suitable amount of a mixture of selected nitrile compounds or (2) a mixture of the nitrile additive composition with selected branched esters, which may provide multiple benefits to Li or Li-ion batteries, particularly those that comprise a subclass of high-capacity, moderate volume changing anodes comprising from about 5 to about 100 wt. % of (nano)composite anode powders (as a fraction of all particles that include active materials), wherein such (nano)composite anode powders exhibit moderately high volume changes during the first charge-discharge cycle, moderate volume changes during the subsequent charge-discharge cycles, an average size (e.g., average diameter) in the range from about 0.2 to about 40 microns and specific surface area in the range from about 0.5 to about 50 m²/g and, in the case of Si-comprising (nano)composite anode powders, specific reversible capacities in the range from about 800 to about 3000 mAh/g (when normalized by the mass of the composite anode particles only) or with the corresponding anode specific reversible capacities being in the range from about 400 to about 2800 mAh/g (when normalized by the total mass of all the active electrode particles, conductive additives and binders). In some designs (e.g., depending on cell chemistry, loading, operating conditions and/or other factors), suitable branched esters or related compounds (or their mixtures) may be added at the additive level (from about 0.1 mol. % to about 5-10 mol. %) or as a main solvent/co-solvent level (from about 30 mol. % to about 80 mol. %) for attaining substantial benefits.

Examples of such benefits may include one or more of the following: (i) improving high-temperature storage stability (e.g., retaining higher reversible capacity after about 1h to about 10 years of storage at elevated temperatures (e.g., about 40-80 °C) at high state of charge (SOC) (e.g., SOC of about 70-100 %) or reducing gas generation after storage or cycling at elevated temperatures); (ii) reducing gas generation during storage or cycling at room or low temperatures; (iii) reducing or minimizing cell swelling (or built-in stresses in cells) at the end of life (e.g., after about 20 - 80% of the initial capacity retention); (iv) improving cycling stability when used at various (e.g., different) temperature conditions; (v) reducing or minimizing impedance growth during cycling; (vi) reducing or minimizing formation of undesirable (harmful) by-products during battery cell operation, among others; (vii) reducing carbon monoxide generation on the cathode and anode; (viii) reducing carbon dioxide generation on the cathode and anode; (ix) reducing hydrogen generation on the anode, (x) reducing methane generation on the anode; (xi) reducing C2-hydrocarbon generation on the anode, (xii) reducing C3-hydrocarbon generation on the anode.

Some of such benefits may stem from the formation of more favorable or more robust cathode/electrolyte interphase (CEI) film that may, for example, help to reduce or minimize electrolyte oxidation on the cathode with the formation of gaseous species or help to reduce or minimize cathode dissolution or other unfavorable/undesirable interactions between the cathode and liquid electrolyte in a Li or Li-ion battery. In some implementations (for example, in case of employing an electrolyte that contains: (1) a nitrile additive composition that includes a suitable amount of a selected nitrile compound or a suitable amount of a mixture of selected nitrile compounds or (2) a mixture of the nitrile additive composition with selected branched esters (such as ethyl isobutyrate, ethyl trimethylacetate, and/or other suitable esters with two or three aliphatic carbons attached at the alpha or beta position to the carboxyl group)), a more robust CEI film formation may be related to having a stronger adhesion to the cathode surface. Some of such benefits may also stem from the formation of more favorable or more robust solid electrolyte interphase (SEI) film on the anode (or, for example, from helping to maintain a more stable anode SEI). In some designs, improved SEI stability may be related to the dramatically reduced diffusion of suitable branched esters and related compounds through the SEI, which may prevent or greatly reduce or minimize their reduction as well as other electrolyte components on the anode surface, particularly at elevated temperatures. In some designs, improved SEI stability may be related to the reduced ability to form gaseous species upon electrolyte reduction. In some designs, improved SEI stability may be related to the reduced ability to form more elastically or plastically deformable (in the electrolyte) SEI or, for example, less resistive SEI. Such improved SEI stability or properties may, for example, help reduce or minimize electrolyte reduction on the anode (with the associated undesirable irreversible losses of cyclable Li or with the undesirable formation of gaseous species or undesirable anode swelling, etc.) or may help to reduce or minimize anode dissolution or other unfavorable/undesirable interactions between the anode and liquid electrolyte in a Li or Li-ion battery, which may lead to impedance growth or gas generation or other undesirable processes or performance degradations in cells. Some of such benefits may stem from the reduction in elastic modulus of the electrode binders upon exposure of electrodes to electrolytes during cell formation or cell operation (cycling). In some designs, it may be preferable to select an electrolyte composition based on some suitable nitriles, or suitable nitrile mixtures or suitable mixtures of nitriles with branched esters, such as ethyl isobutyrate or other suitable esters with two or three aliphatic carbons in alpha or beta position to carboxyl group and others) where the binder in at least one of the electrodes does not reduce its elastic modulus by over about 30 vol. % (e.g., more preferably in some designs, by over about 10 vol. %) when exposed to electrolyte.

In some designs, employing an electrolyte that contains: (1) a nitrile additive composition that includes a suitable amount of a selected nitrile compound or a suitable amount of a mixture of selected nitrile compounds or (2) a mixture of the nitrile additive composition with selected branched esters (such as ethyl isobutyrate, ethyl trimethylacetate, and/or other suitable esters with two or three aliphatic carbons attached at the alpha or beta position to the carboxyl group) in a Li or Li-ion battery cell may offer greatly increased FEC or VC presence in the Li-ion solvation shell.

In some designs, employing an electrolyte that contains: (1) a nitrile additive composition that includes a suitable amount of a selected nitrile compound or a suitable amount of a mixture of selected nitrile compounds or (2) a mixture of the nitrile additive composition with selected branched esters (such as ethyl isobutyrate, ethyl trimethylacetate, and/or other suitable esters with two or three aliphatic carbons attached at the alpha or beta position to the carboxyl group) in a Li-ion battery cell may offer greatly reduced gassing on the anode surface (including, but not limited to the case of Li plating on the anode surface). In some designs, branched esters with two or three alkyl groups in the alpha position to the carboxyl group of the branched ester may offer particularly improved performance. In some designs, branched esters with two or three alkyl groups in the alpha position to carboxyl group of the branched ester may offer reduced rates of hydrogen, methane, ethane, ethylene, propene, propane, butane and/or butene formation on the anode.

In some designs, employing an electrolyte that contains: (1) a nitrile additive composition that includes a suitable amount of a selected nitrile compound or a suitable amount of a mixture of selected nitrile compounds or (2) a mixture of the nitrile additive composition with selected branched esters (such as ethyl isobutyrate, ethyl trimethylacetate, and/or other suitable esters with two or three aliphatic carbons attached at the alpha or beta position to the carboxyl group) in a Li-ion battery cell may mitigate parasitic (highly undesirable) degradation of common SEI "builders" (such as fluoroethylene carbonate (FEC), vinylene carbonate (VC), ethylene carbonate (EC), among others) present in the electrolyte due to the reduced rate of the alkoxide formation. In some designs, esters with two or three alkyl groups in the alpha position to carboxyl group of the ester may offer particularly improved performance due to the steric bulk of esters and reduced rate of the alkoxide formation.

In some designs, employing an electrolyte that contains: (1) a nitrile additive composition that includes a suitable amount of a selected nitrile compound or a suitable amount of a mixture of selected nitrile compounds or (2) a mixture of the nitrile additive composition with selected branched esters (such as ethyl isobutyrate, ethyl trimethylacetate, and/or other suitable esters with two or three aliphatic carbons attached at the alpha or beta position to the carboxyl group) in a Li-ion battery cell may reduce or completely eliminate the undesirable formation of enol form of the corresponding ester (or reduce the formation of tautomeric enol form) (e.g., by shifting the equilibrium towards the ester). In some designs, by reducing or avoiding the enol presence in the electrolyte, the parasitic degradation of Li salt(s) (e.g., lithium hexafluorophosphate (LiPF₆)) or other electrolyte components by, for example, alcoholysis could be greatly reduced or minimized. Similarly, in some designs, formation of hydrofluoric acid (HF) or other undesirable by-products of, e.g., LiPF₆ alcoholysis, could be greatly reduced or minimized.

In one illustrative example, a consumer Li-ion battery cell (Li-ion battery cell for use in consumer electronics products) with capacity of about 0.175 Ah may comprise: (i) an anode with Si-based nanocomposite active material (in this example, with specific reversible capacity of about 1520 mAh/g when normalized by the weight of active materials in the anode) casted on Cu current collector foil from a suspension comprising a poly(vinyl alcohol) (PVA) - N-methylpyrrolidone (NMP)-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #1 comprising: about 10.88 mol. % of LiPF₆, about 24.80 mol. % of FEC, about 2.87 mol. % of VC, about 60.82 mol. % of ethyl propionate (ester), about 0.45 mol. % of lithium difluorophosphate (LFO), and about 0.18 mol. % of 3-{[1,3-bis(2-cyanoethoxy)propan-2-yl]oxy}propanenitrile (**nitrile compound 1**). Hereinbelow, particular electrolyte formulations may be denoted as ELY followed by a number (e.g., ELY #1, ELY #2, etc.).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from as suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #2 comprising: about 10.87 mol. % of LiPF₆, about 24.78 mol. % of FEC, about 2.86 mol. % of VC, about 60.76 mol. % of ethyl propionate (ester), about 0.45 mol. % of lithium difluorophosphate (LFO), and about 0.28 mol. % of 1,3,6-hexanetricarbonitrile **(nitrile compound 2**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #3 comprising: about 10.86 mol. % of LiPF₆, about 24.76 mol. % of FEC, about 2.86 mol. % of VC, about 60.71 mol. % of ethyl propionate (ester), about 0.45 mol. % of lithium difluorophosphate (LFO), and about 0.37 mol. % of 1,5-dicyanopentane **(nitrile compound 3**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #4 comprising: about 10.87 mol. % of LiPF₆, about 24.77 mol. % of FEC, about 2.86 mol. % of VC, about 60.75 mol. % of ethyl propionate (ester), about 0.45 mol. % of lithium difluorophosphate (LFO), and about 0.30 mol. % of 4,4-dimethylheptanedinitrile **(nitrile compound 4**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #5 comprising: about 10.85 mol. % of LiPF₆, about 24.74 mol. % of FEC, about 2.86 mol. % of VC, about 60.67 mol. % of ethyl propionate (ester), about 0.45 mol. % of lithium difluorophosphate (LFO), and about 0.43 mol. % of 1-(cyanomethyl)cyclopropane-1-carbonitrile (**nitrile compound 5**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #6 comprising: about 10.85 mol. % of LiPF₆, about 24.74 mol. % of FEC, about 2.86 mol. % of VC, about 60.67 mol. % of ethyl propionate (ester), about 0.45 mol. % of lithium difluorophosphate (LFO), and about 0.43 mol. % of trans-1,4-dicyano-2-butene (**nitrile compound 6**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #7 comprising: about 10.86 mol. % of LiPF₆, about 24.76 mol. % of FEC, about 2.86 mol. % of VC, about 60.71 mol. % of ethyl propionate (ester), about 0.45 mol. % of lithium difluorophosphate (LFO), and about 0.36 mol. % of 3-(2-cyanoethoxy)propanenitrile (**nitrile compound 7**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #8 comprising: about 10.87 mol. % of LiPF₆, about 24.78 mol. % of FEC, about 2.67 mol. % of VC, about 60.76 mol. % of ethyl propionate (ester), about 0.45 mol. % of lithium difluorophosphate (LFO), and about 0.28 mol. % of 1-(propan-2-yl)-1H-imidazole-4,5-dicarbonitrile (**nitrile compound 8**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #9 comprising: about 10.85 mol. % of LiPF₆, about 24.74 mol. % of FEC, about 2.86 mol. % of VC, about 60.68 mol. % of ethyl propionate (ester), about 0.45 mol. % of lithium difluorophosphate (LFO), and about 0.42 mol. % of adiponitrile (**nitrile compound 9**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #10 comprising: about 10.86 mol. % of LiPF₆, about 24.76 mol. % of FEC, about 2.86 mol. % of VC, about 60.72 mol. % of ethyl propionate (ester), about 0.45 mol. % of lithium difluorophosphate (LFO), and about 0.35 mol. % of pyridine-2,6-dicarbonitrile (**nitrile compound 10**).

In another illustrative example, consumer Li-ion battery cell (Li-ion battery cell for use in consumer electronics products) with capacity of about 0.175 Ah may comprise: (i) an anode with Si-based nanocomposite active material (with specific reversible capacity of about 1520 mAh/g when normalized by the weight of active materials in the anode) casted on Cu current collector foil from a suspension comprising a PVA-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #11 comprising: about 10.90 mol. % of LiPF₆, about 24.85 mol. % of FEC, about 2.87 mol. % of VC, about 60.93 mol. % of ethyl propionate (ester), about 0.45 mol. % of lithium difluorophosphate (LFO). Accordingly, ELY #11 does not contain any nitrile compounds.

In another illustrative example, a Li-ion battery cell (Li-ion battery prototype cell for use in automotive traction applications) with a capacity of about 6Ah may comprise: (i) an anode with Si-based nanocomposite active material (with specific reversible capacity of about 1520 mAh/g when normalized by the weight of active materials in the anode) casted on Cu current collector foil from a suspension comprising a poly(acrylic acid) (PAA)-based binder and a carbon black conductive additive, (ii) a cathode with high-voltage NCM811 (LiNi_{0.8}Co_{0.1}Mn_{0.1}O₂) active material (with specific reversible capacity of about 201 mAh/g when normalized by the weight of active materials in the cathode) casted on Al current collector foil from an organic solvent suspension comprising a PVDF-based binder and a carbon black conductive additive, anode:cathode areal capacity ratio of about 1.1:1 and areal reversible capacity loading of about 3.6 mAh/cm², charge voltage of about 4.4 V, (iii) a polymer separator, and (iv) ELY #1 comprising about 0.18 mol. % of 3-{[1,3-bis(2-cyanoethoxy)propan-2-yl]oxy}propanenitrile (**nitrile compound 1**).

In another illustrative example, an automotive Li-ion battery cell with a capacity of about 40 Ah may comprise: (i) an anode with Si-based nanocomposite active material (with specific reversible capacity of about 1550 mAh/g when normalized by the weight of active materials in the anode) casted on Cu current collector foil from an aqueous suspension comprising a PAA-based binder and a carbon black conductive additive, (ii) a cathode with Ni-rich NCM active material (NCM811, (LiNi_{0.8}Co_{0.1}Mn_{0.1}O₂)) (with specific reversible capacity of about 200 mAh/g when normalized by the weight of active materials in the cathode) casted on Al current collector foil from an organic solvent suspension comprising a PVDF-based binder and a carbon black conductive additive, anode:cathode areal capacity ratio of about 1.1:1 and areal reversible capacity loading of about 4.4 mAh/cm², charge voltage of about 4.2 V, (iii) a polymer separator, and (iv) ELY #1 comprising about 0.18 mol. % of 3-{[1,3-bis(2-cyanoethoxy)propan-2-yl]oxy}propanenitrile (**nitrile compound 1**).

In another illustrative example, an automotive Li-ion battery cell with a capacity of about 80 Ah may comprise: (i) an anode with Si-based nanocomposite active material (with specific reversible capacity of about 1670 mAh/g when normalized by the weight of active materials in the anode) casted on Cu current collector foil from an aqueous suspension comprising a carboxymethyl cellulose/styrene-butadiene rubber (CMC/SBR)-based binder and a carbon nanotube conductive additive, (ii) a cathode with Ni-rich NCM active material (NCM811, (LiNi_{0.8}Co_{0.1}Mn_{0.1}O₂)) (with specific reversible capacity of about 200 mAh/g when normalized by the weight of active materials in the cathode) casted on Al current collector foil from an organic solvent suspension comprising a PVDF-based binder and a carbon black conductive additive, anode:cathode areal capacity ratio of about 1.1:1 and areal reversible capacity loading of about 4.6 mAh/cm², charge voltage of about 4.2 V, (iii) a polymer separator, and (iv) ELY #1 comprising about 0.18 mol. % of 3-{[1,3-bis(2-cyanoethoxy)propan-2-yl]oxy}propanenitrile (**nitrile compound 1**).

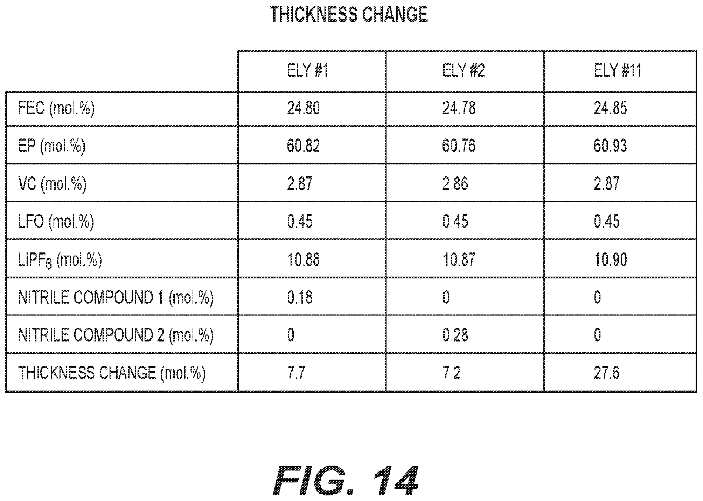

Li-ion battery test cells respectively comprising ELY #1, ELY #2, and ELY #11 (containing no nitrile additive composition) were tested for thickness change as follows. The test cells were fabricated, and an initial formation procedure was carried out on the test cells. The test cells were charged to a high state-of-charge and the initial cell thicknesses were measured. The cells were heated to a temperature of 72 °C and were maintained at a temperature of 72 °C for a period of 60 hours (high-temperature outgassing test). The test cells were then cooled to 25 °C and the final cell thicknesses were measured 1 hour after reaching 25 °C. The thickness change is expressed in %, as a difference between the final thickness and the initial thickness, divided by the initial thickness. Thickness change results are tabulated in the table (Table 1) shown in FIG. 14. The ELY #1 and ELY #2 samples exhibited thickness change of 7.7 % and 7.2 %, respectively, while the ELY #11 sample, which contains no nitrile additive composition, exhibited a thickness change of 27.6%.

ELY #1 and ELY #2 are electrolyte formulations containing nitrile additive compositions (NACs). ELY #1 contains **nitrile compound 1** (3-{[1,3-bis(2-cyanoethoxy)propan-2-yl]oxy}propanenitrile, 622) at approximately 0.18 mol. % of the electrolyte. ELY #2 contains **nitrile compound 2** (1, 3, 6-hexanetricarbonitrile, 646) at approximately 0.28 mol. % of the electrolyte. In some implementations, nitrile compound 1 and/or nitrile compound 2 can contribute to mitigating high-temperature outgassing. In these electrolyte examples, each nitrile additive composition contained one respective nitrile compound. In other implementations, a nitrile additive composition can include a mixture of multiple nitrile compounds. Some properties and characteristics of this and other selected nitrile compounds are shown in the table (Table 10) shown in FIGS. 23A, 23B. Table 10 lists the following information for each nitrile compound, if available: (1) nitrile compound number (1 through 10), if applicable, (2) identifier number of the molecular structures as shown in FIGS. 7 through 13, (3) nitrile compound name, (4) molecular formula, (5) number of nitrile groups in the compound, (6) number of carbon atoms along the shortest connection between two adjacent nitrile groups in a nitrile compound having two or more nitrile groups, herein referred to as a "Separation Parameter", (7) average mass (molecular weight) of the compound, (8) density, (9) boiling point, and (10) other selected structural feature. The entries relating to the average mass, density, and boiling point are readily available from various public sources, such as the web site http://www.chemspider.com/ at the time of the filing of the subject application. In the column for the Separation Parameter (6), an NA (or not applicable) entry indicates that the compound is a mononitrile compound.

Notably, nitrile compounds 1 and 2 are trinitrile compounds and have relatively high boiling points (about 492.4±45.0 °C for nitrile compound 1 and about 441.0±30.0 °C for nitrile compound 2). Additionally, the Separation Parameters for nitrile compound 1 and nitrile compound 2 are 6 and 3, respectively.

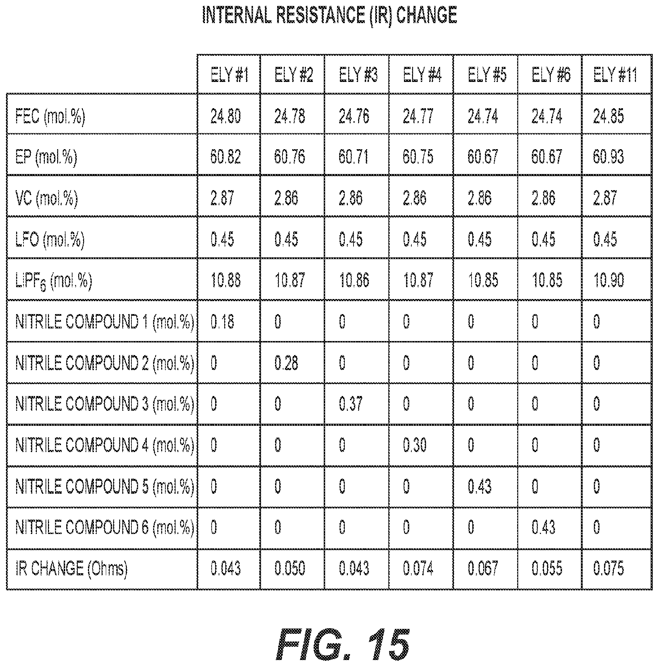

Li-ion battery test cells respectively comprising ELY #1, ELY #2, ELY #3, ELY #4, ELY #5, ELY #6, and ELY #11 (containing no nitrile additive composition) were tested for internal resistance (IR) change as follows. The test cells were fabricated, and an initial formation procedure was carried out on the test cells. The test cells were charged to a high state-of-charge and the initial internal resistance values were measured. The cells were heated to a temperature of 72 °C and were maintained at a temperature of 72 °C for a period of 60 hours (high-temperature outgassing test). The test cells were then cooled to 25 °C and the final internal resistance values were measured 1 hour after reaching 25 °C. The IR change is expressed as a difference between the final internal resistance and the initial internal resistance. IR change (increase) results are tabulated in Table 2 shown in FIG. 15. The ELY #1, ELY #2, and ELY #3 samples exhibited excellent IR change results of 0.043 Ω, 0.050 Ω, and 0.043 Ω, respectively. ELY #1 contains nitrile compound 1 (3-{[1,3-bis(2-cyanoethoxy)propan-2-yl]oxy}propanenitrile, 622) at approximately 0.18 mol. % of the electrolyte. Nitrile compound 1 is a trinitrile compound, has a relatively high boiling point (about 492.4±45.0 °C), and its Separation Parameter is 6. ELY #2 contains nitrile compound 2 (1, 3, 6-hexanetricarbonitrile, 646) at approximately 0.28 mol. % of the electrolyte. Nitrile compound 2 is a trinitrile compound, has a relatively high boiling point (about 441.0±30.0 °C), and its Separation Parameter is 3. ELY #3 contains nitrile compound 3 (1,5-dicyanopentane, 608) at approximately 0.37 mol. % of the electrolyte. Nitrile compound 3 is a dinitrile compound, has a boiling point of 310.8±0.0 °C, and has a Separation Parameter of 5.

The ELY #5 and ELY #6 samples exhibited very good IR change results of 0.067 Ω and 0.055 Ω, respectively. ELY #5 contains nitrile compound 5 (1-(cyanomethyl)cyclopropane-1-carbonitrile, 616) at approximately 0.43 mol. % of the electrolyte. Nitrile compound 5 is a dinitrile compound, has a boiling point of about 285.3±13.0 °C, and has a Separation Parameter of 2. ELY #6 contains nitrile compound 6 (trans-1,4-dicyano-2-butene, 618) at approximately 0.43 mol. % of the electrolyte. Nitrile compound 6 is a dinitrile compound, has a boiling point of about 289.6±20.0 °C, and has a Separation Parameter of 4. Herein, for brevity in some instances, reference is made to an electrolyte (ELY) exhibiting a battery cell performance-related characteristic (e.g., IR change). However, as implied from the context of such examples, it is the lithium-ion battery cells employing the referenced electrolyte(s) that exhibit(s) the recited battery cell performance-related characteristic.

The ELY #4 and ELY #11 samples exhibited IR change results of 0.074 and 0.075 Ω, respectively. ELY #4 contains nitrile compound 4 (4,4-dimethylheptanedinitrile, 610) at 0.30 mol. % of the electrolyte. Nitrile compound 4 is a dinitrile compound, has a boiling point of about 303.2±25.0 °C, and has a Separation Parameter of 5. ELY #11 does not contain any nitrile additive composition and has the worst IR change performance among the electrolytes listed in Table 2 of FIG. 15.

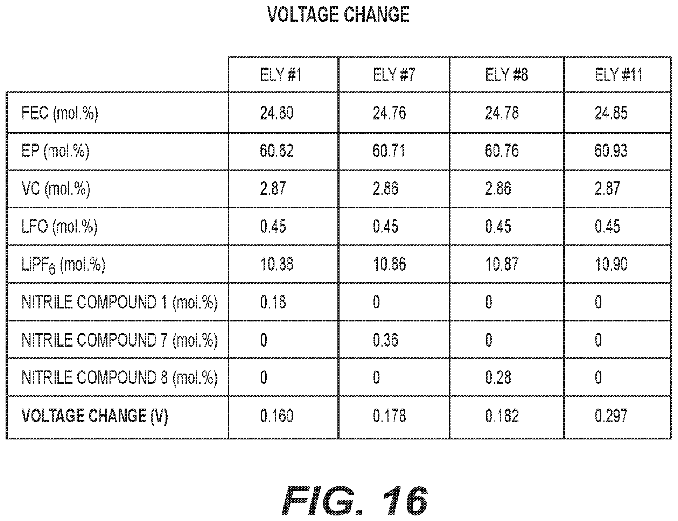

Li-ion battery test cells respectively comprising ELY #1, ELY #7, ELY #8, and ELY #11 (containing no nitrile additive composition) were tested for open circuit voltage change as follows. The test cells were fabricated, and an initial formation procedure was carried out on the test cells. The test cells were charged to a high state-of-charge and the initial open circuit voltages were measured. The cells were heated to a temperature of 72 °C and were maintained at a temperature of 72 °C for a period of 60 hours (high-temperature storage treatment). The test cells were then cooled to 25 °C and the final open circuit voltages were measured 1 hour after reaching 25 °C. The voltage change is expressed as a difference between the final open circuit voltage and the initial open circuit voltage. Open circuit voltage change (voltage decay) results (labeled as "voltage change") are tabulated in Table 3 shown in FIG. 16. The ELY #1, ELY #7, and ELY #8 samples exhibited excellent voltage change results of 0.160 V, 0.178 V, and 0.182 V, respectively. The ELY #11 sample exhibited a voltage change of 0.297 V. ELY #1 contains nitrile compound 1 (3-{[1,3-bis(2-cyanoethoxy)propan-2-yl]oxy}propanenitrile, 622) at approximately 0.18 mol. % of the electrolyte. Nitrile compound 1 is a trinitrile compound, has a relatively high boiling point (about 492.4±45.0 °C), and has a Separation Parameter of 6. ELY #7 contains nitrile compound 7 (3-(2-cyanoethoxy)propanenitrile, 620) at approximately 0.36 mol. % of the electrolyte. Nitrile compound 7 is a dinitrile compound, has a boiling point of 313.7±0.0 °C, and has a Separation Parameter of 4. ELY #8 contains nitrile compound 8 (1-(propan-2-yl)-1H-imidazole-4,5-dicarbonitrile, 630) at 0.28 mol. % of the electrolyte. Nitrile compound 8 is a dinitrile compound, has a boiling point of 410.8±30.0 °C, has a Separation Parameter of 2, and contains an imidazole group.

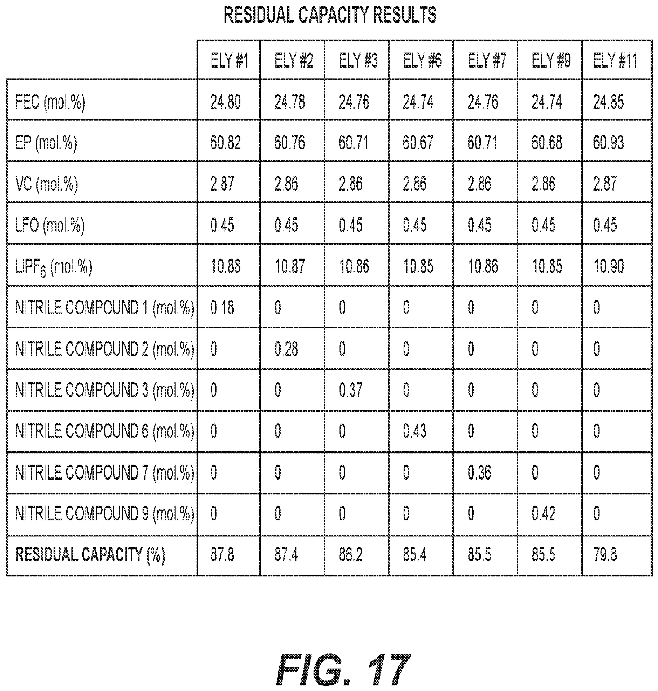

Li-ion battery test cells respectively comprising ELY #1, ELY #2, ELY #3, ELY #6, ELY #7, ELY #9, and ELY #11 (containing no nitrile additive composition) were tested for residual capacities as follows. The test cells were fabricated, and an initial formation procedure was carried out on the test cells. The test cells were charged to a high state-of-charge (SOC of about 100 %) and the initial capacities were measured (this initial capacity is referred to as "pre-test capacity"). The cells were heated to a temperature of 72 °C and were maintained at a temperature of 72 °C for a period of 60 hours (high-temperature storage treatment). The test cells were then cooled to 25 °C and the residual capacities were measured 1 hour after reaching 25 °C. The residual capacity parameter is expressed as a ratio (in %) of the residual capacity (the remaining capacity) after the high-temperature storage treatment under a high state-of-charge (SOC) to the pre-test capacity. Residual capacity results are tabulated in Table 4 shown in FIG. 17. The ELY #1, ELY #2, ELY #3, ELY #6, ELY #7, and ELY #9 samples exhibited very good residual capacity parameters (a residual capacity parameter is sometimes referred to as "residual capacity" herein) of 87.8 %, 87.4 %, 86.2 %, 85.4 %, 85.5 %, and 85.5 %, respectively. The ELY #11 sample exhibited a residual capacity of 79.8 %. ELY #1 contains nitrile compound 1 (3-{[1,3-bis(2-cyanoethoxy)propan-2-yl]oxy}propanenitrile, 622) at approximately 0.18 mol. % of the electrolyte. Nitrile compound 1 is a trinitrile compound, has a relatively high boiling point (about 492.4±45.0 °C), and has a Separation Parameter of 6. ELY #2 contains nitrile compound 2 (1, 3, 6-hexanetricarbonitrile, 646) at approximately 0.28 mol. % of the electrolyte. Nitrile compound 2 is a trinitrile compound, has a relatively high boiling point (about 441.0±30.0 °C), and its Separation Parameter is 3. ELY #3 contains nitrile compound 3 (1,5-dicyanopentane, 608) at approximately 0.37 mol. % of the electrolyte. Nitrile compound 3 is a dinitrile compound, has a boiling point of 310.8±0.0 °C, and has a Separation Parameter of 5. ELY #6 contains nitrile compound 6 (trans-1,4-dicyano-2-butene, 618) at approximately 0.43 mol. % of the electrolyte. Nitrile compound 6 is a dinitrile compound, has a boiling point of about 289.6±20.0 °C, and has a Separation Parameter of 4. ELY #7 contains nitrile compound 7 (3-(2-cyanoethoxy)propanenitrile, 620) at approximately 0.36 mol. % of the electrolyte. Nitrile compound 7 is a dinitrile compound, has a boiling point of 313.7±0.0 °C, and has a Separation Parameter of 4. ELY #9 contains nitrile compound 9 (adiponitrile, 644) at approximately 0.42 mol. % of the electrolyte. Nitrile compound 9 is a dinitrile compound, has a boiling point of about 296.1±13.0 °C, and has a Separation Parameter of 4.

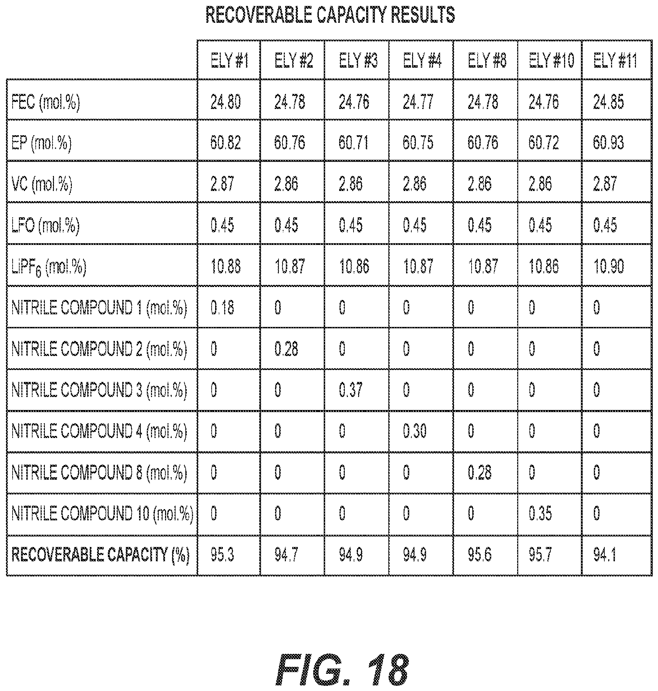

Li-ion battery test cells respectively comprising ELY #1, ELY #2, ELY #3, ELY #4, ELY #8, ELY #10, and ELY #11 (containing no nitrile additive composition) were tested for recoverable capacities as follows. The test cells were fabricated, and an initial formation procedure was carried out on the test cells. The test cells were charged to a high state-of-charge (SOC of about 100 %) and the initial capacities were measured (this initial capacity is referred to as "pre-test capacity"). The cells were heated to a temperature of 72 °C and were maintained at a temperature of 72 °C for a period of 60 hours (high-temperature storage treatment). The test cells were then cooled to 25 °C and the test cells were discharged starting 1 hour after reaching 25 °C. After being discharged, the test cells were charged to a high state-of-charge and the capacities (this capacity is referred to as "recoverable capacity") were measured. The recoverable capacity parameter is expressed as a ratio (in %) of the recoverable capacity to the pre-test capacity. Recoverable capacity results are tabulated in Table 5 shown in FIG. 18. The ELY #1, ELY #2, ELY #3, ELY #4, ELY #8, and ELY #10 samples exhibited good recoverable capacity parameters (a recoverable capacity parameter is sometimes referred to as "recoverable capacity" herein) of 95.3 %, 94.7 %, 94.9 %, 94.9 %, 95.6 %, and 95.7 %, respectively. The ELY #11 sample exhibited a recoverable capacity of 94.1 %. ELY #1 contains nitrile compound 1 (3-{[1,3-bis(2-cyanoethoxy)propan-2-yl]oxy} propanenitrile, 622) at approximately 0.18 mol. % of the electrolyte. Nitrile compound 1 is a trinitrile compound, has a relatively high boiling point (about 492.4±45.0 °C), and has a Separation Parameter of 6. ELY #2 contains nitrile compound 2 (1, 3, 6-hexanetricarbonitrile, 646) at approximately 0.28 mol. % of the electrolyte. Nitrile compound 2 is a trinitrile compound, has a relatively high boiling point (about 441.0±30.0 °C), and its Separation Parameter is 3. ELY #3 contains nitrile compound 3 (1,5-dicyanopentane, 608) at approximately 0.37 mol. % of the electrolyte. Nitrile compound 3 is a dinitrile compound, has a boiling point of 310.8±0.0 °C, and has a Separation Parameter of 5. ELY #4 contains nitrile compound 4 (4,4-dimethylheptanedinitrile, 610) at approximately 0.30 mol. % of the electrolyte. Nitrile compound 4 is a dinitrile compound, has a boiling point of about 303.2±25.0 °C, and has a Separation Parameter of 5. ELY #8 contains nitrile compound 8 (1-(propan-2-yl)-1H-imidazole-4,5-dicarbonitrile, 630) at approximately 0.28 mol. % of the electrolyte. Nitrile compound 8 is a dinitrile compound, has a boiling point of about 410.8±30.0 °C, has a Separation Parameter of 2, and contains an imidazole group. ELY #10 contains nitrile compound 10 (pyridine-2,6-dicarbonitrile, 634) at approximately 0.35 mol. % of the electrolyte. Nitrile compound 10 is a dinitrile compound, has a boiling point of about 290.0±20.0 °C, has a Separation Parameter of 2, and contains a pyridine group.

In one illustrative example, consumer Li-ion battery cell (Li-ion battery cell for use in consumer electronics products) with capacity of about 0.220 Ah may comprise: (i) an anode with Si-based nanocomposite active material (with specific reversible capacity of about 1520 mAh/g when normalized by the weight of active materials in the anode) casted on Cu current collector foil from a suspension comprising a polyvinyl alcohol (PVA)-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator and (iv) an ELY #12 comprising: about 11.48 mol. % of LiPF₆, about 27.30 mol. % of FEC, about 3.02 mol. % of VC, about 57.08 mol. % of ethyl isobutyrate (ester), about 0.50 mol. % of lithium difluorophosphate (LFO) and about 0.62 mol. % of nitrile compound 1.

In another illustrative example, consumer Li-ion battery cell (Li-ion battery cell for use in consumer electronics products) with capacity of about 0.220 Ah may comprise: (i) an anode with Si-based nanocomposite active material (with specific reversible capacity of about 1520 mAh/g when normalized by the weight of active materials in the anode) casted on Cu current collector foil from a suspension comprising a polyvinyl alcohol (PVA)-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator and (iv) an ELY #13 comprising: about 11.52 mol. % of LiPF₆, about 27.34 mol. % of FEC, about 3.03 mol. % of VC, about 57.02 mol. % of ethyl isobutyrate (ester), about 0.50 mol. % of lithium difluorophosphate (LFO), and about 0.61 mol. % of nitrile compound 2.

In another illustrative example, consumer Li-ion battery cell (Li-ion battery cell for use in consumer electronics products) with capacity of about 0.220 Ah may comprise: (i) an anode with Si-based nanocomposite active material (with specific reversible capacity of about 1520 mAh/g when normalized by the weight of active materials in the anode) casted on Cu current collector foil from a suspension comprising a polyvinyl alcohol (PVA)-NMP-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator and (iv) an ELY #14 comprising: about 11.52 mol. % of LiPF₆, about 27.34 mol. % of FEC, about 3.03 mol. % of VC, about 57.02 mol. % of ethyl isobutyrate (ester), and about 0.50 mol. % of lithium difluorophosphate (LFO). Accordingly, ELY #14 does not contain any nitrile compounds.

Li-ion battery test cells respectively comprising ELY #12, ELY #13, and ELY #14 (containing no nitrile additive composition) were tested for thickness change as follows. The test cells were fabricated, and an initial formation procedure was carried out on the test cells. The test cells were charged to a high state-of-charge and the initial cell thicknesses were measured. The cells were heated to a temperature of 72 °C and were maintained at a temperature of 72 °C for a period of 60 hours (high-temperature storage treatment). The test cells were then cooled to 25 °C and the final cell thicknesses were measured 1 hour after reaching 25 °C. The thickness change is expressed as a difference between the final thickness and the initial thickness, divided by the initial thickness. Thickness change results are tabulated in Table 6. The ELY #12 and ELY #13 samples exhibited relatively small thickness changes of 3.5 % and 6.4 %, respectively, while the ELY #14 sample, which contain no nitrile additive composition, exhibited a thickness change of 61.2 %. ELY #12 contains nitrile compound 1 (3-{[1,3-bis(2-cyanoethoxy)propan-2-yl]oxy}propanenitrile, 622) at approximately 0.62 mol. % of the electrolyte. Nitrile compound 1 is a trinitrile compound, has a relatively high boiling point (about 492 °C.4±45.0 °C), and its Separation Parameter is 6. ELY #13 contains nitrile compound 2 (1,3,6-hexanetricarbonitrile, 646) at approximately 0.61 mol. % of the electrolyte. Nitrile compound 2 is a trinitrile compound, has a relatively high boiling point (about 441 °C.0±30.0 °C), and its Separation Parameter is 3.

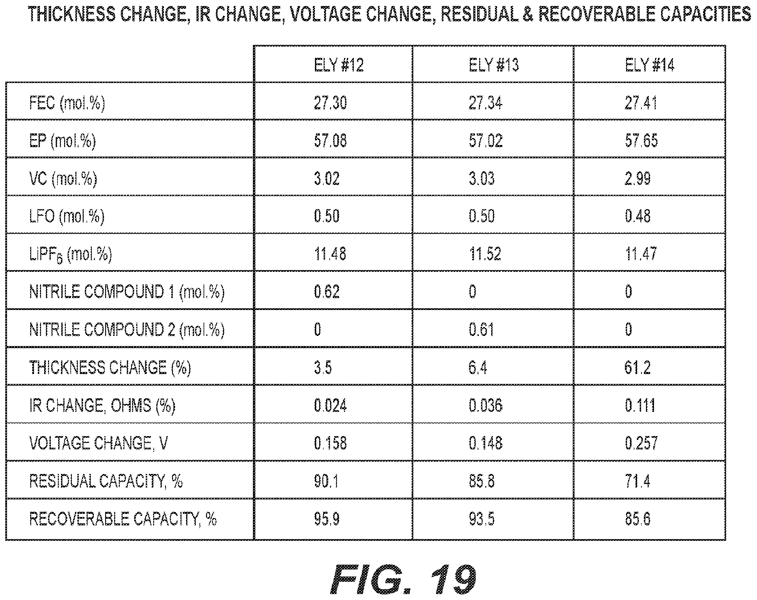

Li-ion battery test cells respectively comprising ELY #12, ELY #13, and ELY #14 (containing no nitrile additive composition) were tested for internal resistance change as follows. The test cells were fabricated, and an initial formation procedure was carried out on the test cells. The test cells were charged to a high state-of-charge and the initial cell thicknesses were measured. The cells were heated to a temperature of 72 °C and were maintained at a temperature of 72 °C for a period of 60 hours (high-temperature storage treatment). The test cells were then cooled to 25 °C and the final IR were measured 1 hour after reaching 25 °C. The IR change is expressed as a difference between the final internal resistance and the initial internal resistance. IR change (increase) results are tabulated in Table 6 shown in FIG. 19. The ELY #12 and ELY #13 samples exhibited excellent IR change results of 0.024 Ω and 0.036 Ω, respectively. ELY #14 did not contain any nitrile additives and demonstrated the highest resistance change of 0.111 Ω among those ELY formulations listed in Table 6.

Li-ion battery test cells respectively comprising ELY #12, ELY #13, and ELY #14 (containing no nitrile additive composition) were tested for open circuit voltage change as follows. The test cells were fabricated, and an initial formation procedure was carried out on the test cells. The test cells were charged to a high state-of-charge and the initial cell thicknesses were measured. The cells were heated to a temperature of 72 °C and were maintained at a temperature of 72 °C for a period of 60 hours (high-temperature storage treatment). The test cells were then cooled to 25 °C and the final cell voltage was measured 1 hour after reaching 25 °C. The voltage change is expressed as a difference between the final cell voltage and the initial cell voltage. Voltage change (voltage decay) results (labeled as "voltage change") are tabulated in Table 6 (FIG. 19). The ELY #12 and ELY #13 samples exhibited excellent voltage change results of 0.158 V and 0.148 V, respectively. ELY #14 did not contain any nitrile additives and demonstrated the largest voltage change of 0.257 V among those ELY formulations listed in Table 6 (FIG. 19).

Li-ion battery test cells respectively comprising ELY #12, ELY #13, and ELY #14 (containing no nitrile additive composition) were tested for residual capacities as follows. The test cells were fabricated, and an initial formation procedure was carried out on the test cells. The test cells were charged to a high state-of-charge and the initial residual capacities were measured. The cells were heated to a temperature of 72 °C and were maintained at a temperature of 72 °C for a period of 60 hours (high-temperature storage treatment). The test cells were then cooled to 25 °C and the final residual capacities were measured 1 hour after reaching 25 °C. The residual capacity is expressed as a ratio of the residual capacity after the test to the pre-test capacity (in %). Residual capacity results are tabulated in Table 6 (FIG. 19). The ELY #12 and ELY #13 samples exhibited very good residual capacities of 90.1 % and 85.8 %, respectively. The ELY #14, which did not contain any nitrile additives, exhibited lower (e.g., unsatisfactory for some applications) residual capacity of 71.4%.

Li-ion battery test cells respectively comprising ELY #12, ELY #13, and ELY #14 (containing no nitrile additive composition) were tested for recoverable capacities as follows. The test cells were fabricated, and an initial formation procedure was carried out on the test cells. The test cells were charged to a high state-of-charge and the initial residual capacities were measured. The cells were heated to a temperature of 72 °C and were maintained at a temperature of 72 °C for a period of 60 hours (high-temperature storage treatment). The test cells were then cooled to 25 °C and the final residual capacities were measured 1 hour after reaching 25 °C. The recoverable capacity is expressed as a ratio of the recoverable capacity after the test to the pre-test capacity (in %). Recoverable capacity results are tabulated in Table 6 (FIG. 19). The ELY #12 and ELY #13 samples exhibited very good recoverable capacities of 95.9 % and 93.5 %, respectively. The ELY #14, which did not contain any nitrile additives, exhibited unsatisfactory (e.g., at least, for some applications) recoverable capacity of 85.6%. ELY #12 contains nitrile compound 1 (3-{[1,3-bis(2-cyanoethoxy)propan-2-yl]oxy}propanenitrile, 622) at approximately 0.62 mol. % of the electrolyte. Nitrile compound 1 is a trinitrile compound, has a relatively high boiling point (about 492.4±45.0 °C), and its Separation Parameter is 6. ELY #13 contains nitrile compound 2 (1,3,6-hexanetricarbonitrile, 646) at approximately 0.61 mol. % of the electrolyte. Nitrile compound 2 is a trinitrile compound, has a relatively high boiling point (about 441.0±30.0 °C), and its Separation Parameter is 3. As shown in Table 6 (FIG. 19), battery cells employing electrolytes containing nitrile compounds 1 or 2 exhibit better thickness changes, IR changes, open circuit voltage changes (voltage decay), residual capacities, and recoverable capacities compared to battery cells employing electrolytes containing no nitrile additive composition.

In one illustrative example, a Li-ion battery cell (Li-ion battery prototype cell for use in automotive traction applications) with capacity of about 1 Ah may comprise: (i) an anode with Si-based nanocomposite active material (with specific reversible capacity of about 1520 mAh/g when normalized by the weight of active materials in the anode) casted on Cu current collector foil from a water-based suspension comprising a polyacrylic acid (PAA) neutralized by the metal ions and a carbon black conductive additive, (ii) a cathode with high-voltage NMC811 active material (with specific reversible capacity of about 200 mAh/g when normalized by the weight of active materials in the cathode) (the term NMC811 is used to refer to materials with an approximate composition of LiNi_{0.8}Mn_{0.1}Co_{0.1}O₂) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 5.5 mAh/cm², charge voltage of about 4.2 V, (iii) a polymer separator, and (iv) an ELY #15 comprising: about 8.67 mol. % of LiPF₆, about 14.73 mol. % of FEC, about 4.14 mol. % of VC, about 43.80 mol. % of ethyl propionate (ester), about 0.43 mol. % of lithium difluorophosphate (LFO), about 1.73 mol. % of LiFSI, about 7.14 mol. % of diethyl carbonate, about 5.69 mol. % of propylene carbonate, about 13.00 mol. % of ethylene carbonate, about 0.28 mol. % of nitrile compound 2 (1,3,6-hexanetricarbonitrile), and about 0.39 mol. % of nitrile compound 9 (adiponitrile). Accordingly, in this case the nitrile additive composition of the electrolyte contains a mixture of nitrile compound 2 and nitrile compound 9.

In one illustrative example, Li-ion battery cell (Li-ion battery prototype cell for use in automotive traction applications) with capacity of about 1 Ah may comprise: (i) an anode with Si-based nanocomposite active material (with specific reversible capacity of about 1520 mAh/g when normalized by the weight of active materials in the anode) casted on Cu current collector foil from a water-based suspension comprising a polyacrylic acid (PAA) neutralized by the metal ions and a carbon black conductive additive, (ii) a cathode with high-voltage NMC811 active material (with specific reversible capacity of about 200 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 5.5 mAh/cm², charge voltage of about 4.2 V, (iii) a polymer separator, and (iv) an ELY #16 comprising: about 11.05 mol. % of LiPF₆, about 15.72 mol. % of FEC, about 4.30 mol. % of VC, about 40.11 mol. % of ethyl isobutyrate (ester), about 0.44 mol. % of lithium difluorophosphate (LFO), about 7.53 mol. % of diethyl carbonate, about 6.13 mol. % of propylene carbonate, about 13.80 mol. % of ethylene carbonate, about 0.27 mol. % of nitrile compound 1 (3-{[1,3-bis(2-cyanoethoxy)propan-2-yl]oxy}propanenitrile), about 0.27 mol. % of nitrile compound 2 (1,3,6-hexanetricarbonitrile), and about 0.37 mol. % of nitrile compound 9 (adiponitrile). Accordingly, in this case the nitrile additive composition of the electrolyte contains a mixture of nitrile compound 1, nitrile compound 2, and nitrile compound 9.

In one illustrative example, Li-ion battery cell (Li-ion battery prototype cell for use in automotive traction applications) with capacity of about 1 Ah may comprise: (i) an anode with Si-based nanocomposite active material (with specific reversible capacity of about 1520 mAh/g when normalized by the weight of active materials in the anode) casted on Cu current collector foil from a water-based suspension comprising a polyacrylic acid (PAA) neutralized by the metal ions and a carbon black conductive additive, (ii) a cathode with high-voltage NMC811 active material (with specific reversible capacity of about 200 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 5.5 mAh/cm², charge voltage of about 4.2 V, (iii) a polymer separator, and (iv) an ELY #17 comprising: about 11.10 mol. % of LiPF₆, about 15.89 mol. % of FEC, about 4.32 mol. % of VC, about 39.62 mol. % of ethyl isobutyrate (ester), about 0.45 mol. % of lithium difluorophosphate (LFO), about 7.57 mol. % of diethyl carbonate, about 6.16 mol. % of propylene carbonate, about 13.91 mol. % of ethylene carbonate, and about 0.99 mol. % of nitrile compound 1 (3-{[1,3-bis(2-cyanoethoxy)propan-2-yl]oxylpropanenitrile).

In one illustrative example, Li-ion battery cell (Li-ion battery prototype cell for use in automotive traction applications) with capacity of about 1 Ah may comprise: (i) an anode with Si-based nanocomposite active material (with specific reversible capacity of about 1520 mAh/g when normalized by the weight of active materials in the anode) casted on Cu current collector foil from a water-based suspension comprising a polyacrylic acid (PAA) neutralized by the metal ions and a carbon black conductive additive, (ii) a cathode with high-voltage NMC811 active material (with specific reversible capacity of about 200 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 5.5 mAh/cm², charge voltage of about 4.2 V, (iii) a polymer separator and (iv) an ELY #18 comprising: about 11.04 mol. % of LiPF₆, about 15.59 mol. % of FEC, about 4.19 mol. % of VC, about 39.73 mol. % of ethyl isobutyrate (ester), about 7.40 mol. % of diethyl carbonate, about 6.13 mol. % of propylene carbonate, about 13.84 mol. % of ethylene carbonate, about 0.90 mol. % of LiBF₄, about 0.27 mol. % of nitrile compound 1 (3-{[1,3-bis(2-cyanoethoxy)propan-2-yl]oxy}propanenitrile), about 0.46 mol. % of nitrile compound 2 (1,3,6-hexanetricarbonitrile), and about 0.44 mol. % of nitrile compound 9 (adiponitrile).

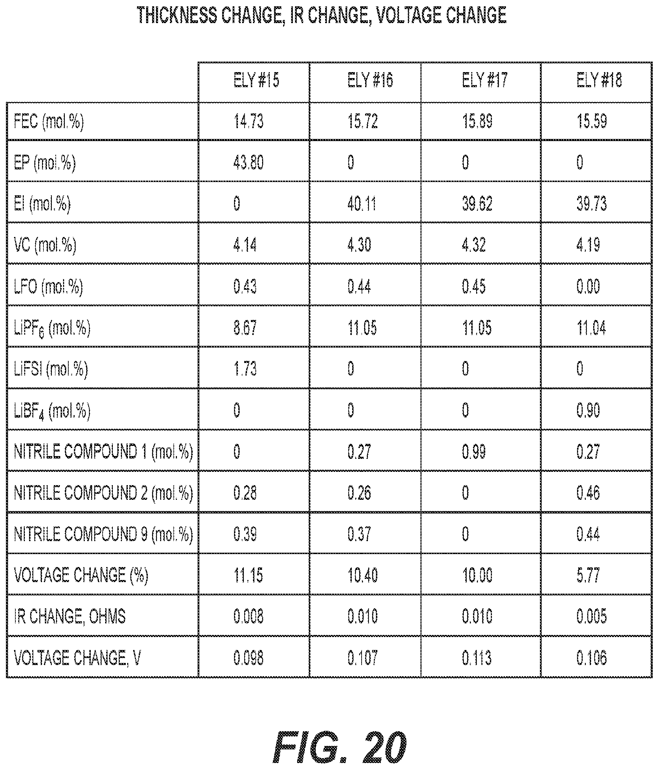

Li-ion battery test cells respectively comprising electrolytes (ELY) #15, #16, #17, and #18 were fabricated and an initial formation procedure was carried out on the test cells. The test cells were charged to a high state-of-charge and the initial volume, initial internal resistance (IR), and initial voltage were measured. The cells were heated to a temperature of 72 °C and were maintained at a temperature of 72 °C for a period of 60 hours (high-temperature storage conditions). The test cells were then cooled to 25 °C and the final volume, final IR, and final voltage were measured 1 hour after reaching 25 °C. The volume change, IR change, and open circuit voltage change results are tabulated on Table 7 shown in FIG. 20. The open circuit voltage changes are labeled as "voltage change" in Table 7. The test cell comprising ELY #15 (0.28 mol. % of nitrile compound 2 and 0.39 mol. % of nitrile compound 9) exhibited a volume change of 11.15 %, IR change of 0.008 Ω, and voltage change of 0.098 V. The test cell comprising ELY #16 (0.27 mol. % of nitrile compound 1, 0.26 mol. % of nitrile compound 2, and 0.37 mol. % of nitrile compound 9) exhibited a volume change of 10.40 %, IR change of 0.010 Ω, and voltage change of 0.107 V. The test cell comprising ELY #17 (0.99 mol. % of nitrile compound 1) exhibited a volume change of 10.00 %, IR change of 0.010 Ω, and voltage change of 0.113 V. The test cell comprising ELY #18 (0.27 mol. % of nitrile compound 1, 0.46 mol. % of nitrile compound 2, and 0.44 mol. % of nitrile compound 9) exhibited a volume change of 5.77 %, IR change of 0.005 Ω, and voltage change of 0.106 V. ELY #15 includes a linear ester ethyl propionate (EP), and in that regard is similar to ELY #1, #2, #3, #4, #5, #6, #7, #8, #9, #10, and #11. ELY #16, #17, and #18 include a branched ester ethyl isovalerate (EIV), and in that regard are similar to ELY #12, #13, #14. In ELY #17, the nitrile additive composition includes a single nitrile compound (nitrile compound 1) while in ELY #15, #16, and #18, the nitrile additive composition includes a mixture of two or more nitrile compounds. In these four cases (ELY #15, #16, #17, and #18), the voltage change results are in a satisfactory (e.g., at least, for some applications) range of about 0.098 V to about 0.113 V. The ELY #18 test cell exhibited superior results in volume change and IR change compared to the ELY #15, #16, and #17 test cells. ELY #16 and #18 both contain a mixture of three nitrile compounds (nitrile compounds 1, 2, and 9) but ELY #18 contains a higher mole fraction of nitrile compounds 2 and 9 (0.46 mol. % instead of 0.26 mol. % of nitrile compound 2 and 0.44 mol. % instead of 0.37 mol. % of nitrile compound 9). Additionally, ELY #18 contains LiBF₄, an additive salt (AS), at a mole fraction of 0.90 mol. %, while ELY #16 contains LFO, an additive salt (AS), at a mole fraction of 0.44 mol. %. Notably, the ELY #18 test cell exhibited a volume change of 5.77 %, significantly lower than 10.40 % observed in the ELY #16 test cell, and an IR change of 0.005 Ω, significantly lower than 0.010 Ω observed in the ELY #16 test cell.

In one illustrative example, Li-ion battery cell (Li-ion battery prototype cell for use in automotive traction applications) with capacity of about 1 Ah may comprise: (i) an anode with Si-based nanocomposite active material (with specific reversible capacity of about 1520 mAh/g when normalized by the weight of active materials in the anode) casted on Cu current collector foil from a water-based suspension comprising a polyacrylic acid (PAA) neutralized by the metal ions and a carbon black conductive additive, (ii) a cathode with high-voltage NMC811 active material (with specific reversible capacity of about 200 mAh/g when normalized by the weight of active materials in the cathode) (the term NMC811 is used to refer to materials with an approximate composition of LiNi_{0.8}Mn_{0.1}Co_{0.1}O₂) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 5.5 mAh/cm², charge voltage of about 4.2V, (iii) a polymer separator and (iv) an ELY #19 comprising: about 9.09 mol. % of LiPF₆, about 15.52 mol. % of FEC, about 4.31 mol. % of VC, about 41.47 mol. % of ethyl propionate (ester), about 7.42 mol. % of diethyl carbonate, about 5.97 mol. % of propylene carbonate, about 13.62 mol. % of ethylene carbonate, about 0.45 mol. % of lithium difluorophosphate (LFO), about 1.82 mol. % of lithium bis(fluorosulfonyl)imide (LiFSI), about 0.13 mol. % of tris(trimethylsilyl) phosphite, and about 0.19 mol. % of triisopropyl borate. ELY #19 was found to have a beneficial effect on reducing high-temperature outgassing in example Li-ion battery cells. Accordingly, in some implementations, a preferred electrolyte for a Li-ion battery may contain tris(trimethylsilyl) phosphite and/or triisopropyl borate in combination with at least one ester, such as ethyl propionate, or alternatively, any of the esters shown in FIGS. 4, 5, and 6. Each of tris(trimethylsilyl) phosphite and triisopropyl borate may be present in electrolytes at an additive-level of concentration, for example in a range of about 0.01 mol. % to about 0.5 mol. %, or about 0.1 mol. % to about 1.0 mol. %. A mixture of tris(trimethylsilyl) phosphite and triisopropyl borate may be present in electrolytes at an additive-level of concentration, for example in a range of about 0.01 mol. % to about 0.5 mol. %, or about 0.1 mol. % to about 1.0 mol. %. Additionally, in some implementations, a preferred electrolyte may contain tris(trimethylsilyl) phosphite and/or triisopropyl borate in combination with at least one ester and a nitrile additive composition as described herein.

In one illustrative example, consumer Li-ion battery cell (Li-ion battery cell for use in consumer electronics products) with capacity of about 0.650 Ah may comprise: (i) an anode with Si-based nanocomposite active material mixed with artificial graphite (with specific reversible capacity of about 1570 mAh/g when normalized by the weight of active materials in the anode) casted on Cu current collector foil from an aqueous suspension comprising a carboxymethyl cellulose and styrene butadiene resin binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 3.5 mAh/cm², charge voltage of about 4.4 V, (iii) a polymer separator, and (iv) an ELY #1 comprising: about 10.88 mol. % of LiPF₆, about 24.80 mol. % of FEC, about 2.87 mol. % of VC, about 60.82 mol. % of ethyl propionate (ester), about 0.45 mol. % of lithium difluorophosphate (LFO), and about 0.18 mol. % of 3-{[1,3-bis(2-cyanoethoxy)propan-2-yl]oxy}propanenitrile (**nitrile compound 1**).

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #20 comprising: about 11.75 mol. % of LiPF₆, about 26.79 mol. % of FEC, about 3.10 mol. % of VC, and about 58.36 mol. % of ethyl propionate (ester). ELY #20 does not comprise any nitrile additives.

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #21 comprising: about 11.42 mol. % of LiPF₆, about 27.22 mol. % of FEC, about 3.05 mol. % of VC, about 57.37 mol. % of ethyl propionate (ester), and about 0.93 mol. % of adiponitrile (nitrile compound 9).

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #22 comprising: about 11.65 mol. % of LiPF₆, about 26.56 mol. % of FEC, about 3.07 mol. % of VC, about 57.85 mol. % of ethyl propionate (ester), and about 0.87 mol. % of (3-{[1,3-bis(2-cyanoethoxy)propan-2-yl]oxy}propanenitrile (nitrile compound 1).

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #23 comprising: about 11.65 mol. % of LiPF₆, about 26.56 mol. % of FEC, about 3.07 mol. % of VC, about 57.85 mol. % of ethyl propionate (ester), and about 0.87 mol. % of 3-{[1,6-bis(2-cyanoethoxy)hexan-2-yl]oxy}propanenitrile (nitrile compound 11).

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #24 comprising: about 11.65 mol. % of LiPF₆, about 26.56 mol. % of FEC, about 3.07 mol. % of VC, about 57.85 mol. % of ethyl propionate (ester), and about 0.87 mol. % of 3-[3,4-bis-(2-cyano-ethoxy)-butoxy]-propionitrile (nitrile compound 12).

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #25 comprising: about 11.65 mol. % of LiPF₆, about 26.56 mol. % of FEC, about 3.07 mol. % of VC, about 57.85 mol. % of ethyl propionate (ester), and about 0.87 mol. % of 3,3'-((2-((2-cyanoethoxy)methyl)-2-methylpropane-1,3-diyl)bis(oxy))dipropanenitrile (nitrile compound 13).

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #26 comprising: about 8.00 mol. % of LiPF₆, about 19.19 mol. % of FEC, about 2.23 mol. % of VC, about 6.74% EC, about 63.18 mol. % of dimethyl carbonate (linear carbonate), and about 0.65 mol. % of 3-{[1,6-bis(2-cyanoethoxy)hexan-2-yl]oxy}propanenitrile (nitrile compound 11). ELY #26 is sometimes referred to as a "linear carbonate-based" or "carbonate-based" electrolyte because of a relatively high mole fraction (about 63.18 mol. %) of a linear carbonate or a carbonate (dimethyl carbonate). On the other hand, ELY #25 is sometimes referred to as a "linear ester-based" or an "ester-based" electrolyte because of a relatively high mole fraction (about 57.85 mol. %) of a linear ester or ester (ethyl propionate). Similarly, ELY #20, #21, #22, #23, #24, and #25 are sometimes referred to as "linear ester-based" or "ester-based" electrolytes.

In one illustrative example, consumer Li-ion battery cell (Li-ion battery cell for use in consumer electronics products) with capacity of about 0.230 Ah may comprise: (i) an anode with Si-based nanocomposite active material (with specific reversible capacity of about 1520 mAh/g when normalized by the weight of active materials in the anode) casted on Cu current collector foil from a suspension comprising a PAA-water-based binder and a carbon black conductive additive, (ii) a cathode with high-voltage LCO (LiCoO₂) active material (with specific reversible capacity of about 190 mAh/g when normalized by the weight of active materials in the cathode) casted on Al current collector foil from an organic solvent suspension comprising a polyvinylidene fluoride (PVDF)-based binder and a carbon black conductive additive, anode:cathode areal capacity ratio of about 1.08:1 and areal reversible capacity loading of about 2.9 mAh/cm², charge voltage of about 4.4 V, (iii) a polymer separator, and (iv) an ELY #27 comprising: about 8.09 mol. % of LiPF₆, about 19.20 mol. % of FEC, about 2.16 mol. % of VC, about 6.88% EC and about 63.67 mol. % of dimethyl carbonate (linear carbonate). ELY #27 is sometimes referred to as a "linear carbonate-based" or a "carbonate-based" electrolyte.

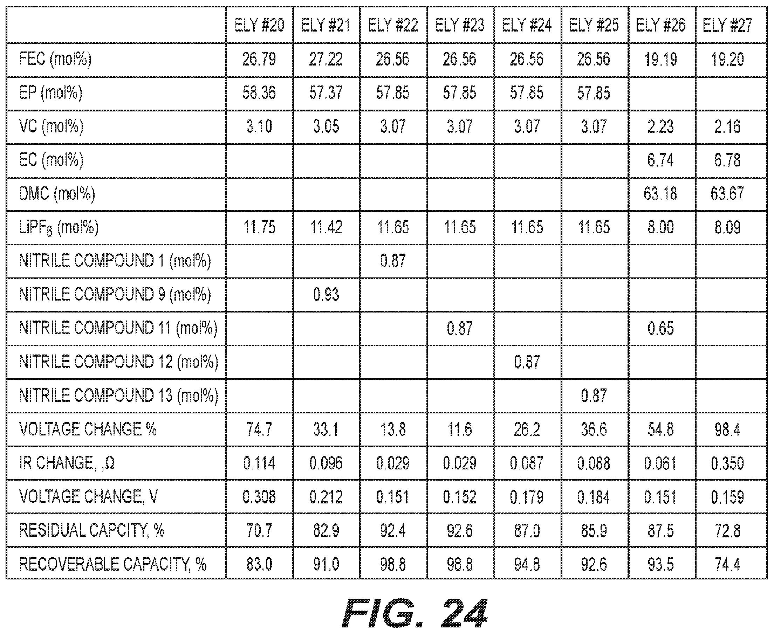

Li-ion battery test cells respectively comprising ELY #20 (ester-based, containing no nitrile additive composition), ELY #21 (ester-based), ELY #22 (ester-based), ELY #23 (ester-based), ELY #24 (ester-based), ELY #25 (ester-based), ELY #26 (carbonate-based) and ELY #27 (carbonate-based, containing no nitrile additive composition) were tested for volume change as follows. The test cells were fabricated, and an initial formation procedure was carried out on the test cells. The test cells were charged to a high state-of-charge and the initial cell volumes were measured. The cells were heated to a temperature of 72 °C and were maintained at a temperature of 72 °C for a period of 60 hours (high-temperature outgassing test). The test cells were then cooled to 25 °C and the final cell volumes were measured 1 hour after reaching 25 °C. The volume change is expressed in %, as a difference between the final volume and the initial volume, divided by the initial volume. Volume change results are tabulated in Table 11 shown in FIG. 24. The ELY #21, ELY #22, ELY #23, ELY #24 and ELY #25 samples, which are ester-based electrolytes, exhibited thickness changes of 33.1 %, 13.8 %, 11.6 %, 26.2 %, and 36.6 %, respectively, while the ELY #20 sample, which is also an ester-based electrolyte, but contains no nitrile additive composition, exhibited a volume change of 74.7%. The ELY #27 sample, which is a carbonate-based electrolyte that contains no nitrile additive composition, exhibited a volume change of 98.4 %, which is greater than (worse than) than the volume change exhibited by its ester-based analogue ELY #20 (74.7 %). ELY #20 is sometimes referred to as an ester-based analogue of ELY #27 because both electrolytes are free of nitrile additive compositions and ELY #20 comprises an ester-based electrolyte while ELY #27 comprises a carbonate-based electrolyte. The ELY #26 sample, which is a carbonate-based electrolyte, exhibited a volume change of 54.8 %, which is greater than (worse than) the volume change exhibited by its ester-based analogue ELY #23 (11.6 %). ELY #23 is sometimes referred to as an ester-based analogue of ELY #26 because both electrolytes comprise nitrile compound 11 as the nitrile additive composition and ELY #23 comprises an ester-based electrolyte while ELY #26 comprises a carbonate-based electrolyte.

ELY #21, ELY #22, ELY #23, ELY #24, ELY #25, and ELY #26 are electrolyte formulations containing nitrile additive compositions (NACs). ELY #21 contains nitrile compound 9 at approximately 0.93 mol. % of the electrolyte. ELY #22 contains nitrile compound 1 at approximately 0.87 mol. % of the electrolyte. ELY #23 contains nitrile compound 11 at approximately 0.87 mol. % of the electrolyte. ELY #24 contains nitrile compound 12 at approximately 0.87 mol. % of the electrolyte. ELY #25 contains nitrile compound 13 at approximately 0.87 mol. % of the electrolyte. ELY #26 contains nitrile compound 11 at approximately 0.65 mol. % of the electrolyte. In some implementations, one or more of nitrile compound 1, nitrile compound 11, nitrile compound 12, and nitrile compound 13 can contribute to mitigating high-temperature outgassing. In these electrolyte examples, each nitrile additive composition contained one respective nitrile compound. In other implementations, a nitrile additive composition can include a mixture of multiple nitrile compounds. Some properties and characteristics of this and other selected nitrile compounds are shown in the table (Table 10) shown in FIGS. 23A, 23B. Table 10 lists the following information for each nitrile compound, if available: (1) nitrile compound number (1 through 13), if applicable, (2) identifier number of the molecular structures as shown in FIGS. 7 through 13, (3) nitrile compound name, (4) molecular formula, (5) number of nitrile groups in the compound, (6) number of carbon atoms along the shortest connection between two adjacent nitrile groups in a nitrile compound having two or more nitrile groups, herein referred to as a "Separation Parameter", (7) average mass (molecular weight) of the compound, (8) density, (9) boiling point, and (10) other selected structural feature. The entries relating to the average mass, density, and boiling point are readily available from various public sources, such as the web site http://www.chemspider.com/ at the time of the filing of the subject application. In the column for the Separation Parameter (6), an NA (or not applicable) entry indicates that the compound is a mononitrile compound.

Notably, nitrile compounds 1, 11, 12, and 13 are trinitrile compounds and have relatively high boiling points of about 492.4±45.0 °C (i.e., the boiling point of nitrile compound 1) or greater. Additionally, the Separation Parameters for nitrile compound 1, nitrile compound 11, nitrile compound 12, and nitrile compound 13 are 6, 6, 6, and 7, respectively. Each of the nitrile groups in nitrile compounds 1, 11, 12, and 13 is part of a respective cyanoalkoxy chain. For each nitrile compound (1, 11, 12, or 13), the three cyanoalkoxy chains are connected at one common carbon (C) atom. In each of the cyanoalkoxy chains, the nitrile group and the oxygen (O) are separated by two carbons. The molecular weights (average masses) of nitrile compounds 1, 11, 12, and 13 are 251.282, 293.367, 265.313, and 279.34, respectively. The number of carbons in nitrile compounds 1, 11, 12, and 13 is 12, 15, 13, and 14, respectively. Accordingly, in some implementations, it may be preferable to employ one or more trinitrile compounds in a nitrile additive composition of an electrolyte. In such implementations, it may be preferable to use a trinitrile compound having one or more of the following characteristics: (1) a molecular weight of about 251 or greater, (2) a molecular weight of about 294 or less, (3) a molecular weight in a range of about 251 to about 294, (4) a number of carbons being 12 or greater, (5) a number of carbons being 15 or less, (6) a number of carbons being in a range of 12 to 15, (7) the Separation Parameter is 6 or greater, (8) the Separation Parameter is 7 or less, (9) the Separation Parameter is 6 or 7, (10) the compound contains three cyanoalkoxy chains, (11) the compound contains three cyanoalkoxy chains which are connected at one common carbon (C) atom, (12) the compound contains three cyanoalkoxy groups in which the nitrile group and the oxygen (O) atom of at least one of the cyanoalkoxy chains are separated by two carbons, and (13) the compound contains three cyanoalkoxy groups in which the nitrile group and the oxygen (O) atom of each of the cyanoalkoxy chains are separated by two carbons. The number of carbon atoms in a compound may be determined by looking up the molecular formula of the compound in Table 10 (FIGS. 23A, 23B).

Moreover, in some implementations it may be preferable to employ a mixture of one or more dinitrile compounds ("dinitrile portion") and one or more trinitrile compounds ("trinitrile portion") in the nitrile additive composition (NAC). In some implementations, the nitrile additive composition may include nitrile additives other than the trinitrile portion and/or the dinitrile portion, such as mononitriles and compounds with four or more nitrile groups. In some cases, a mole fraction of mononitriles may be quite small (e.g., negligible or zero). In some implementations, a mole fraction of the trinitrile portion may be greater than or equal to a mole fraction of the dinitrile portion (e.g., a molar ratio of the trinitrile portion to the dinitrile portion may be in a range of about 50:50 to about 99:1). In some implementations, a molar ratio of the trinitrile portion to the dinitrile portion (in an NAC) may be in a range of about 1:10 to about 10:1 (in other implementations, in a range of about 1:5 to 5:1, in yet other implementations, in a range of about 1:2 to about 2:1, and in yet other implementations, in a range of about 1:100 to about 100:1). The compounds in the trinitrile portion may be selected from any of the trinitrile compounds described herein. The compounds in the dinitrile portion may be selected from any of the dinitrile compounds described herein, e.g., nitrile compounds 3, 4, 5, 6, 7, 8, 9, and 10. In some implementations, it may be preferable to use a dinitrile compound having one or more of the following characteristics: (1) a molecular weight of about 95 or greater, (2) a molecular weight of about 201 or less, (3) a molecular weight of about 161 or less, (4) a molecular weight in a range of about 95 to about 201, (5) a molecular weight in a range of about 95 to about 161, (6) a number of carbons being 5 or greater, (7) a number of carbons being 6 or greater, (8) a number of carbons being 9 or less, (9) a number of carbons being in a range of 5 to 9, (10) a number of carbons being in a range of 6 to 9, (11) the Separation Parameter is 2 or greater, (12) the Separation Parameter is 5 or less, and (13) the Separation Parameter is 2, 3, 4, or 5.

Nitrile compound 11 has been characterized by liquid chromatography/mass spectrometry (LC/MS or LS) and by proton nuclear magnetic resonance (¹H NMR) as follows: LS ([M+H]⁺, *m*/*z*): 294.2, ¹H NMR (500 MHz, Chloroform-d): δ 3.88 (dt, *J =* 9.6, 6.0 Hz, 1H), 3.73 (ddd, *J =* 9.5, 6.9, 5.7 Hz, 1H), 3.68 (t, *J =* 6.2 Hz, 2H), 3.62 (t, *J =* 6.3 Hz, 2H), 3.57 - 3.46 (m, 5H), 2.67 - 2.52 (m, 6H), 1.60 (dqd, *J =* 8.1, 6.2, 5.8, 3.4 Hz, 2H), 1.56 - 1.39 (m, 4H).

Nitrile compound 12 has been characterized by gas chromatography/mass spectrometry (GC/MS), proton nuclear magnetic resonance (¹H NMR), and Carbon-13 nuclear magnetic resonance (¹³C NMR) as follows: GC/MS (*m*/*z*): 265.1, ¹H NMR (500 MHz, Chloroform-d) δ 3.93 (dt, *J* = 9.7, 5.6 Hz, 1H), 3.75 (dtd, *J* = 9.7, 5.3, 1.7 Hz, 2H), 3.73 - 3.64 (m, 5H), 3.61 - 3.50 (m, 3H), 2.64 - 2.57 (m, 6H), 1.80 (ddt, *J =* 13.8, 9.2, 4.7 Hz, 1H), 1.72 - 1.66 (m, 1H), ¹³C NMR δ 118.56, 118.26, 118.00, 76.05, 74.61, 66.80, 66.04, 65.48, 65.40, 31.83, 19.49, 19.08.

Nitrile compound 13 has been characterized by GC/MS and ¹H NMR as follows: GC/MS (*m*/*z*): 280.9, ¹H NMR (500 MHz, Chloroform-d): δ 3.64 (t, *J =* 6.1 Hz, 6H), 3.38 (s, 6H), 2.59 (t, *J =* 6.1 Hz, 6H), 0.97 (s, 3H).

Li-ion battery test cells respectively comprising ELY #20 (ester-based, containing no nitrile additive composition), ELY #21 (ester-based), ELY #22 (ester-based), ELY #23 (ester-based), ELY #24 (ester-based), ELY #25 (ester-based), ELY #26 (carbonate-based), and ELY #27 (carbonate-based, containing no nitrile additive composition) were tested for internal resistance (IR) change as follows. The test cells were fabricated, and an initial formation procedure was carried out on the test cells. The test cells were charged to a high state-of-charge and the initial internal resistance values were measured. The cells were heated to a temperature of 72 °C and were maintained at a temperature of 72 °C for a period of 60 hours (high-temperature outgassing test). The test cells were then cooled to 25 °C and the final internal resistance values were measured 1 hour after reaching 25 °C. The IR change is expressed as a difference between the final internal resistance and the initial internal resistance. IR change (increase) results are tabulated in Table 11 shown in FIG. 24. The ELY #22 and ELY #23 samples, which are ester-based ELYs, exhibited excellent IR change results of 0.029 Ω and 0.029 Ω, respectively. ELY #22 contains nitrile compound 1 at approximately 0.87 mol. % of the electrolyte. Nitrile compound 1 is a trinitrile compound, has a relatively high boiling point (about 492.4±45.0 °C), and has a Separation Parameter of 6. ELY #23 contains nitrile compound 11 at approximately 0.87 mol. % of the electrolyte. Nitrile compound 11 is a trinitrile compound, has a relatively high boiling point (greater than the boiling point of nitrile compound 1), and has a Separation Parameter of 6.

The ELY #21, ELY #24 and ELY #25 samples, which are ester-based ELYs, exhibited very good IR change results of 0.096 Ω, 0.087 and 0.088 Ω, respectively. ELY #21 contains nitrile compound 9 (adiponitrile, 644) at approximately 0.93 mol. % of the electrolyte. Nitrile compound 9 is a dinitrile compound, has a boiling point of about 296.3±13.0 °C, and has a Separation Parameter of 4. ELY #24 contains nitrile compound 12 at approximately 0.87 mol. % of the electrolyte. Nitrile compound 12 is a trinitrile compound, has a relatively high boiling point (greater than the boiling point of nitrile compound 1), and has a Separation Parameter of 6. ELY #25 contains nitrile compound 13 at approximately 0.87 mol. % of the electrolyte. Nitrile compound 13 is a trinitrile compound, has a relatively high boiling point (greater than the boiling point of nitrile compound 1), and has a Separation Parameter of 7.

The ELY #20 sample, which is an ester-based electrolyte, but contains no nitrile additives, exhibited IR change results of 0.114 Ω. ELY #20 does not contain any nitrile additive composition and exhibits the worst IR change performance (largest IR change) among the ester-based electrolytes (ELY #20, #21, #22, #23, #24, and #25) listed in Table 11 of FIG. 24. The IR change of ELY #20, which contains no nitrile additive composition, is worse than (larger than) the IR changes of ester-based electrolytes (ELY #21, #22, #23, #24, and #25) comprising respective nitrile additive compositions.

The ELY #26 sample, which is a carbonate-based electrolyte containing nitrile compound 11, exhibited an IR change of 0.061 Ω. The ELY #27 sample, which is a carbonate-based electrolyte that contains no nitrile additive composition, exhibited a greater (worse) IR change of 0.350 Ω. The ELY #27 sample, which is a carbonate-based electrolyte that contains no nitrile additive composition, exhibited an IR change (0.350 Ω) which is greater than (worse than) than the IR change exhibited by its ester-based analogue ELY #20 (0.114 Ω). ELY #26, which is a carbonate-based electrolyte, exhibited an IR change (0.061 Ω) which is greater than (worse than) the IR change exhibited by its ester-based analogue ELY #23 (0.029 Ω).

Li-ion battery test cells respectively comprising ELY #20 (ester-based, containing no nitrile additive composition), ELY #21 (ester-based), ELY #22 (ester-based), ELY #23 (ester-based), ELY #24 (ester-based), ELY #25 (ester-based), ELY #26 (carbonate-based), and ELY #27 (carbonate-based, containing no nitrile additive composition) were tested for open circuit voltage change as follows. For brevity, open circuit voltage change is sometimes referred to as "voltage change" herein. The test cells were fabricated, and an initial formation procedure was carried out on the test cells. The test cells were charged to a high state-of-charge and the initial open circuit voltages were measured. The cells were heated to a temperature of 72 °C and were maintained at a temperature of 72 °C for a period of 60 hours (high-temperature storage treatment). The test cells were then cooled to 25 °C and the final open circuit voltages were measured 1 hour after reaching 25 °C. The voltage change is expressed as a difference between the final open circuit voltage and the initial open circuit voltage. Voltage change (voltage decay) results (labeled as "voltage change") are tabulated in Table 11 shown in FIG. 24. The ELY #22, ELY #23, and ELY #26 samples exhibited excellent voltage change results of 0.151 V, 0.152 V and 0.151 V, respectively. ELY #22 contains nitrile compound 1 at approximately 0.87 mol. % of the electrolyte. Nitrile compound 1 is a trinitrile compound, has a relatively high boiling point (about 492.4±45.0 °C), and its Separation Parameter is 6. ELY #23 contains nitrile compound 11 at approximately 0.87 mol. % of the ester-based electrolyte. Nitrile compound 11 is a trinitrile compound, has a relatively high boiling point (greater than the boiling point of nitrile compound 1), and has a Separation Parameter of 6. ELY #26 contains nitrile compound 11 at approximately 0.65 mol. % of the carbonate-based electrolyte.

The ELY #21, ELY #24, ELY #25, and ELY #27 samples exhibited very good voltage change results of 0.212 V, 0.179 V, 0.184 V, and 0.159 V, respectively. ELY #21 contains nitrile compound 9 (adiponitrile, 644) at approximately 0.93 mol. % of the electrolyte. Nitrile compound 9 is a dinitrile compound, has a boiling point of about 296.3±13.0 °C, and has a Separation Parameter of 4. ELY #24 contains nitrile compound 12 at approximately 0.87 mol. % of the electrolyte. Nitrile compound 12 is a trinitrile compound, has a relatively high boiling point (greater than the boiling point of nitrile compound 1), and has a Separation Parameter of 6. ELY #25 contains nitrile compound 13 at approximately 0.87 mol. % of the electrolyte. Nitrile compound 13 is a trinitrile compound, has a relatively high boiling point (greater than the boiling point of nitrile compound 1), and has a Separation Parameter of 7. ELY #27 is a carbonate-based electrolyte, but contains no nitrile additives.

The ELY #20 sample exhibited a voltage change of 0.308 Ω. ELY #20 (ester-based electrolyte) does not contain any nitrile additive composition and exhibits the worst voltage change performance among the electrolytes listed in Table 11 of FIG. 24.

Li-ion battery test cells respectively comprising ELY #20 (ester-based, containing no nitrile additive composition), ELY #21 (ester-based), ELY #22 (ester-based), ELY #23 (ester-based), ELY #24 (ester-based), ELY #25 (ester-based), ELY #26 (carbonate-based), and ELY #27 (carbonate-based, containing no nitrile additive composition) were tested for residual capacities as follows. The test cells were fabricated, and an initial formation procedure was carried out on the test cells. The test cells were charged to a high state-of-charge (SOC of about 100 %) and the initial capacities were measured (this initial capacity is referred to as "pre-test capacity"). The cells were heated to a temperature of 72 °C and were maintained at a temperature of 72 °C for a period of 60 hours (high-temperature storage treatment). The test cells were then cooled to 25 °C and the residual capacities were measured 1 hour after reaching 25 °C. The residual capacity parameter is expressed as a ratio (in %) of the residual capacity (the remaining capacity) after the high-temperature storage treatment under a high state-of-charge (SOC) to the pre-test capacity. Residual capacity results are tabulated in Table 11 shown in FIG. 24. The ELY #22 and ELY #23 samples exhibited excellent residual capacity parameters (a residual capacity parameter is sometimes referred to as "residual capacity" herein) of 92.4 % and 92.6 %, respectively. ELY #22 contains nitrile compound 1 at approximately 0.87 mol. % of the electrolyte. Nitrile compound 1 is a trinitrile compound, has a relatively high boiling point (about 492.4±45.0 °C), and has a Separation Parameter of 6. ELY #23 contains nitrile compound 11 at approximately 0.87 mol. % of the electrolyte. Nitrile compound 11 is a trinitrile compound, has a relatively high boiling point (greater than the boiling point of nitrile compound 1), and has a Separation Parameter of 6.

The ELY #21, ELY #24, and ELY #25 samples exhibited very good residual capacity parameters (a residual capacity parameter is sometimes referred to as "residual capacity" herein) of 82.9 %, 87.0 %, and 85.9 %, respectively. ELY #21 contains nitrile compound 9 (adiponitrile, 644) at approximately 0.93 mol. % of the electrolyte. Nitrile compound 9 is a dinitrile compound, has a boiling point of about 296.3±13.0 °C, and has a Separation Parameter of 4. ELY #24 contains nitrile compound 12 at approximately 0.87 mol. % of the electrolyte. Nitrile compound 12 is a trinitrile compound, has a relatively high boiling point (greater than the boiling point of nitrile compound 1), and has a Separation Parameter of 6. ELY #25 contains nitrile compound 13 at approximately 0.87 mol. % of the electrolyte. Nitrile compound 13 is a trinitrile compound, has a relatively high boiling point (greater than the boiling point of nitrile compound 1), and has a Separation Parameter of 7.

The ELY #20 sample exhibited a residual capacity of 70.7 %. ELY #20 (ester-based electrolyte) does not contain any nitrile additive composition and has the worst residual capacity performance among all electrolytes listed in Table 11 of FIG. 24.

The ELY #26 sample exhibited a residual capacity of 87.5 %. ELY #26 contains nitrile additive 11 at approximately 0.65 mol. % of the electrolyte. Nitrile compound 11 is a trinitrile compound, has a relatively high boiling point (greater than the boiling point of nitrile compound 1), and has a Separation Parameter of 6. ELY #26, which is carbonate-based ELY, exhibited a residual capacity (87.5 %) that is worse than (lower than) its ester-based analogue ELY #23 (92.6 %).

The ELY #27 sample exhibited residual capacity of 72.8 %. ELY #27, which is a carbonate-based electrolyte that contains no nitrile additive composition, exhibited a residual capacity (72.8 %) that is worse than (lower than) the residual capacity exhibited by ELY #26 (87.5 %), which is another carbonate-based electrolyte that contains a nitrile additive composition (in this case, nitrile compound 11).

Li-ion battery test cells respectively comprising ELY #20 (ester-based, containing no nitrile additive composition), ELY #21 (ester-based), ELY #22 (ester-based), ELY #23 (ester-based), ELY #24 (ester-based), ELY #25 (ester-based), ELY #26 (carbonate-based), and ELY #27 (carbonate-based, containing no nitrile additive compositions) were tested for recoverable capacities as follows. The test cells were fabricated, and an initial formation procedure was carried out on the test cells. The test cells were charged to a high state-of-charge (SOC of about 100 %) and the initial capacities were measured (this initial capacity is referred to as "pre-test capacity"). The cells were heated to a temperature of 72 °C and were maintained at a temperature of 72 °C for a period of 60 hours (high-temperature storage treatment). The test cells were then cooled to 25 °C and the test cells were discharged starting 1 hour after reaching 25 °C. After being discharged, the test cells were charged to a high state-of-charge and the capacities (this capacity is referred to as "recoverable capacity") were measured. The recoverable capacity parameter is expressed as a ratio (in %) of the recoverable capacity to the pre-test capacity. Recoverable capacity results are tabulated in Table 11 shown in FIG. 24. The ELY #22 and ELY #23 samples exhibited excellent recoverable capacity parameters (a recoverable capacity parameter is sometimes referred to as "recoverable capacity" herein) of 98.8 %, and 98.8 %, respectively. ELY #22 contains nitrile compound 1 at approximately 0.87 mol. % of the electrolyte. Nitrile compound 1 is a trinitrile compound, has a relatively high boiling point (about 492.4±45.0 °C), and has a Separation Parameter of 6. ELY #23 contains nitrile compound 11 at approximately 0.87 mol. % of the electrolyte. Nitrile compound 11 is a trinitrile compound, has a relatively high boiling point (greater than the boiling point of nitrile compound 1), and has a Separation Parameter of 6.

The ELY #21, ELY #24 and ELY #25 samples exhibited very good recoverable capacity parameters (a recoverable capacity parameter is sometimes referred to as "recoverable capacity" herein) of 91.0 %, 94.7 %, and 92.6%, respectively. ELY #21 contains nitrile compound 9 (adiponitrile, 644) at approximately 0.93 mol. % of the electrolyte. ELY #21 contains nitrile compound 9 (adiponitrile, 644) at approximately 0.93 mol. % of the electrolyte. Nitrile compound 9 is a dinitrile compound, has a boiling point of about 296.3±13.0 °C, and has a Separation Parameter of 4. ELY #24 contains nitrile compound 12 at approximately 0.87 mol. % of the electrolyte. Nitrile compound 12 is a trinitrile compound, has a relatively high boiling point (greater than the boiling point of nitrile compound 1), and has a Separation Parameter of 6. ELY #25 contains nitrile compound 13 at approximately 0.87 mol. % of the electrolyte. Nitrile compound 13 is a trinitrile compound, has a relatively high boiling point (greater than the boiling point of nitrile compound 1), and has a Separation Parameter of 7.

The ELY #20 sample exhibited a recoverable capacity of 83.0 %. ELY #20 does not contain any nitrile additive composition and has the worst recoverable capacity performance among the ester-based electrolytes listed in Table 11 of FIG. 24 (ELY #20, #21, #22, #23, #24, and #25).

The ELY #26 sample exhibited a recoverable capacity of 93.5 %. ELY #26 contains nitrile additive 11 at approximately 0.65 mol. % of the electrolyte. Nitrile compound 11 is a trinitrile compound, has a relatively high boiling point (greater than the boiling point of nitrile compound 1), and has a Separation Parameter of 6. ELY #26, which is carbonate-based ELY, exhibited a recoverable capacity (93.5 %) that is worse than (lower than) its ester-based analogue ELY #23 (98.8 %).

The ELY #27 sample exhibited a recoverable capacity of 74.4 %. ELY #27 exhibited the worst recoverable capacity performance among all electrolytes listed in Table 11 of FIG. 24. ELY #27, which is carbonate-based electrolyte that contains no nitrile additive composition, exhibited a recoverable capacity (74.4 %) that is worse than (lower than) its ester-based analogue ELY #20 (83.0 %).

Measurement results of residual vinylene carbonate (VC) are listed in Table 9 shown in FIG. 22. Table 9 lists the measured residual VC, defined as a ratio (expressed in %) of the measured amount of VC present in the electrolyte in a Li-ion battery cell after a high-temperature (HT) outgassing test to the original amount of VC filled in the Li-ion battery cell during its assembly. The test cells were fabricated, with a known amount of electrolyte injected therein, and an initial formation procedure was carried out on the test cells. The test cells were charged to a high state-of-charge. The cells were heated to a temperature of 72 °C and were maintained at a temperature of 72 °C for a period of 60 hours (high-temperature storage treatment). The test cells were then cooled to 25 °C and the residual amount of VC in the electrolyte was measured after reaching a temperature of 25 °C. Table 9 lists the measured residual VC for Li-ion battery cells containing electrolytes (ELY) #1, #2, #3, #4, #5, #6, #7, #8, #9, #10, and #11, respectively. The measured residual VC ranged between 0.0 % (no residual VC detected) in the example of a Li-ion battery cell containing ELY #11, which contains no nitrile compounds, and 10.21 % in the examples of Li-ion battery cells containing ELY #2, which contains 1,3,6-hexanetricarbonitrile (**nitrile compound 2**), and ELY #10, which contains pyridine-2,6-dicarbonitrile (**nitrile compound 10**). The detailed composition of each these electrolytes (ELYs) is discussed elsewhere in this disclosure. Except for ELY #11, each of these electrolytes (ELYs) includes a respective nitrile compound. In the examples shown in Table 9 (FIG. 22), Li-ion battery cells containing electrolytes (ELYs) other than ELY #11 exhibited a measurable residual VC, after undergoing high-temperature storage conditions, ranging between 2.86 % and 10.21 %. Accordingly, the presence of a nitrile additive composition in an electrolyte can contribute to slowing down the consumption of VC during formation. In some implementations, VC and/or other compounds can be regarded as sacrificial compounds that are consumed during formation of SEI (solid-electrolyte interphase), and after the consumption of all of the VC, other electrolyte components can be consumed, leading to degradation of the electrolyte. Accordingly, in some implementations, electrolyte compositions in which there is residual VC after formation is preferable. In some implementations, it is preferable that an electrolyte of a Li-ion battery cell contain residual VC in a range of 1 to 20 % after undergoing high-temperature storage conditions.

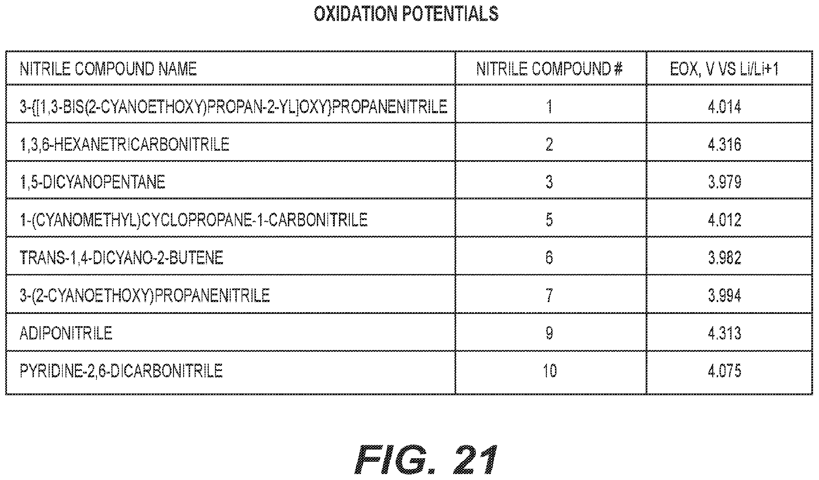

Measurements of the electrochemical oxidation potentials of the nitrile compounds was conducted in 1:1% V/V EC/DMC electrolyte containing 1.2M LiPF₆ in a 3-electrode cell using glassy carbon working electrodes, Li reference electrode and a platinum counter electrode. The oxidation potential results are tabulated in Table 8, shown in FIG. 21. Table 8 lists the oxidation potentials (Eₒₓ) measured vs. Li/Li⁺ of several selected nitrile compounds (corresponding to nitrile compounds 1 through 10): (3-{[1,3-bis(2-cyanoethoxy)propan-2-yl]oxy}propanenitrile, 1,3,6-hexanetricarbonitrile, 1,5-dicyanopentane, 1-(cyanomethyl) cyclopropane-1-carbonitrile, trans-1,4-dicyano-2-butene, 3-(2-cyanoethoxy) propanenitrile, adiponitrile, and pyridine-2,6-dicarbonitrile). In the examples shown, the oxidation potentials ranged between 3.979 V of 1,5-dicyanopentane and 4.316 V of 1,3,6-hexanetricarbonitrile. In some implementations, nitrile compounds suitable for use in a nitrile additive composition (NAC) are preferably characterized by electrochemical oxidation potentials in a range of about 3.9 V to about 4.4 V, or in a range of about 4.0 V to about 4.4 V, or in a range of about 4.3 V to about 4.4 V.

Test cells were fabricated and tested using nitrile compounds listed in Table 10 shown in FIGS. 23A and 23B. For each nitrile compound listed in Table 10, at least one electrolyte was prepared containing a nitrile additive composition in which the respective nitrile compound was its sole constituent. For each electrolyte, at least one test cell was fabricated and tested (according to metrics in the high-temperature outgassing test). In some implementations (e.g., ID numbers 602, 604, and 606, as illustrated in FIG. 7 and referenced in Table 10 in FIG. 23A) in which the average mass of the compound was less than 95, the thickness change and internal resistance change performance tended to be unsatisfactory (e.g., at least, for some applications). In some designs, the thickness change performance is regarded as unsatisfactory when the thickness change exceeds 15 %. In some designs, the internal resistance change performance is regarded as unsatisfactory when the IR change exceeds 0.075 Ω. Each of the nitrile compounds listed in Table 10 (FIGS. 23A, 23B) is a mononitrile (number of nitrile groups is 1), a dinitrile (2 nitrile groups), or a trinitrile (3 nitrile groups). In some implementations (e.g., ID numbers 640, 642, 648, 650, 652, 654, 656, 658, 660, 662, and 664, as illustrated in FIGS. 10-13 and referenced in Table 10 in FIG. 23B) in which the nitrile additive composition includes a single (e.g., consists solely of a) mononitrile compound, the thickness change, internal resistance change, residual capacity, and recoverable capacity performance tended to be unsatisfactory (e.g., at least, for some applications). In some designs, the residual capacity performance is regarded as unsatisfactory when the residual capacity is less than 79.8 %. In some designs, the recoverable capacity is regarded as unsatisfactory when the recoverable capacity is less than 94.1 %. Accordingly, in some embodiments, the nitrile additive composition (NAC) contains at least one nitrile compound, in which the number of nitrile groups of the nitrile compound is preferably 2 or 3 and the molecular weight (average mass of the compound) is preferably 95 or more. In some embodiments, the nitrile additive composition (NAC) may contain at least one nitrile compound, in which the number of nitrile groups of the nitrile compound may preferably be 2 or 3 and the molecular weight (average mass of the compound) may preferably be in a range of 95 to 350.

In some implementations in which the nitrile additive composition (NAC) contains nitrile compounds including a trifluoromethyl group (e.g., ID numbers 648, 650, 652, 654, 656, 658, 660, 662, and 664, as illustrated in FIGS. 11-13 and referenced in Table 10 in FIG. 23B), the thickness change, internal resistance change, residual capacity, and/or recoverable capacity performance tended to be unsatisfactory (e.g., at least, for some applications). Accordingly, in some embodiments, it may be preferable that the at least one nitrile compound of the nitrile additive composition (NAC) does not include any trifluoromethyl group.

In some implementations in which the nitrile additive composition (NAC) contains nitrile compounds including a carboxyl group (e.g., ID numbers 626, 638, 640, and 642, as illustrated in FIGS. 9-11 and referenced in Table 10 in FIGS. 23A-23B), the thickness change, internal resistance change, and/or recoverable capacity performance tended to be unsatisfactory (e.g., at least, for some applications). Accordingly, in some embodiments, it may be preferable that the at least one nitrile compound of the nitrile additive composition (NAC) does not include any carboxyl group.

In an implementation in which the nitrile additive composition (NAC) contains a nitrile compound including a tetrafluorobenzene group (ID number 636, as illustrated in FIG. 10, and referenced in Table 10 in FIG. 23B), the thickness change, internal resistance change, and recoverable capacity performance was unsatisfactory (e.g., at least, for some applications). Accordingly, in some embodiments, it may be preferable that the at least one nitrile compound of the nitrile additive composition (NAC) does not include any tetrafluorobenzene group.

In an implementation in which the nitrile additive composition (NAC) contains a nitrile compound including an oxane group (ID number 632, as illustrated in FIG. 10, and referenced in Table 10 in FIG. 23A), the thickness change, internal resistance change, and recoverable capacity performance was unsatisfactory (e.g., at least, for some applications). Accordingly, in some embodiments, it may be preferable that the at least one nitrile compound of the nitrile additive composition (NAC) does not include any oxane group.

In an implementation in which the nitrile additive composition (NAC) contains a nitrile compound including a thiophene group (ID number 628, as illustrated in FIG. 9, and referenced in Table 10 in FIG. 23A), the thickness change, internal resistance change, and recoverable capacity performance was unsatisfactory (e.g., at least, for some applications). Accordingly, in some embodiments, it may be preferable that the at least one nitrile compound of the nitrile additive composition (NAC) does not include any thiophene group.

In some implementations in which the nitrile additive composition (NAC) contains nitrile compounds including heteroarylene that is unsubstituted (other than the nitrile groups) or substituted with C₁₋₆ alkyl (e.g., nitrile compounds 8 and 10, see results shown in Table 3 and Table 5), favorable results were obtained for voltage change, residual capacity, and/or recoverable capacity performance. Accordingly, in some embodiments, it may be preferable that the at least one nitrile compound of the nitrile additive composition (NAC) includes a heteroarylene group that is unsubstituted or substituted with C₁₋₆ alkyl. In some embodiments, it may be preferable that the heteroarylene group be an imidazole group or a pyridine group.

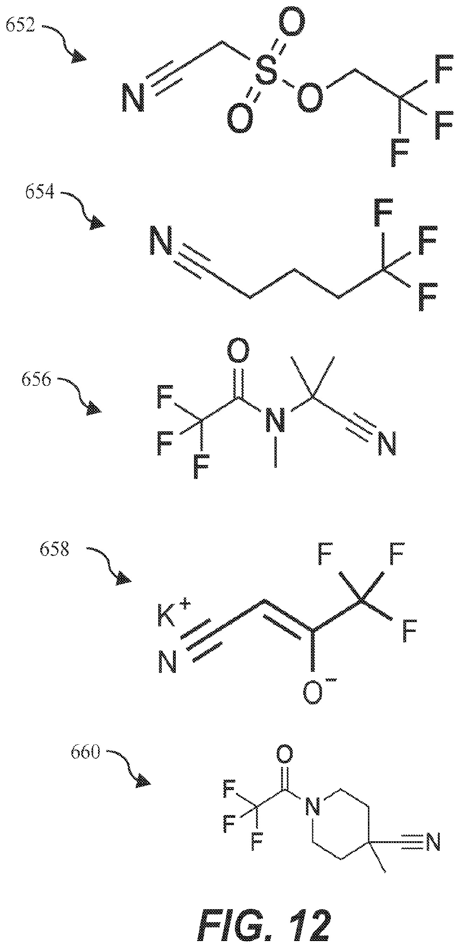

In some implementations in which the nitrile additive composition (NAC) contains nitrile compounds that are ionic (e.g., ID numbers 638 and 658, as illustrated in FIG. 10 and FIG. 12, respectively, and referenced in Table 10 in FIG. 23A), the thickness change, internal resistance change, and/or recoverable capacity performance may tend to be unsatisfactory (e.g., at least, for some applications). Accordingly, in some embodiments, it may be preferable that the at least one nitrile compound of the nitrile additive composition (NAC) be nonionic.

As used herein, "Separation Parameter" is defined as the number of carbon atoms along the shortest connection between two adjacent nitrile groups in a nitrile compound having two or more nitrile groups. In some implementations in which the nitrile additive composition (NAC) contains a nitrile compound characterized by a Separation Parameter of 1 (e.g., ID numbers 602, 604, 606, 614, 624, and 638, as illustrated in FIGS. 7-10, and referenced in Table 10 in FIGS. 23A-23B), the thickness change, internal resistance change, and/or recoverable capacity performance may tend to be unsatisfactory (e.g., at least, for some applications). Accordingly, in some embodiments, it may be preferable that the at least one nitrile compound of the nitrile additive composition (NAC) be characterized by a Separation Parameter of 2 or more. In some embodiments, it may be preferable that carbon atoms in a shortest chain between two adjacent nitrile groups of the nitrile compound number 2 or more. The nitrile compounds listed in Table 10 are characterized by a Separation Parameter of 1, 2, 3, 4, 5, 6, or 7 excluding mononitriles (in which case the Separation Parameter is not applicable). Accordingly, in some embodiments, it may be preferable that the at least one nitrile compound of the nitrile additive composition (NAC) be characterized by a Separation Parameter of 2, 3, 4, 5, 6, or 7. In some embodiments, it may be preferable that carbon atoms in a shortest chain between two adjacent nitrile groups of the nitrile compound number 2, 3, 4, 5, 6, or 7.

In some implementations in which the nitrile additive composition (NAC) contains nitrile compounds that have densities of 1.5 ± 0.1 g/cm³ (e.g., ID numbers 636, 648, 652, 662, and 664, as illustrated in FIGS. 10-13, and referenced in Table 10 in FIG. 23B), the thickness change, internal resistance change, residual capacity and/or recoverable capacity performance may tend to be unsatisfactory (e.g., at least, for some applications). The nitrile compounds listed in Table 10 are characterized by densities ranging between 0.9 ± 0.1 g/cm³ and 1.5 ± 0.1 g/cm³. Accordingly, in some embodiments, it may be preferable that the at least one nitrile compound of the nitrile additive composition (NAC) have a density in a range of approximately 0.9 g/cm³ to approximately 1.4 g/cm³.

In some implementations (e.g., ID numbers 602, 604, and 606, as illustrated in FIG. 7, and referenced in Table 10 in FIG. 23A), the average mass of the nitrile compound in the nitrile additive composition was less than 95. The boiling points of these nitrile compounds are 218.5±0.0 °C (malononitrile, ID 602, as illustrated in FIG. 7, and referenced in Table 10 in FIG. 23A), 197.5±0.0 °C (methyl malononitrile, ID 604, as illustrated in FIG. 7, and referenced in Table 10 in FIG. 23A), and 169.5±0.0 °C (dimethyl malononitrile, ID 606, as illustrated in FIG. 7, and referenced in Table 10 in FIG. 23A), respectively. The boiling point values discussed herein are estimated at approximately 760 mm Hg. There are other nitrile compounds listed on Table 10 that are characterized by boiling points of less than approximately 250 °C at approximately 760 mm Hg, such as 2-butylpropanedinitrile (234.2±13.0 °C at approximately 760 mm Hg, ID 614, as illustrated in FIG. 8, and referenced in Table 10 in FIG. 23A), ethyl cyanoacetate (203.6±8.0 °C at approximately 760 mm Hg, ID 640, as illustrated in FIG. 10, and referenced in Table 10 in FIG. 23B), cyanomethyl 2-methylpropanoate (193.3±13.0 °C at approximately 760 mm Hg, ID 642, as illustrated in FIG. 11, and referenced in Table 10 in FIG. 23B), 5,5,5-trifluoropentanenitrile (129.0±40.0 °C at approximately 760 mm Hg, ID 654, as illustrated in FIG. 12, and referenced in Table 10 in FIG. 23B), and 3,5-bis(trifluoromethyl)benzonitrile (175.8±35.0 °C at approximately 760 mm Hg, ID 664, as illustrated in FIG. 13, and referenced in Table 10 in FIG. 23B). In some implementations in which the nitrile additive composition (NAC) contains a nitrile compound characterized by boiling points of less than approximately 250 °C at approximately 760 mm Hg, the thickness change, internal resistance change, and/or recoverable capacity performance tended to be unsatisfactory (e.g., at least, for some applications). Accordingly, in some embodiments, it may be preferable that the at least one nitrile compound of the nitrile additive composition (NAC) have a boiling point of approximately 250 °C or more at approximately 760 mm Hg. In some embodiments, it may be preferable that the at least one nitrile compound of the nitrile additive composition (NAC) have a boiling point in a range of approximately 250 °C to approximately 500 °C at approximately 760 mm Hg.

The following general procedure can be used for the synthesis of nitrile compound 11, nitrile compound 12, and nitrile compound 13: To a mixture of 101 mmol of polyatomic alcohol in tetrahydrofuran (THF) (200 ml) and potassium hydroxide (2.027 mol) in 10 ml of water was added 1.014 mol of acrylonitrile at 0-10 °C. Reaction mixture stirred 3h at rt and then heated at 45 °C overnight. After completion of the reaction, reaction mixture was evaporated, diluted with water, and extracted with methyl tert-butyl ether. Combined organic layers washed with brine, and dried over anhydrous magnesium sulfate. After filtration, the solvent was removed under reduced pressure and crude product was purified by flash chromatography to afford the target compound.

Synthesis of nitrile compound 11. To a mixture of hexane-1,2,6-triol (7.8 g) (0.058 mol) in 200 ml of THF and potassium hydroxide (2.027 mol) in 10 ml of deionized water was added acrylonitrile (1.014 mol) at 0-10 °C. The reaction mixture was stirred at room temperature for 3 hours and then heated at 45 °C overnight. After completion of the reaction (monitoring by LC/MS), reaction mixture was evaporated, diluted with water, and extracted with methyl tert-butyl ether (3×50 ml). Combined organic layers was washed with brine, and then dried over anhydrous magnesium sulfate. After filtration, the solvent was distilled off under reduced pressure and crude product was purified by flash chromatography (80 g hexane/methyl tert-butyl ether from 0~30%, flow rate of 65mL/min) to afford 3-{[1,6-bis(2-cyanoethoxy)hexan-2-yl]oxy}propanenitrile (11.40 g, 38.86 mmol, 67% yield) as a colorless liquid. Nitrile compound 11 was characterized by liquid chromatography/mass spectrometry (LC/MS or LS) and by proton nuclear magnetic resonance (¹H NMR) as follows: LS ([M+H]⁺, *m*/*z*): 294.2, ¹H NMR (500 MHz, Chloroform-d): δ 3.88 (dt, *J =* 9.6, 6.0 Hz, 1H), 3.73 (ddd, *J =* 9.5, 6.9, 5.7 Hz, 1H), 3.68 (t, *J =* 6.2 Hz, 2H), 3.62 (t, *J =* 6.3 Hz, 2H), 3.57 - 3.46 (m, 5H), 2.67 - 2.52 (m, 6H), 1.60 (dqd, *J =* 8.1, 6.2, 5.8, 3.4 Hz, 2H), 1.56 - 1.39 (m, 4H).

Synthesis of nitrile compound 12. Nitrile compound 12 was prepared in 65% yield as a colorless liquid by following the general procedure described for nitrile compound 11, starting from butane-1,2,4-triol. Nitrile compound 12 has been characterized by gas chromatography/mass spectrometry (GC/MS), proton nuclear magnetic resonance (¹H NMR), and Carbon-13 nuclear magnetic resonance (¹³C NMR) as follows: GC/MS (*m*/*z*): 265.1, ¹H NMR (500 MHz, Chloroform-d) δ 3.93 (dt, *J =* 9.7, 5.6 Hz, 1H), 3.75 (dtd, *J =* 9.7, 5.3, 1.7 Hz, 2H), 3.73 - 3.64 (m, 5H), 3.61 - 3.50 (m, 3H), 2.64 - 2.57 (m, 6H), 1.80 (ddt, *J* = 13.8, 9.2, 4.7 Hz, 1H), 1.72 - 1.66 (m, 1H), ¹³C NMR δ 118.56, 118.26, 118.00, 76.05, 74.61, 66.80, 66.04, 65.48, 65.40, 31.83, 19.49, 19.08.

Synthesis of nitrile compound 13. Nitrile compound 13 was prepared in 63% yield as a colorless liquid by following the general procedure described for nitrile compound 11 starting from 1,1,1-tris(hydroxymethyl)-ethane. Nitrile compound 13 has characterized by GC/MS and ¹H NMR as follows: GC/MS (*m*/*z*): 280.9, ¹H NMR (500 MHz, Chloroform-d): δ 3.64 (t, *J =* 6.1 Hz, 6H), 3.38 (s, 6H), 2.59 (t, *J =* 6.1 Hz, 6H), 0.97 (s, 3H).

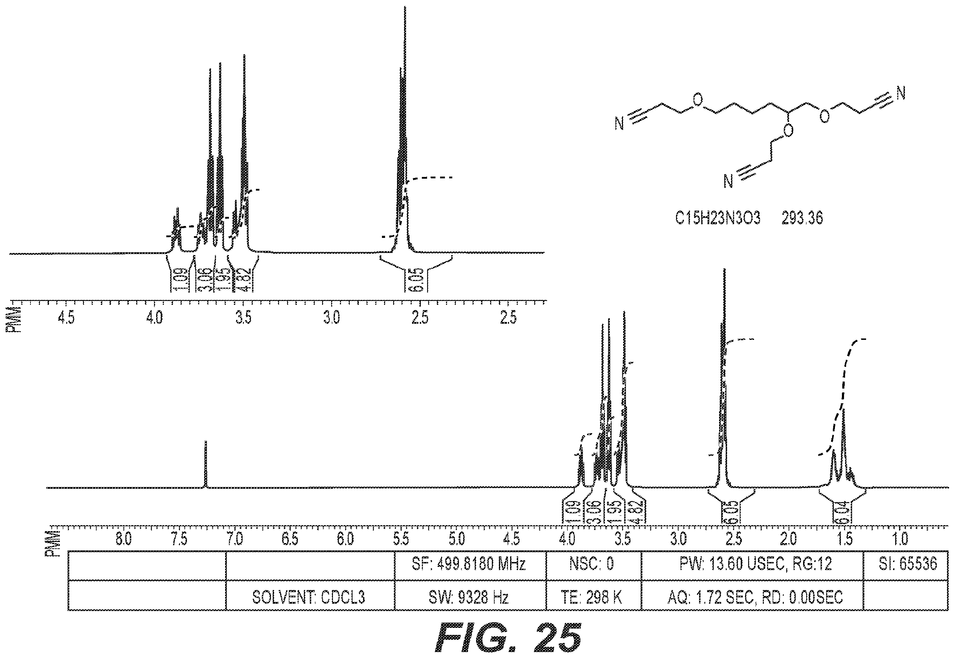

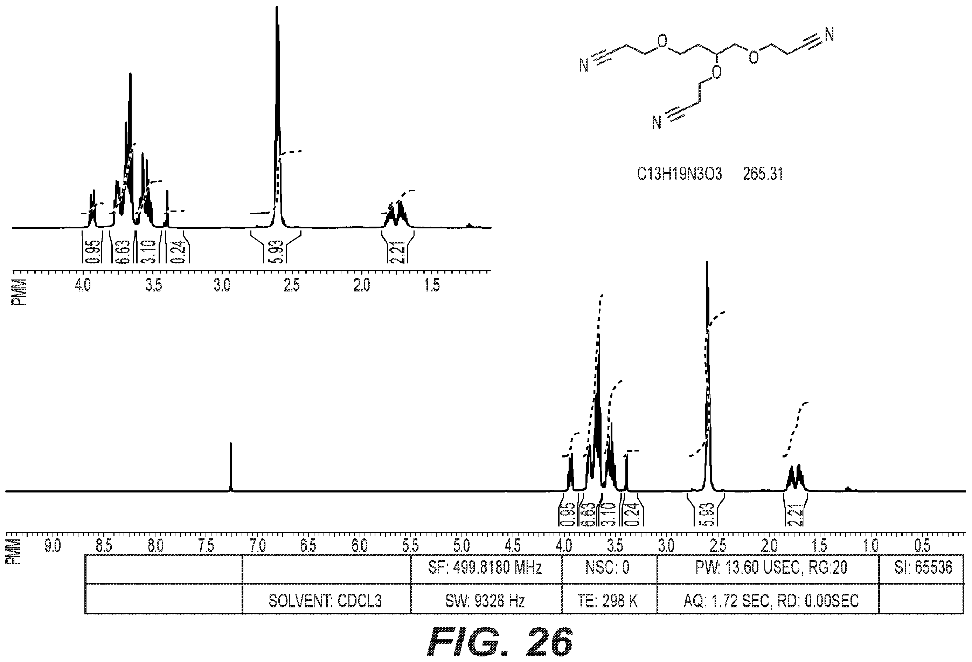

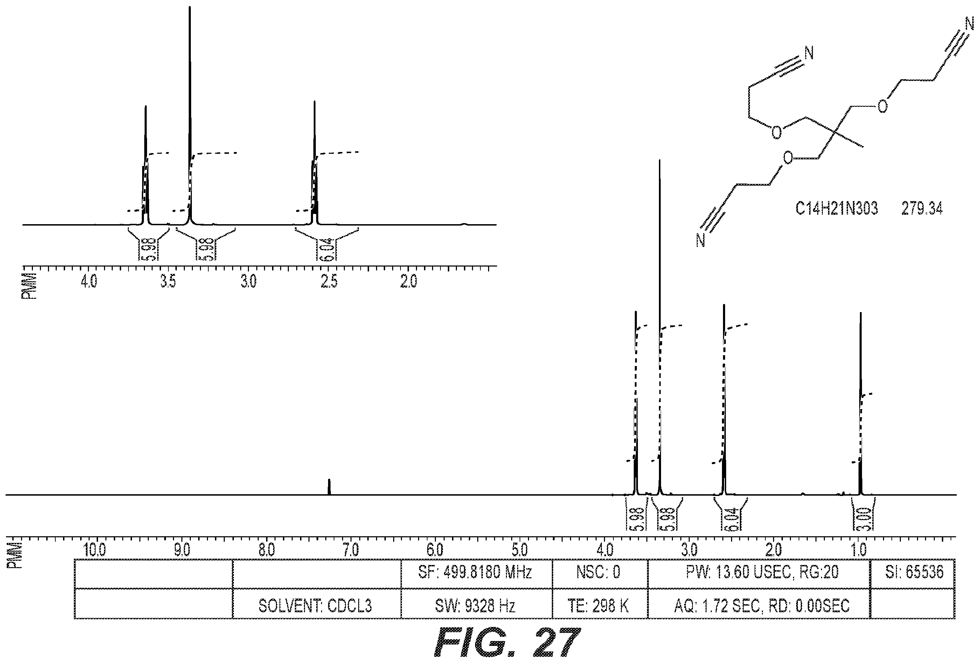

FIGS. 25, 26, and 27 show the ¹H NMR spectra of nitrile compounds 11, 12, and 13, respectively.

The above-described exemplary nanocomposite particles (e.g., anode or cathode particles) may generally be of any shape (e.g., near-spherical or a spheroidal or an ellipsoid (e.g., including oblate spheroid), cylindrical, plate-like, have a random shape, etc.) and of any size. The maximum size of the particle may depend on the rate performance requirements, on the rate of the ion diffusion into the partially filled particles, and/or on other parameters. For most applications, the average diffusion distance from the solid-electrolyte interphase (e.g., from the surface of the composite particles) to the inner core of the composite particles may be smaller than about 10 microns for the optimal performance.

Some aspects of this disclosure may also be applicable to conventional intercalation-type electrodes (e.g., lower voltage cathodes) and provide benefits of improved rate performance or improved stability, particularly for electrodes with medium and high capacity loadings (e.g., greater than about 3-4 mAh/cm²).

This description is provided to enable any person skilled in the art to make or use embodiments of the present invention. It will be appreciated, however, that the present invention is not limited to the particular formulations, process steps, and materials disclosed herein.

## Claims

1. An electrolyte for a lithium-ion battery (100), comprising:
a primary lithium salt; and
an organic compound composition comprising (1) fluoroethylene carbonate (FEC) (204), (2) vinylene carbonate (VC) (202), (3) at least one ester (ES) (402; 404; 406; 408; 410; 412; 414; 416; 418; 420; 422; 424; 426), and (4) a nitrile additive composition (NAC) comprising at least one nitrile compound (602; 604; 606; 608; 610; 612; 614; 616; 618; 620; 622; 624; 626; 628; 630; 632; 634; 636; 638; 640; 642; 644; 646; 648; 650; 652; 654; 656; 658; 660; 662; 664; 672; 674; 676);
wherein a mole fraction of the NAC in the electrolyte is in a range of 0.1 mol. % to 2.0 mol. %; and
wherein a mole fraction of the at least one ES in the electrolyte is at least 35 mol. %;
wherein the at least one nitrile compound is represented by a formula: 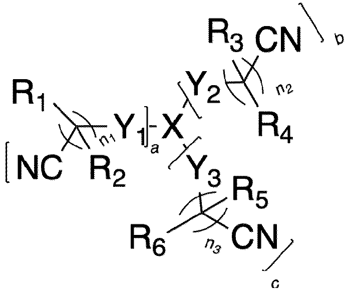
each of R₁ and R₂ represents hydrogen,
(a) each of R₃, R₄, R₅, and R₆ independently represents hydrogen, C₁₋₆ alkyl, C₃₋₆ cycloalkyl, C₂₋₆ alkenyl, or C₂₋₆ alkynyl, and/or (b) each of R₃ and R₄ taken together (R₃+R₄), and R₅ and R₆ taken together (R₅+R₆) represents C₃₋₆ cycloalkyl;
X represents C₁₋₆ alkylene;
Y₁ represents O;
each of Y₂ and Y₃ independently represents O or a single C-C bond;
each of n₁ and n₃ independently represents an integer number between 0 and 10;
each of a and b represents an integer number of 1; and
wherein:
c represents 0, Y₂ represents a single C-C bond, n₁ represents 2, and n₂ represents 0, or
c represents 1, each of Y₂ and Y₃ represents O, each of n₁, n₂, and n₃ represents 2, and each of R₃, R₄, R₅, and R₆ represents hydrogen.

2. The electrolyte of claim 1, wherein c represents 0, Y₂ represents a single C-C bond, n₁ represents 2, and n₂ represents 0.

3. The electrolyte of claim 2, wherein:
the nitrile compound is 3-(2-cyanoethoxy) propanenitrile.

4. The electrolyte of claim 1, wherein c represents 1, each of Y₂, and Y₃ represents O, each of n₁, n₂, and n₃ represents 2, and each of R₃, R₄, R₅, and R₆ represents hydrogen.

5. The electrolyte of claim 4, wherein:
the nitrile compound is selected from 3-{[1,3-bis(2-cyanoethoxy)propan-2-yl]oxy} propanenitrile, 3-{[1,6-bis(2-cyanoethoxy)hexan-2-yl]oxy}propanenitrile, 3-[3,4-bis-(2-cyano-ethoxy)-butoxy]-propionitrile, and 3,3'-((2-((2-cyanoethoxy)methyl)-2-methylpropane-1,3-diyl)bis(oxy))dipropanenitrile.

6. The electrolyte of claim 1, wherein the primary lithium salt is LiPF₆.

7. The electrolyte of claim 1, wherein a mole fraction of the primary lithium salt in the electrolyte is in a range of 8 mol. % to 15 mol. %.

8. The electrolyte of claim 1, additionally comprising at least one additive lithium salt;
wherein the at least one additive lithium salt is selected from lithium difluorophosphate (LFO), lithium tetrafluoroborate (LiBF₄), lithium bis(fluorosulfonyl)imide (LiFSI), lithium fluorosulfate (LiSO₃F), and lithium difluoro(oxalato)borate (LiDFOB), or
wherein a mole fraction of the at least one additive lithium salt is in a range of 0.2 mol. % to 2.4 mol. %.

9. The electrolyte of claim 1,
wherein the mole fraction of the at least one ES is in a range of 35 mol. % to 75 mol. %, or
wherein the mole fraction of the at least one ES is in a range of 39 mol. % to 61 mol. %, or
wherein the mole fraction of the at least one ES is at least 39 mol. %, or
wherein the mole fraction of the at least one ES is at least 60 mol. %.

10. The electrolyte of claim 1, wherein the at least one ES is selected from ethyl propionate (EP) (402), propyl propionate (PP) (404), ethyl isobutyrate (EI) (406), methyl isobutyrate (MI) (408), methyl butyrate (MB) (410), ethyl trimethylacetate (ET) (412), ethyl isovalerate (EIV) (414), ethyl 2-methylbutyrate (EMB) (416), methyl isovalerate (MIV) (420), methyl trimethylacetate (MT) (418), methyl 2-methylbutyrate (MMB) (422), methyl acetate (MA) (424), and ethyl acetate (EA) (426).

11. The electrolyte of claim 1, wherein:
a mole fraction of the VC in the electrolyte is in a range of 0.25 mol. % to 1 mol. % or in a range of 1.0 mol. % to 4.5 mol. %, or
wherein a mole fraction of the FEC in the electrolyte is in a range of 8 mol. % to is 30 mol. %.

12. A lithium-ion battery (100), comprising:
an anode (102);
a cathode (103);
a separator (104) interposed between the anode and the cathode; and
the electrolyte of claim 1 ionically coupling the anode and the cathode.

13. The electrolyte of claim 1, wherein:
a number of nitrile groups of the at least one nitrile compound is 2 or 3; and
a molecular weight of the at least one nitrile compound is in a range of 95 to 294.

14. The electrolyte of claim 13, wherein:
carbon atoms in a shortest chain between two adjacent nitrile groups of the at least one nitrile compound number 2 or more, or
the carbon atoms in the shortest chain between the two adjacent nitrile groups of the at least one nitrile compound number 2, 3, 4, 5, 6, or 7, or
a density of the at least one nitrile compound is in a range of 0.9 g/cm³ to 1.4 g/cm³, or
a boiling point of the at least one nitrile compound is in a range of 250 °C to 500 °C at 760 mm Hg, or
the at least one nitrile compound includes a heteroarylene group that is unsubstituted or substituted with C₁₋₆ alkyl, or
the at least one nitrile compound includes a heteroarylene group that is an imidazole group or a pyridine group, or
the at least one nitrile compound is nonionic, or
the at least one nitrile compound does not include any trifluoro methyl group, or
the at least one nitrile compound does not include any tetrafluorobenzene group, or
the at least one nitrile compound does not include any thiophene group, or
the at least one nitrile compound does not include any carboxyl group, or
the at least one nitrile compound does not include any oxane group.

15. The electrolyte of claim 1, wherein:
the organic compound composition additionally comprises a non-fluorinated cyclic carbonate other than VC, or
the organic compound composition additionally comprises ethylene carbonate.

## Patentansprüche

1. Elektrolyt für eine Lithium-Ionen-Batterie (100), umfassend:
ein primäres Lithiumsalz; und
eine organische Verbindungszusammensetzung, umfassend (1) Fluoroethylencarbonat (FEC) (204), (2) Vinylencarbonat (VC) (202), (3) mindestens einen Ester (ES) (402; 404; 406; 408; 410; 412; 414; 416; 418; 420; 422; 424; 426), und (4) eine Nitriladditivzusammensetzung (NAC), die mindestens eine Nitrilverbindung (602; 604; 606; 608; 610; 612; 614; 616; 618; 620; 622; 624; 626; 628; 630; 632; 634; 636; 638; 640; 642; 644; 646; 648; 650; 652; 654; 656; 658; 660; 662; 664; 672; 674; 676) umfasst;
wobei ein Molenbruch der NAC in dem Elektrolyten in einem Bereich von 0,1 Mol-% bis 2,0 Mol-% liegt; und
wobei ein Molenbruch des mindestens einen ES in dem Elektrolyten mindestens 35 Mol-% beträgt;
wobei die mindestens eine Nitrilverbindung durch eine Formel dargestellt wird: 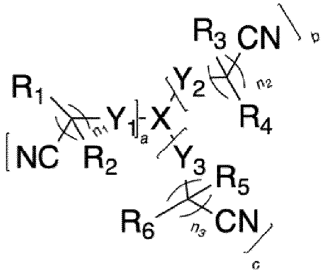
wobei R₁ und R₂ stellen jeweils Wasserstoff dar,
(a) R₃, R₄, R₅ und R₆ stellen jeweils unabhängig voneinander Wasserstoff, C₁₋₆-Alkyl, C₃₋₆-Cycloalkyl, C₂₋₆-Alkenyl oder C₂₋₆-Alkinyl dar und/oder (b) R₃ und R₄ zusammengenommen (R₃+R₄) und R₅ und R₆ zusammengenommen stellen (R₅+ R₆) C₃₋₆-Cycloalkyl dar;
X stellt C₁₋₆-Alkylen dar;
Y₁ stellt 0 dar;
Y₂ und Y₃ stellen jeweils unabhängig voneinander 0 oder eine einzige C-C-Bindung dar;
n1 und n3 stellen jeweils unabhängig voneinander eine ganze Zahl zwischen 0 und 10 dar;
a und b stellen jeweils eine ganze Zahl von 1 dar; und
worin:
c stellt 0 dar, Y₂ stellt eine einzige C-C-Bindung dar, n₁ stellt 2 dar und n₂ stellt 0 dar, oder
c stellt 1 dar, Y₂ und Y₃ stellen jeweils 0 dar, n₁, n₂ und n₃ stellen jeweils 2 dar, n₁, n₂ und n₃ und R₃, R₄, R₅ und R₆ stellen jeweils Wasserstoff dar.

2. Elektrolyt nach Anspruch 1, wobei c stellt 0 dar, Y₂ stellt eine einzige C-C-Bindung dar, n₁ stellt 2 dar und n₂ stellt 0 dar.

3. Elektrolyt nach Anspruch 2, wobei:
die Nitrilverbindung 3-(2-Cyanoethoxy)-propannitril ist.

4. Elektrolyt nach Anspruch 1, wobei c stellt 1 dar, Y₂ und Y₃ stellen jeweils 0 dar, n₁, n₂ und n₃ stellen jeweils 2 dar und R₃, R₄, R₅ und R₆ stellen jeweils Wasserstoff dar.

5. Elektrolyt nach Anspruch 4, wobei:
die Nitrilverbindung ausgewählt ist aus 3-{[1,3-Bis(2-cyanoethoxy)propan-2-yl]oxy}propannitril, 3-{[1,6-bis(2-cyanoethoxy)hexan-2-yl]oxy}propannitril, 3-[3,4-bis-(2-cyanoethoxy)-butoxy]-propionitril und 3,3'-((2-((2-Cyanoethoxy)methyl)-2-methylpropan-1,3-diyl)bis(oxy))dipropannitril.

6. Elektrolyt nach Anspruch 1, wobei das primäre Lithiumsalz LiPF₆ ist.

7. Elektrolyt nach Anspruch 1, wobei ein Molenbruch des primären Lithiumsalzes in dem Elektrolyten in einem Bereich von 8 Mol-% bis 15 Mol-% liegt.

8. Elektrolyt nach Anspruch 1, der zusätzlich mindestens ein additives Lithiumsalz enthält;
wobei das mindestens eine zugesetzte Lithiumsalz ausgewählt ist aus Lithiumdifluorophosphat (LFO), Lithiumtetrafluoroborat (LiBF₄), Lithiumbis(fluorosulfonyl)imid (LiFSI), Lithiumfluorosulfat (LiSO₃F) und Lithiumdifluoro(oxalato)borat (LiDFOB), oder
wobei ein Molenbruch des mindestens einen additiven Lithiumsalzes in einem Bereich von 0,2 Mol-% bis 2,4 Mol-% liegt.

9. Elektrolyt nach Anspruch 1,
wobei der Molenbruch des mindestens einen ES in einem Bereich von 35 Mol-% bis 75 Mol-% liegt, oder
wobei der Molenbruch des mindestens einen ES in einem Bereich von 39 Mol-% bis 61 Mol-% liegt, oder
wobei der Molenbruch des mindestens einen ES mindestens 39 Mol-% beträgt, oder
wobei der Molenbruch des mindestens einen ES mindestens 60 Mol-% beträgt.

10. Elektrolyt nach Anspruch 1, wobei das mindestens eine ES ausgewählt ist aus Ethylpropionat (EP) (402), Propylpropionat (PP) (404), Ethylisobutyrat (EI) (406), Methylisobutyrat (MI) (408), Methylbutyrat (MB) (410), Ethyltrimethylacetat (ET) (412), Ethylisovalerat (EIV) (414), Ethyl-2-methylbutyrat (EMB) (416), Methylisovalerat (MIV) (420), Methyltrimethylacetat (MT) (418), Methyl-2-methy1butyrat (MMB) (422), Methylacetat (MA) (424) und Ethylacetat (EA) (426).

11. Elektrolyt nach Anspruch 1, wobei:
ein Molenbruch des VC in dem Elektrolyten in einem Bereich von 0,25 Mol-% bis 1 Mol-% oder in einem Bereich von 1,0 Mol-% bis 4,5 Mol-% liegt, oder
wobei ein Molenbruch des FEC in dem Elektrolyten in einem Bereich von 8 Mol-% bis 30 Mol-% liegt.

12. Eine Lithium-Ionen-Batterie (100), die Folgendes umfasst:
eine Anode (102);
eine Kathode (103);
einen Separator (104), der zwischen der Anode und der Kathode angeordnet ist; und
wobei der Elektrolyt nach Anspruch 1 die Anode und die Kathode ionisch koppelt.

13. Elektrolyt nach Anspruch 1, wobei:
eine Anzahl von Nitrilgruppen der mindestens einen Nitrilverbindung 2 oder 3 beträgt; und
ein Molekulargewicht der mindestens einen Nitrilverbindung in einem Bereich von 95 bis 294 liegt.

14. Elektrolyt nach Anspruch 13, wobei:
Kohlenstoffatome in einer kürzesten Kette zwischen zwei benachbarten Nitrilgruppen der mindestens einen Nitrilverbindung zählen 2 oder mehr, oder
die Kohlenstoffatome in der kürzesten Kette zwischen den beiden benachbarten Nitrilgruppen der mindestens einen Nitrilverbindung zählen 2, 3, 4, 5, 6 oder 7, oder
eine Dichte der mindestens einen Nitrilverbindung in einem Bereich von 0,9 g/cm³ bis 1,4 g/cm³ liegt, oder
ein Siedepunkt der mindestens einen Nitrilverbindung in einem Bereich von 250°C bis 500°C bei 760 mm Hg liegt, oder
die mindestens eine Nitrilverbindung eine Heteroarylengruppe enthält, die unsubstituiert oder mit C₁₋₆-Alkyl substituiert ist, oder
die mindestens eine Nitrilverbindung eine Heteroarylengruppe enthält, die eine Imidazolgruppe oder eine Pyridingruppe ist, oder
die mindestens eine Nitrilverbindung nicht-ionisch ist, oder
die mindestens eine Nitrilverbindung keine Trifluormethylgruppe enthält, oder
die mindestens eine Nitrilverbindung keine Tetrafluorbenzolgruppe enthält, oder
die mindestens eine Nitrilverbindung keine Thiophengruppe enthält, oder
die mindestens eine Nitrilverbindung keine Carboxylgruppe enthält, oder
die mindestens eine Nitrilverbindung keine Oxangruppe enthält.

15. Elektrolyt nach Anspruch 1, wobei:
die organische Verbindungszusammensetzung zusätzlich ein von VC verschiedenes nicht-fluoriertes cyclisches Carbonat enthält, oder
die organische Verbindungszusammensetzung zusätzlich Ethylencarbonat enthält.

## Revendications

1. Électrolyte pour une batterie lithium-ion (100), comprenant :
un sel de lithium primaire ; et
une composition de composés organiques comprenant (1) du carbonate de fluoroéthylène (FEC) (204), (2) du carbonate de vinylène (VC) (202), (3) au moins un ester (ES) (402 ; 404 ; 406 ; 408 ; 410 ; 412 ; 414 ; 416 ; 418 ; 420 ; 422 ; 424 ; 426), et (4) une composition d'additif nitrile (NAC) comprenant au moins un composé nitrile (602 ; 604 ; 606 ; 608 ; 610 ; 612 ; 614 ; 616 ; 618 ; 620 ; 622 ; 624 ; 626 ; 628 ; 630 ; 632 ; 634 ; 636 ; 638 ; 640 ; 642 ; 644 ; 646 ; 648 ; 650 ; 652 ; 654 ; 656 ; 658 ; 660 ; 662 ; 664 ; 672 ; 674 ; 676) ;
dans lequel une fraction molaire de la NAC dans l'électrolyte est comprise entre 0,1 % en moles et 2,0 % en moles ; et
dans lequel une fraction molaire de l'au moins un ES dans l'électrolyte est au moins 35 % en moles ;
dans lequel l'au moins un composé nitrile est représenté par une formule : 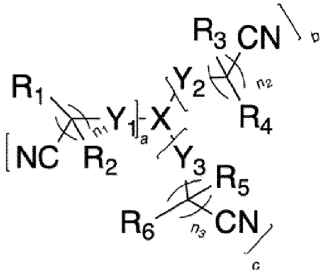
R₁ et R₂ représentent chacun l'hydrogène,
(a) R₃, R₄, R₅ et R₆ représentent chacun indépendamment l'hydrogène, un alkyle en C₁₋₆, un cycloalkyle en C₃₋₆, un alcényle en C₂₋₆ ou un alcynyle en C₂₋₆, et/ou (b) chacun des R₃ et R₄ pris ensemble (R₃+R₄), et R₅ et R₆ pris ensemble (R₅+R₆) représentent le cycloalkyle en C₃₋₆ ;
X représente l'alkyle en C₁₋₆ ;
Y₁ représente 0 ;
Y₂ et Y₃ représentent chacun indépendamment 0 ou une simple liaison C-C ;
n₁ et n₃ représentent chacun indépendamment un nombre entier compris entre 0 et 10 ;
a et b représentent chacun un nombre entier de 1 ; et
dans lequel :
c représente 0, Y₂ représente une seule liaison C-C, n₁ représente 2, et n₂ représente 0, ou
c représente 1, Y₂ et Y₃ représentent chacun 0, n₁, n₂ et n₃ représentent chacun 2, n₁, n₂ et n₃, et R₃, R₄, R₅ et R₆ représentent chacun l'hydrogène.

2. Électrolyte de la revendication 1, dans lequel c représente 0, Y₂ représente une seule liaison C-C, n₁ représente 2, et n₂ représente 0.

3. Électrolyte de la revendication 2, dans lequel :
le composé nitrile est le 3-(2-cyanoethoxy) propanenitrile.

4. Électrolyte de la revendication 1, dans lequel c représente 1, Y₂, et Y₃ représente chacun 0, n₁, n₂ et n₃ représentent chacun 2, et R₃, R₄, R₅, et R₆ représentent chacun l'hydrogène.

5. Électrolyte de la revendication 4, dans lequel :
le composé nitrile est choisi parmi le 3-{[1,3-bis(2-cyanoéthoxy)propan-2-yl]oxy} propanenitrile, le 3-{[1,6-bis(2-cyanoéthoxy)hexan-2-yl]oxy}propanenitrile, le 3-[3,4-bis-(2-cyano-ethoxy)-butoxy]-propionitrile, et le 3,3'-((2-((2-cyanoethoxy) méthyl)-2-méthylpropane-1,3-diyl)bis(oxy))dipropanenitrile.

6. Électrolyte de la revendication 1, dans lequel le sel de lithium primaire est LiPF₆.

7. Électrolyte de la revendication 1, dans lequel une fraction molaire du sel de lithium primaire dans l'électrolyte est comprise entre 8 % en moles et 15 % en moles.

8. Électrolyte de la revendication 1, comprenant en outre au moins un sel de lithium additif ;
dans lequel l'au moins un sel de lithium additif est choisi parmi le difluorophosphate de lithium (LFO), le tétrafluoroborate de lithium (LiBF₄), le bis(fluorosulfonyl)imide de lithium (LiFSI), le fluorosulfate de lithium (LiSO₃F), et le difluoro(oxalato)borate de lithium (LiDFOB), ou
dans lequel une fraction molaire de l'au moins un sel de lithium additif est comprise entre 0,2 % en moles et 2,4 % en moles.

9. Électrolyte de la revendication 1,
dans lequel la fraction molaire de l'au moins un ES est comprise entre 35 % en moles et 75 % en moles, ou
dans lequel la fraction molaire de l'au moins un ES est comprise entre 39 % en moles et 61 % en moles, ou
dans lequel la fraction molaire de l'au moins un ES est d'au moins 39 % en moles, ou
dans lequel la fraction molaire de l'au moins un ES est d'au moins 60 % en moles.

10. Électrolyte de la revendication 1, dans lequel l'au moins un ES est choisi parmi le propionate d'éthyle (EP) (402), le propionate de propyle (PP) (404), l'isobutyrate d'éthyle (EI) (406), l'isobutyrate de méthyle (MI) (408), le butyrate de méthyle (MB) (410), le triméthylacétate d'éthyle (ET) (412), l'isovalérate d'éthyle (EIV) (414), le 2-méthylbutyrate d'éthyle (EMB) (416), l'isovalérate de méthyle (MIV) (420), le triméthylacétate de méthyle (MT) (418), le 2-méthylbutyrate de méthyle (MMB) (422), l'acétate de méthyle (MA) (424) et l'acétate d'éthyle (EA) (426).

11. Électrolyte de la revendication 1, dans lequel :
une fraction molaire du VC dans l'électrolyte est comprise entre 0,25 % en moles et 1 % en moles ou entre 1,0 % en moles et 4,5 % en moles, ou
dans lequel une fraction molaire du FEC dans l'électrolyte est comprise entre 8 % en moles et 30 % en moles.

12. Batterie lithium-ion (100), comprenant :
une anode (102)
une cathode (103)
un séparateur (104) interposé entre l'anode et la cathode ; et
l'électrolyte de la revendication 1 couplant ioniquement l'anode et la cathode.

13. Électrolyte de la revendication 1, dans lequel :
un nombre de groupes nitrile de l'au moins un composé nitrile est de 2 ou 3 ; et
un poids moléculaire de l'au moins un composé nitrile est compris entre 95 et 294.

14. Électrolyte de la revendication 13, dans lequel :
les atomes de carbone dans une chaîne la plus courte entre deux groupes nitrile adjacents de l'au moins un composé nitrile sont au nombre de 2 ou plus, ou
les atomes de carbone de la chaîne la plus courte entre les deux groupes nitrile adjacents de l'au moins un composé nitrile sont au nombre de 2, 3, 4, 5, 6 ou 7, ou
la densité de l'au moins un composé nitrile est comprise entre 0,9 g/cm³ et 1,4 g/cm³, ou
un point d'ébullition de l'au moins un composé nitrile est compris entre 250°C et 500°C à 760 mm Hg, ou
l'au moins un composé nitrile comprend un groupe hétéroarylène non substitué ou substitué par l'alkyle en C₁₋₆, ou
l'au moins un composé nitrile comprend un groupe hétéroarylène qui est un groupe imidazole ou un groupe pyridine, ou
l'au moins un composé nitrile est non ionique, ou
l'au moins un composé nitrile ne comprend pas de groupe trifluoro méthyle, ou
l'au moins un composé nitrile ne comprend pas de groupe tétrafluorobenzène, ou
l'au moins un composé nitrile ne comprend pas de groupe thiophène, ou
l'au moins un composé nitrile ne comprend pas de groupe carboxyle, ou
l'au moins un composé nitrile ne comprend pas de groupe oxane.

15. Électrolyte de la revendication 1, dans lequel :
la composition de composés organiques comprend en outre un carbonate cyclique non-fluoriné autre que le VC, ou
la composition de composés organiques comprend en outre du carbonate d'éthylène.
